# EUROPEAN PATENT SPECIFICATION

(11) **EP 4 351 852 B1**
(45) Date of publication and mention of the grant of the patent: **29.01.2025**
(21) Application number: 22732121.3
(22) Date of filing: 03.06.2022
(51) Int. Cl.: B27N 1/00, B27N 1/02, B27N 3/00, B27N 3/18, C08K 5/053, C08K 5/09, C08K 5/092, C08L 97/02, C09J 135/02, C09J 167/02, B27N 3/02, B27N 3/04, C08L 3/08, C08L 5/00, C08L 5/02, C08L 29/04, C08L 33/02, C08L 35/02, C08L 67/00

(54) **PROCESS OF PRODUCING A LIGNOCELLULOSIC COMPOSITE, CORRESPONDING LIGNOCELLULOSIC COMPOSITE, AND USE THEREOF**
VERFAHREN ZUR HERSTELLUNG EINES LIGNOCELLULOSEHALTIGEN VERBUNDSTOFFS, ENTSPRECHENDER LIGNOCELLULOSEVERBUNDSTOFF UND SEINE VERWENDUNG
PROCÉDÉ DE PRODUCTION D'UN COMPOSITE LIGNOCELLULOSIQUE, COMPOSITE LIGNOCELLULOSIQUE CORRESPONDANT ET UTILISATION ASSOCIÉE

(30) Priority: 07.06.2021 EP 21178063
(43) Date of publication of application: 17.04.2024
(73) Proprietor: BASF SE, 67056 Ludwigshafen am Rhein (DE)
(72) Inventor: WEINKÖTZ, Stephan, 67056 Ludwigshafen (DE); SOMMER, Gereon Antonius, 67056 Ludwigshafen (DE); KALBE, Michael, 67056 Ludwigshafen (DE)
(74) Representative: BASF IP Association
(86) International application number: PCT/EP2022/065154
(87) International publication number: WO 2022/258505

(56) References cited:
- JP-A- 2004 230 736
- US-A1- 2017 361 489
- US-A1- 2020 017 688

## Description

The present invention relates to a process of producing a multilayer lignocellulosic composite comprising one or more lignocellulosic composite layers or a single-layer lignocellulosic composite. The invention also relates to a lignocellulosic composite, which is preparable according to a process of the invention, and to a construction product comprising such lignocellulosic composite. Furthermore, the invention relates to the use of a lignocellulosic composite of the present invention as a building element in a construction product and to a binder and/or binder composition for producing a lignocellulosic composite.

More specifically, the present invention relates to a process of producing a multilayer lignocellulosic composite or a single-layer lignocellulosic composite, wherein a high-frequency electrical field is applied, typically for heating an intermediate material mixture, and in many cases for hardening the binder present in such mixture.

EP 3230028 B1 and WO 2016/091918 A1 (BASF SE) disclose a method for producing single or multi-layer lignocellulose (i.e., lignocellulosic) materials by hardening in a high frequency electric field.

WO 2015/104349 A2 (BASF SE) discloses a method for the production of lignocellulose materials.

WO 2016/091797 A1 (BASF SE) discloses a method for producing multi-layered lignocellulose materials having a core and an upper and a lower cover layer.

EP 2885116 B1 (Knauf Insulation) discloses a process for production of wood boards, more particularly particle boards, with excellent swelling properties.

WO 2008/089847 A1 (Knauf Insulation) discloses a composite wood board comprising wood particles and an organic binder.

WO 2008/127936 A2 (Knauf Insulation) discloses composite Maillard-resole binders to produce or promote cohesion in non-assembled or loosely assembled matter.

Document US 2020/0017688 A1 deals with a method for producing lignocellulosic materials, using a binder comprising as components for hardening the binder via esterification a compound comprising multiple hydroxy groups, and a monomer compound having two carboxyl groups.

JP 2004/230736 A describes a manufacturing method for a wooden formed board. Further publications that might be of interest in the context of the present invention are: EP 0583086 B2, EP 1225193 B2, EP 1578879 B1, EP 1700883 B1, EP 2399956 B1, EP 2485989 B1, EP 2867292 B1, WO 1997/031059 A1, WO 1999/002591 A1, WO 2007/014236 A2, WO 2009/006356 A1, WO 2015/084372 A1, WO 2016/009062 A1, and WO 2017/072186 A1.

Generally, in a process of producing a multilayer or single-layer lignocellulosic composite, a mixture of lignocellulosic particles (i.e. particles consisting essentially of lignocellulose) and a binder is provided or prepared. This mixture is typically scattered, e.g. to give a first layer of a multilayer mat or to give a single-layer mat. When producing a multilayer composite, successively two or more mixtures of lignocellulosic particles are scattered to give a mat with two or more individual layers. The resulting mat is then compacted, and the compacted mat or mixture is hardened during or after compaction, i.e. the mixture is treated in a manner so that the binder undergoes a hardening process. When a high-frequency electrical field is used in such process, it mainly serves to heat the mixture so that the binder hardens due to this heat treatment.

EP 3230028 B1 (BASF) discloses specific processes for batchwise or continuous production of single-layer lignocellulose-based (lignocellulosic) boards or of multilayer lignocellulose-based (lignocellulosic) boards, wherein the process comprises the application of a high-frequency electrical field during and/or after the compaction and thermal hardening of the binder(s) employed.

However, although the use of high-frequency electrical fields for heating (and hardening) binders of a mixture also comprising lignocellulosic particles is known for a considerable time, and although the corresponding processes and products possess valuable advantages over other processes of producing lignocellulosic composites, it is considered to be a disadvantage of such processes that the binder systems used in the production process contain hazardous substances like formaldehyde and isocyanates. Furthermore, in industrial production processes for making lignocellulosic composites when a high-frequency electrical field is applied in a production step, the binders used are typically based on petrochemical substances.

There is a demand in industry for an improved process of producing a multilayer or single-layer lignocellulosic composite, wherein preferably a high-frequency electrical field is applied to a mixture comprising lignocellulosic particles and a binder, wherein binder components are used which can be obtained from non-petrochemical resources and which do not contain hazardous substances like formaldehyde and isocyanates or substances which emit formaldehyde during the production process of the composites, like N-methylol compounds.

It was a primary object of the present invention to provide for such an improved process of producing a multilayer lignocellulosic composite comprising one or more, preferably two or more, lignocellulosic composite layers or a single-layer lignocellulosic composite. The improved process should preferably include a step of applying a high-frequency electrical field in order to cause or assist hardening of the binder. Furthermore, the improved process should use different binder components or different combinations of binder components in comparison with the prior art so that at least some of the binder components can be obtained from renewable resources and/or so that the binder components and/or the lignocellulosic composite emit a reduced amount of toxic or otherwise undesired volatile organic substances ("VOCs") and/or formaldehyde, during or after the production process.

The present invention concerns in its categories a process of producing a multilayer lignocellulosic composite comprising one, two, three or more, preferably three or more, lignocellulosic composite layers or a single-layer lignocellulosic composite, a lignocellulosic composite, which is preparable according to a process of the invention, a construction product comprising such lignocellulosic composite, the use of such lignocellulosic composite as well as a binder and/or binder composition for producing a lignocellulosic composite. Embodiments, aspects or features disclosed for or in connection with one of these categories in each case analogously apply for the other categories of the invention.

Disclosed herein is a process of producing a multilayer lignocellulosic composite comprising one or more, preferably two or more, lignocellulosic composite layers or a single-layer lignocellulosic composite, comprising at least the following steps:
a) providing or preparing a mixture at least comprising
   lignocellulosic particles
   and
   a binder comprising as components for hardening the binder via esterification at least
   - one, two or more compounds having two or more hydroxy groups and additionally
   - one, two or more compounds having two or more carboxyl groups,
b) compacting the mixture,
c) applying a high-frequency electrical field to the mixture during and/or after compacting, so that the binder hardens via esterification of said compounds and binds the lignocellulosic particles, so that a single-layer lignocellulosic composite or a layer of a multilayer lignocellulosic composite results.

Herein, and throughout the present text, the term "compounds having two or more carboxyl groups" designates compounds having in their protonated form two or more carboxyl groups. E.g., succinic acid in its protonated form has two carboxyl groups (COOH). Mono sodium succinate has only one carboxyl group, but falls under the present definition because in its protonated form it has two carboxyl groups. Typically, in the present text reference is made to the respective acid. In such cases a reference to the corresponding (partially) neutralized/deprotonated form is incorporated. E.g, a reference to citric acid incorporates a reference to its (partially) neutralized/deprotonated forms (citrates).

In order to allow for esterification, hydroxy groups and acidic carboxyl groups (COOH) must be present. Thus, the skilled person in accordance with the requirements of the individual technical situation according to the present invention will adjust the pH of the binder in order to provide for i.a. the required reactivity.

Thus, according to the process of the present invention as described in more detail below, in step a) there is provided or prepared a mixture comprising lignocellulosic particles and a specific binder. According to step c), a high-frequency electrical field is applied to the mixture during and/or after compacting (see step b)). The high-frequency electrical field is applied so that the binder hardens via esterification. An esterification reaction is possible because the binder used in step a) comprises one, two or more compounds having two or more hydroxy groups, specifically one, two or more polymers comprising multiple hydroxy groups, and additionally comprises one, two or more compounds having two or more carboxyl groups, specifically one, two or more polymer or monomer compounds having two or more carboxyl groups. Esterification is the reaction of said hydroxy groups and said carboxyl groups. When said hydroxy groups and said carboxyl groups react with each other in an esterification reaction, the corresponding compounds are (cross)linked, and correspondingly the binder hardens and binds the lignocellulosic particles, so that a lignocellulosic composite or a layer of a lignocellulosic composite results.

It is a major achievement of the present inventors that they have recognized that a high-frequency electrical field can be applied to a mixture comprising a binder composition comprising compounds having two or more hydroxy groups as well as compounds having two or more carboxyl groups so that via esterification the binder hardens and can bind lignocellulosic particles.

Binder compositions comprising compounds having two or more hydroxy groups as well as compounds having two or more carboxyl groups which can be hardened via esterification of said groups are known from the prior art, but were typically considered to be rather delicate when subjected to a high-frequency electrical field.

Specific binder systems comprising hydroxy compounds and carboxyl compounds have been disclosed before:
EP 2485989 B1 discloses binder systems for use in manufacturing both fiberglass insulation and non-woven mats, which are cross-linked through an esterification reaction.
EP 0583086 B2 discloses a curable aqueous composition comprising a polymeric polyacid containing at least two carboxylic acid groups, anhydride groups, or the salts thereof; a polyol containing at least two hydroxyl groups; and a phosphorous-containing accelerator.
EP 1578879 B1 discloses an aqueous binder composition for coating glass fibers comprising: a polycarboxy polymer; a poly alcohol having at least two hydroxyl groups; and a watersoluble extender, the extender being present in an amount sufficient to establish an extender-polycarboxy polymer weight ratio of at least 1: 10.
EP 1700883 B1 discloses a composition comprising a polycarboxy polymer and a polyol or a hydroxy-functional, carboxy-functional polymer; and a polybasic carboxylic acid, or an anhydride or salt thereof; and a strong acid; and water.
EP 2399956 B1 discloses an aqueous binder composition comprising one or more polymeric polyacid and a carbohydrate component.
EP 2867292 B1 discloses an aqueous binder composition in the form of a dispersion comprising starch; and one or more acrylic component(s).
WO 1997/031059 A1 discloses a binder containing a polymer obtained by radical polymerization consisting to the extent of 5 to 100 wt% of an ethylenically unsaturated acid anhydride or bicarboxylic acid, the carboxylic acid groups of which can form an anhydride group; and an alkanol amine with at least two hydroxyl groups.
WO 2009/006356 A1 discloses a polymer composition suitable for wood treatment or binding, said composition comprising a reaction product of at least a polyol and at least a crosslinking agent; said crosslinking agent having at least 2 carboxylic acid groups per molecule.
WO 2016/009062 A1 discloses an aqueous curable binder composition comprising starting materials required for forming a thermoset resin upon curing and a matrix polymer, wherein the starting materials comprise a polyhydroxy component and a polycarboxylic acid component, or an anhydride, ester or salt derivative thereof and/or reaction product thereof.
WO 2017/072186 A1 discloses an aqueous curable binder composition comprising a carbohydrate compound, a first crosslinker and a second crosslinker, wherein the first crosslinker is selected from carboxyl function bearing compounds, which form esters with the carbohydrate compound.
EP 2697293 B1 discloses a composite material comprising 10-95 wt.% of a particulate or fibrous filler derived from plant- or animal based materials and at least 5 wt.% of a polyester derived from an aliphatic polyalcohol with 2-15 carbon atoms and a polyacid, wherein the polyacid comprises at least 10 wt.% of citric acid as tricarboxylic acid.

When describing or defining the present invention and preferred embodiments thereof, the meaning of certain specific terms is as follows:
The term "lignocellulosic particles" used herein designates and includes any type, size and shape of lignocellulosic particles, such as fibres, chips, strands, flakes, sawmill shavings and saw dust or mixtures thereof. In addition, any type of lignocellulosic biomass such as birch, beech, alder, pine, spruce, larch, eucalyptus, linden, poplar, ash, fir, tropical wood, sisal, jute, flax, coconut, kenaf, hemp, banana, straw, cotton stalks, bamboo and the like can be used as a source for said lignocellulosic particles. Lignocellulosic particles from both virgin wood and/or waste wood, such as old furniture, can be used to produce the lignocellulosic composite of the present invention. According to the present invention, it is further possible to use mixtures of different types of lignocellulosic particles in the production of a lignocellulosic composite.

The term "high-frequency electrical field" used herein designates and includes any kind of high-frequency electrical or electromagnetic field such as microwave irradiation or a high-frequency electrical field, which results after applying a high-frequency alternating voltage at a plate capacitor between two capacitor plates. Suitable frequencies for the high-frequency electrical field are in the range of from 100 kHz to 30 GHz, preferably 6 MHz to 3 GHz, more preferably 13 MHz to 41 MHz. Especially suitable and preferred are the respective nationally and internationally approved frequencies such as 13,56 MHz, 27,12 MHz, 40,68 MHz, 2,45 GHz, 5,80 GHz, 24,12 GHz, more preferably 13,56 und 27,12 MHz. The electrical power used to create such a high-frequency electrical field in the processes of the present invention preferably is in the range of from 10 to 10.000 kWh, more preferably of from 100 to 5.000 kWh, most preferably of from 500 to 2.000 kWh.

The term "single-layer lignocellulosic composite" used herein designates and includes any single-layered composite material, which contains lignocellulosic particles and a hardened binder that binds the lignocellulosic particles. Furthermore, the term "single-layer" specifies that the lignocellulosic composite comprises only one layer of lignocellulosic material and binder, wherein the single layer preferably is produced by a process comprising a single step of scattering lignocellulosic particles. The "single-layer lignocellulosic composite" can be of any shape such as rectangular, square, round, triangular and the like. The "single-layer lignocellulosic composite" can also be of any thickness, density and colour as long as it contains lignocellulosic particles and a hardened binder. The "single-layer lignocellulosic composite" can also comprise several other compounds different from lignocellulosic particles and binders. The lignocellulosic particles used in the production of a "single-layer lignocellulosic composite" are of the same type or of different types of lignocellulosic biomass (see above for preferred types).

The term "multilayer lignocellulosic composite" used herein designates and includes any multi-layered composite, which contains lignocellulosic particles and a hardened binder that binds the lignocellulosic particles, and wherein distinguishable (individual) layers are present within the composite. The multilayer lignocellulosic composite preferably comprises at least two distinguishable (individual) layers, in particular a core layer and an upper and a lower surface layer (i.e. three layers in total); or four or more layers, within the same composite material. The adjacent layers of the multilayer lignocellulosic composite are distinguishable in terms of their composition, density, colour or any other properties and adjacent layers comprise identical types of lignocellulosic particles and/or binders or different types of lignocellulosic particles and/or binders. The (individual) layers may also comprise or consist of different materials than lignocellulosic particles and/or binders, such as plastics, fabrics, paint coat or the like, for example derived from foreign matter in waste wood. The lignocellulosic particles used in the production of an individual layer of a "multilayer lignocellulosic composite" are of the same type or of different types of lignocellulosic biomass (see above for preferred types). The lignocellulosic particles used in the production of separate (individual) layers of a "multilayer lignocellulosic composite" are of the same type or of different types of lignocellulosic biomass (see above for preferred types) or are identical or different mixtures of two or more of such types of lignocellulosic biomass. Furthermore, the term "multilayer" specifies that the lignocellulosic composite comprises at least two individual layers, wherein at least one, preferably two or more of these individual layers comprise lignocellulosic material and binder, wherein one or more or all of said layers preferably are produced in a multi-step-process comprising for each (individual) layer of lignocellulosic material and binder a step of scattering lignocellulosic particles.

Thus, the present invention relates in one aspect to a process of producing a multilayer lignocellulosic composite comprising one or more lignocellulosic composite layers or a single-layer lignocellulosic composite, wherein preferably
i) each individual lignocellulosic composite layer, i.e. the single-layer lignocellulosic composite or a layer of a multilayer lignocellulosic composite, comprises
   - only one type of lignocellulosic particles (lignocellulosic biomass), e.g. only spruce chips or only birch flakes,
      or
   - a mixture of different types of lignocellulosic particles (lignocellulosic biomass), e.g. a mixture of both spruce chips and birch flakes,
   and/or wherein
ii) said multilayer lignocellulosic composite comprises
   - only one and the same type of lignocellulosic particles (lignocellulosic biomass) in all lignocellulosic composite layers, e.g. only spruce chips or only birch flakes in all lignocellulosic composite layers, or
   - different types of lignocellulosic particles (lignocellulosic biomass) in the individual lignocellulosic composite layers, e.g. only spruce chips in a first individual layer and only birch flakes in a second individual layer, or
   - identical mixtures of lignocellulosic particles (lignocellulosic biomass) in all lignocellulosic composite layers, e.g. an identical mixture of both spruce chips and birch flakes in all layers, or
   - different mixtures of lignocellulosic particles (lignocellulosic biomass) in the individual lignocellulosic composite layers, e.g. a first mixture of both spruce chips and birch flakes in a first individual layer and a second mixture of pine chips and flax fibres in a second individual layer.

Other terms used in for describing the present invention have their typical meanings in the field concerned, or are explained or defined in the present description.

It has now been found that the primary object and other objects of the present invention can be accomplished by a process according to the present invention of producing a multilayer lignocellulosic composite comprising one or more, preferably two or more, lignocellulosic composite layers, or a single-layer lignocellulosic composite, comprising at least the following steps:
a) providing or preparing a mixture at least comprising
   - lignocellulosic particles
      and
   - a binder comprising as components for hardening the binder via esterification at least (c2):
      ▪ one, two or more polymers comprising multiple hydroxy groups, preferably selected from the group consisting of
         - carbohydrates, preferably starch, more preferably starch selected from the group consisting of non-hydrolyzed starch, modified starch, maltodextrin and mixtures thereof,
         - polyvinylalcohol,
            and
         - mixtures thereof,
            and, preferably for crosslinking said polymers,
      ▪ one, two or more polymer or monomer compounds having two or more carboxyl groups;
b) compacting the mixture; and
c) applying a high-frequency electrical field to the mixture during and/or after compacting, so that the binder hardens via esterification of said components and binds the lignocellulosic particles, so that a single-layer lignocellulosic composite or a layer of a multilayer lignocellulosic composite results.

In particular, it has been found that the process according to the present invention allows the production of lignocellulosic composites comprising an increased proportion of biobased binder components when compared with binders known from the prior art, while similar amounts of binder components and similar press times are required. In addition, beneficial internal bond strengths of lignocellulosic composites resulting from a process according to the present invention can be obtained. In preferred variants of the process according to the present invention, the amount of emissions of toxic or otherwise undesired VOCs and/or of formaldehyde of a so produced lignocellulosic composite can be reduced when compared with known processes for producing lignocellulosic composites from the prior art.

The invention as well as preferred variants and preferred combinations of parameters, properties and elements thereof are defined in the appended claims. Preferred aspects, details, modifications and advantages of the present invention are also defined and explained in the following description and in the examples shown below.

In a further aspect, the present disclosure comprises a variant of the process of producing a multilayer lignocellulosic or single-layer lignocellulosic composite as defined above, wherein the binder as components for hardening via esterification at least comprises:
(c1) one, two or more polymers comprising multiple carboxyl groups,
and
for crosslinking said polymers one, two or more polymer or monomer compounds having two or more hydroxy groups.

Herein, and throughout the present text, the term "one, two or more polymers comprising multiple carboxyl groups" generally designates polymers having in their protonated form multiple (preferably two or more) carboxyl groups. Throughout the text, when referring to a polymer having (multiple) carboxyl groups a reference to the corresponding (partially) neutralized/deprotonated form is incorporated. Again, the skilled person in accordance with the requirements of the individual technical situation according to the present invention will adjust the pH of the binder in order to provide for i.a. the required reactivity.

According to the variant of aspect (c1) as disclosed herein, the binder as components for hardening via esterification at least comprises one, two or more polymers comprising multiple carboxyl groups. This means, the compounds present in step a) of the process which have two or more carboxyl groups are specifically polymers. According to the variant of aspect (c1) as disclosed herein, for crosslinking said polymers the binder at least comprises one, two or more polymer or monomer compounds having two or more hydroxy groups. Thus, for crosslinking said polymers comprising multiple carboxyl groups, the binder comprises at least one polymer compound having two or more hydroxy groups or comprises at least one monomer compound having two or more hydroxy groups or comprises both at least one polymer compound and at least one monomer compound, both having two or more hydroxy groups.

According to the variant of aspect (c1) as disclosed herein, the polymers comprising multiple carboxyl groups are selected from the group consisting of polymers of one or more unsaturated carboxylic acid, preferably acrylic acid, and mixtures thereof, preferably copolymers of acrylic acid and more preferably copolymers of acrylic acid and maleic anhydride. These polymers comprising multiple carboxyl groups preferably are partially neutralized. Partially neutralized means that (i) at least some, preferably more than 10%, more preferably more than 20% and (ii) less than 50%, preferably less than 35%, of the acidic carboxyl groups (COOH) of the polymers comprising multiple carboxyl groups are neutralized by reaction with basic compounds, wherein neutralization refers to the conversion of carboxyl groups (COOH) into carboxylate groups (COO⁻) (acid-base reaction). Basic compounds for partial neutralization may be hydroxides like sodium hydroxide, potassium hydroxide, calcium hydroxide, or carbonates, like sodium carbonate, or ammonia, or primary, secondary and tertiary amines, like ethylamine, propylamine, isoproylamine, butylamine, hexylamine, ethanolamine, dimethylamine, diethylamine, Di-n-propylamine, tributylamine, triethanolamine, dimethoxyethylamine, 2-ethoxyethylamine, 3-ethoxypropylamine, dimethylethenan-olamine, diisopropanolamine and morpoholine. Preferred basic compounds are hydroxides, more preferably sodium hydroxide is used as basic compound.

Preferably, and in accordance with the process according to the invention as described above or below (also referred to here in the following as "aspect (c2)") and in accordance with the variant of aspect (c1) as disclosed herein, the binder prepared in step (a) has a pH in the range of from 0.5 to 3.5, more preferably in the range of from 1.0 to 3.2 and even more preferably in the range of from 2.0 to 2.9. It has been found in own experiments that a binder prepared in step (a) which has a pH in the range or preferred range provided here before, contributes to a reduced amount of emissions of toxic or otherwise undesired VOCs and/or formaldehyde of a so produced multilayer or single-layer lignocellulosic composite. Insofar, it is preferred that for preparing said binder in step (a), binder components for hardening via esterification - where necessary - are mixed with a basic compound, preferably sodium hydroxide. In another preferred embodiment, and in accordance with the process according to the invention as described above or below and in accordance with the variant of aspect (c1) as disclosed herein, partially neutralized polymers comprising multiple carboxyl groups, preferably partially neutralized polymers having two or more carboxyl groups, are used as starting material for adjusting the pH of the binder as stated above. By adjusting the pH of the binder, the molar ratio of COOH groups to COO⁻ groups (in particular in the components present for hardening the binder via esterification) is influenced in the usual manner.

According to the process according to the present invention as described above or below (comprising aspect "(c2)"), the binder as components for hardening via esterification at least comprises one, two or more polymers comprising multiple hydroxy groups. This means, the compounds present in step a) of the process of the present invention, which have two or more hydroxy groups are specifically polymers. According to the process of the present invention as described above or below, for crosslinking said polymers the binder at least comprises one, two or more polymer or monomer compounds having two or more carboxyl groups. Thus, for crosslinking said polymers having two or more hydroxy groups, the binder comprises at least one polymer compound having two or more carboxyl groups or comprises at least one monomer compound having two or more carboxyl groups or comprises both at least one polymer compound and at least one monomer compound, both having two or more carboxyl groups.

According to the process of the present invention as described above or below, and in accordance with the variant of aspect (c1) as disclosed herein, the binder as components for hardening via esterification at least comprises one, two or more polymers. The use of polymers having multiple carboxyl groups, preferably of polymers having two or more carboxyl groups (see the variant of aspect (c1) above) or hydroxy groups (see the process according to the invention as described above or below), respectively, is generally preferable in comparison to the use of non-polymeric compounds, as after hardening the resulting bonding strength is typically higher. Preferred polymers are defined below.

According to the process of the invention as described above or below and in accordance with the variant of aspect (c1) as disclosed herein, the binder as components for hardening via esterification preferably at least comprises one, two or more polymers comprising multiple carboxyl groups, preferably one, two or more polymers having two or more carboxyl groups, as well as one, two or more polymers comprising multiple hydroxy groups. As used herein, the expression "polymer(s) comprising multiple carboxyl groups" preferably comprises in its meaning the expression "polymer(s) having two or more carboxyl groups", and *vice versa.*

Preferably, and in accordance with the process according to the invention as described above or below and in accordance with the variant of aspect (c1) as disclosed herein, all or a part of the respective carboxyl or hydroxy groups of a respective polymer belong to repeat units of the polymer.

According to the variant of aspect (c1) as disclosed herein is a process preferred (preferably as defined herein above as being preferred), wherein the binder as components for hardening via esterification at least comprises
(c1) one, two or more polymers comprising multiple carboxyl groups,
and
for crosslinking said polymers one, two or more polymer or monomer compounds, preferably one, two or more biobased polymer or biobased monomer compounds, having two or more hydroxy groups, selected from the group consisting of
   - carbohydrates, preferably monosaccharides, disaccharides, oligosaccharides, polysaccharides and starch, more preferably dextrose, fructose, saccharose, non-hydrolyzed starch, modified starch and maltodextrin
   - sugar alcohols, preferably mannitol, sorbitol, xylitol, lactitol, isomalt, maltitol, erythritol, hydrogenated starch hydrolysates and glycerol, more preferably glycerol
   - compounds selected from the group consisting of triols, tetrols, pentols and hexols, wherein the compounds are not carbohydrates and not sugar alcohols, more preferably compounds selected from the group consisting of triethanolamine and trimethylolpropane
wherein preferably the total amount of said one, two or more polymer or monomer compounds, preferably the total amount of said one, two or more biobased polymer or biobased monomer compounds, for crosslinking said polymers is above 5 wt.%, more preferably above 10 wt.%, even more preferably above 20 wt.% and most preferably above 30 wt.%, based on the solid content of all binder components present for hardening via esterification.

Preferred is a process according to the present invention (preferably a process according to the present invention as defined herein as being preferred), wherein the binder as components for hardening via esterification at least comprises:
(c2) one, two or more polymers comprising multiple hydroxy groups,
and, for crosslinking said polymers,
one, two or more polymer or monomer compounds, preferably one, two or more biobased polymer or biobased monomer compounds, having two or more carboxyl groups, selected from the group consisting of alpha-hydroxy carboxylic acids, preferably citric acid, malic acid and tartaric acid, more preferably citric acid, and reaction products thereof, preferably polyesters thereof,
wherein preferably the total amount of said one, two or more polymer or monomer compounds, preferably the total amount of said one, two or more biobased polymer or biobased monomer compounds, for crosslinking said polymers is above 5 wt.%, more preferably above 10 wt.%, and even more preferably above 20 wt.%, most preferably above 30 wt.%, based on the solid content of all binder components present for hardening via esterification.

Preferred is also a process according to the present invention (preferably a process according to the present invention as defined herein as being preferred), wherein the one, two or more polymer or monomer compounds having two or more carboxyl groups of the binder comprise or further comprise:
- one, two or more polymers selected from the group consisting of polymers of one or more unsaturated carboxylic acid, preferably acrylic acid, and mixtures thereof, preferably co-polymers of acrylic acid and more preferably copolymers of acrylic acid and maleic anhydride;
   and/or
- one, two or more polymer or monomer compounds, preferably one, two or more biobased polymer or biobased monomer compounds, having two or more carboxyl groups, selected from the group consisting of alpha-hydroxy carboxylic acids, preferably selected from the group consisting of citric acid, malic acid and tartaric acid, more preferably citric acid, and preferably reaction products thereof, more preferably polyesters thereof,
   wherein preferably the total amount of said one, two or more polymer or monomer compounds, preferably the total amount of said one, two or more biobased polymer or biobased monomer compounds, for crosslinking said polymers is above 5 wt.-%, more preferably above 10 wt.-%, even more preferably above 20 wt.-% and most preferably above 30 wt.-%, based on the solid content of all binder components present for hardening via esterification.

Where in the process according to the present invention the "one, two or more polymer or monomer compounds having two or more carboxyl groups" of the binder comprise or further comprise one, two or more polymers selected from the group consisting of polymers of one or more unsaturated carboxylic acid, preferably acrylic acid, and mixtures thereof, the explanations and more detailed definitions given herein for the "group consisting of polymers of one or more unsaturated carboxylic acid, preferably acrylic acid, and mixtures thereof" of the polymers comprising multiple carboxyl groups of the variant of aspect (c1) as disclosed herein preferably apply *mutatis mutandis.*

In a preferred process according to the variant of aspect (c1) as disclosed herein, the binder as components for hardening via esterification at least comprises one, two or more polymers comprising multiple carboxyl groups. Furthermore, the binder for crosslinking said polymers comprises one, two or more polymer or monomer compounds, preferably one, two or more biobased polymer or biobased monomer compounds, having two or more hydroxy groups.

Herein, the term "biobased" generally means that the respective polymer or monomer is at least partially preparable or prepared from substances that are present in biological products. Preferably, the polymer or monomer is completely preparable or prepared from such substances. More preferably, the (biobased) polymers or monomers are plant-based, i.e. they are at least partially preparable or prepared from substances that are present in plants. Even more preferably, the term "biobased" in the context of the present invention means that the respective polymer or monomer is at least partially preparable or prepared (preferably prepared) from substances obtained from plants. And yet even more preferably, the term "biobased" in the context of the present invention means that the respective polymer or monomer is entirely preparable or prepared (preferably prepared) from substances obtained from plants.

Herein the term "starch" generally designates a carbohydrate, namely a polysaccharide or an oligosaccharide, consisting of two or more glucose units joined by glycosidic bonds. The term "starch" is the generic term for non-hydrolyzed starch (native starch as contained in large amounts in potatoes, corn, rice, wheat and cassava) and for modified starch or starch derivatives, which are obtained upon physical, enzymatic or chemical treatment of non-hydrolyzed starch (native starch). A preferred example of modified starch is hydrolyzed starch, which is produced from non-hydrolyzed starch (native starch) by partial hydrolysis. A preferred example of hydrolyzed starch for the purpose of the present invention is maltodextrin. Another preferred example of modified starch for the purpose of the present invention is starch which is fully or partially etherified with alkyl (ether) groups, in particular hydroxypropylether-modified starch like hydroxypropyl starch (e.g. Emsol K 85 from Emsland group, Germany).

According to the variant of aspect (c1) as disclosed herein, the polymer or monomer, preferably biobased (more preferably plant-based), compounds having two or more hydroxy groups are selected from the group consisting of (i) carbohydrates, (ii) sugar alcohols, and (iii) compounds selected from the group consisting of triols, tetrols, pentols and hexols, wherein the latter compounds are not carbohydrates and not sugar alcohols. Particularly preferred carbohydrates, sugar alcohols and compounds selected from the group consisting of triols, tetrols, pentols and hexols are identified above. Even more particularly preferred one of the one, two or more polymer or monomer, preferably biobased (more preferably plant-based), compounds having two or more hydroxy groups is glycerol. Two or more of said preferred, particularly preferred or even more particularly preferred compounds can be used in combination with each other.

According to the variant of aspect (c1) as disclosed herein, preferably the total amount of said one, two or more polymer or monomer, preferably biobased (more preferably plant-based), compounds having two or more hydroxy groups for crosslinking said polymers comprising multiple carboxyl groups is above 5 wt.%, more preferably above 10 wt.%, even more preferably above 20 wt.% and most preferably above 30 wt.%, based on the solid content of all binder components present for hardening via esterification.

The term "solid content of all binder components present for hardening via esterification" as used herein generally refers to the solid content of all binder components present for hardening the binder via esterification. Such components are polymer or monomer compounds having two or more hydroxy groups, polymer or monomer compounds having two or more carboxyl groups and compounds having at least one carboxyl group and at least one hydroxy group. The hydroxy groups and carboxyl groups of such components can react with each other in an esterification reaction so that (cross)links are formed, and correspondingly the binder hardens. Other additional compounds such as alkali salts and alkaline earth salts, hydrophobizing agents, dyes, pigments, antifungal agents, antibacterial agents, rheology modifiers, fillers, release agents, surfactants and tensides are not included in the "solid content of all binder components present for hardening via esterification".

In the process according to the present invention as described above or below (cf. "aspect (c2)"), the binder as components for hardening via esterification at least comprises one, two or more polymers comprising multiple hydroxy groups. Furthermore, the binder for crosslinking said polymers comprises one, two or more polymer or monomer, preferably biobased (more preferably plant-based), compounds having two or more carboxyl groups.

According to the process according to the present invention as described above or below, the polymer or monomer, preferably biobased (more preferably plant-based), compounds having two or more carboxyl groups are preferably selected from the group consisting of alpha-hydroxy carboxylic acids and reaction products thereof. Particularly preferred alpha-hydroxy carboxylic acids are citric acid, malic acid and tartaric acid, more preferably citric acid. Particularly preferred reaction products of such alpha-hydroxy carboxylic acids are polyesters. Two or more of said preferred or particularly preferred compounds can be used in combination with each other.

According to the process of the present invention as described above or below, preferably the total amount of said one, two or more polymer or monomer, preferably biobased (more preferably plant-based), compounds having two or more carboxyl groups for crosslinking said polymers comprising multiple hydroxy groups is above 5 wt.%, more preferably above 10 wt.%, even more preferably above 20 wt.% and most preferably above 30 wt.%, based on the solid content of all binder components present for hardening via esterification.

Preferred is a process according to the variant of aspect (c1) as disclosed herein (preferably a respective process as defined herein above as being preferred), wherein the binder as components for hardening via esterification at least comprises
(c1) one, two or more polymers comprising multiple carboxyl groups, selected from the group consisting of polymers of one or more unsaturated carboxylic acid, preferably acrylic acid, and mixtures thereof, preferably copolymers of acrylic acid and more preferably copolymers of acrylic acid and maleic anhydride
and
for crosslinking said polymers, one, two or more polymer or monomer compounds having two or more hydroxy groups,

In a preferred process according to the variant of aspect (c1) as disclosed herein, the binder as components for hardening via esterification at least comprises one, two or more polymers comprising multiple carboxyl groups. According to the variant of aspect (c1) as disclosed herein, the one, two or more polymers comprising multiple carboxyl groups are preferably selected from the group consisting of polymers of one or more unsaturated carboxylic acid and mixtures thereof. Particularly preferred polymers of one or more unsaturated carboxylic acid are polymers of acrylic acid, more preferably copolymers of acrylic acid, and even more preferably copolymers of acrylic acid and maleic anhydride. Two or more of said preferred or particularly preferred polymers can be used in combination with each other.

According to the variant of aspect (c1) as disclosed herein, for crosslinking said polymers the binder at least comprises one, two or more polymer or monomer compounds having two or more hydroxy groups. Thus, for crosslinking said polymers comprising multiple carboxyl groups, the binder comprises at least one polymer compound having two or more hydroxy groups or comprises at least one monomer compound having two or more hydroxy groups or comprises both at least one polymer compound and at least one monomer compound, both having two or more hydroxy groups.

Preferred is a process according to the present invention (preferably a process according to the present invention as defined herein as being preferred), wherein the binder as components for hardening via esterification at least comprises:
(c2) one, two or more, preferably biobased, polymers comprising multiple hydroxy groups, selected from the group consisting of carbohydrates (preferably selected from the group consisting of non-hydrolyzed starch, modified starch and maltodextrin), polyvinylalcohol, and mixtures and copolymers thereof
and
for crosslinking said polymers, one, two or more polymer or monomer compounds having two or more carboxyl groups.

In the process according to the present invention as described above or below (cf. "aspect (c2)"), the binder as components for hardening via esterification at least comprises one, two or more, preferably biobased (more preferably plant-based), polymers comprising multiple hydroxy groups. According to the process of the present invention as described above or below, the one, two or more, preferably biobased (more preferably plant-based), polymers comprising multiple hydroxy groups are preferably selected from the group consisting of carbohydrates, polyvinylalcohol, and mixtures and copolymers thereof. Particularly preferred carbohydrates are non-hydrolyzed starch and hydrolyzed starch, more preferably the carbohydrate is maltodextrin. Two or more of said preferred or particularly preferred polymers can be used in combination with each other.

According to the process of the present invention as described above or below, for crosslinking said polymers the binder at least comprises one, two or more polymer or monomer compounds having two or more carboxyl groups. Thus, for crosslinking said polymers having two or more hydroxy groups, the binder comprises at least one polymer compound having two or more carboxyl groups or comprises at least one monomer compound having two or more carboxyl groups or comprises both at least one polymer compound and at least one monomer compound, both having two or more carboxyl groups.

Preferred is a process according to the variant of aspect (c1) as disclosed herein (preferably as defined herein above as being preferred), wherein the binder as components for hardening via esterification at least comprises
(c1) one, two or more polymers comprising multiple carboxyl groups, selected from the group consisting of polymers of one or more unsaturated carboxylic acid, preferably acrylic acid, and mixtures thereof, preferably copolymers of acrylic acid and more preferably copolymers of acrylic acid and maleic anhydride
and
for crosslinking said polymers one, two or more polymer or monomer compounds, preferably one, two or more biobased polymer or biobased monomer compounds, having two or more hydroxy groups, selected from the group consisting of
   - carbohydrates, preferably monosaccharides, disaccharides, oligosaccharides, polysaccharides and starch, more preferably dextrose, fructose, saccharose, non-hydrolyzed starch and maltodextrin
   - sugar alcohols, preferably mannitol, sorbitol, xylitol, lactitol, isomalt, maltitol, erythritol, hydrogenated starch hydrolysates and glycerol, more preferably glycerol
   - compounds selected from the group consisting of triols, tetrols, pentols and hexols, wherein the compounds are not carbohydrates and not sugar alcohols, more preferably compounds selected from the group consisting of triethanolamine and trimethylolpropane
wherein preferably the total amount of said one, two or more polymer or monomer compounds, preferably the total amount of said one, two or more biobased polymer or biobased monomer compounds, for crosslinking said polymers is above 5 wt.%, more preferably above 10 wt.%, even more preferably above 20 wt.% and most preferably above 30 wt.%, based on the solid content of all binder components present for hardening via esterification

In the preferred process according to the variant of aspect (c1) as disclosed herein, the binder as components for hardening via esterification at least comprises one, two or more polymers comprising multiple carboxyl groups. According to the variant of aspect (c1) as disclosed herein, said one, two or more polymers comprising multiple carboxyl groups are preferably selected from the group consisting of polymers of one or more unsaturated carboxylic acid and mixtures thereof. Particularly preferred polymers of one or more unsaturated carboxylic acid are polymers of acrylic acid, more preferably copolymers of acrylic acid, and even more preferably copolymers of acrylic acid and maleic anhydride. Two or more of said preferred or particularly preferred polymers can be used in combination with each other.

According to a preferred variant of aspect (c1) as disclosed herein, the one, two or more polymer or monomer, preferably biobased (more preferably plant-based), compounds having two or more hydroxy groups are selected from the group consisting of (i) carbohydrates, (ii) sugar alcohols, and (iii) compounds selected from the group consisting of triols, tetrols, pentols and hexols, wherein the latter compounds are not carbohydrates and not sugar alcohols. Particularly preferred (i) carbohydrates, (ii) sugar alcohols and (iii) compounds selected from the group consisting of triols, tetrols, pentols and hexols are identified above. Even more particularly preferred one of the one, two or more polymer or monomer, preferably biobased (more preferably plant-based), compounds having two or more hydroxy groups is glycerol. Two or more of said preferred, particularly preferred or even more particularly preferred compounds can be used in combination with each other.

According to the variant of aspect (c1) as disclosed herein , preferably the total amount of said one, two or more polymer or monomer, preferably biobased (more preferably plant-based), compounds having two or more hydroxy groups for crosslinking said polymers comprising multiple carboxyl groups is above 5 wt.%, more preferably above 10 wt.%, even more preferably above 20 wt.% and most preferably above 30 wt.%, based on the solid content of all binder components present for hardening via esterification.

Preferred is a process of the present invention (preferably a process as defined herein as being preferred), wherein the binder as components for hardening via esterification at least comprises
(c2) one, two or more, preferably biobased, polymers comprising multiple hydroxy groups, selected from the group consisting of carbohydrates, preferably non-hydrolyzed starch or maltodextrin, polyvinylalcohol, and mixtures and copolymers thereof
and
for crosslinking said polymers one, two or more polymer or monomer compounds, preferably one, two or more biobased polymer or biobased monomer compounds, having two or more carboxyl groups, selected from the group consisting of alpha-hydroxy carboxylic acids, preferably citric acid, malic acid and tartaric acid, more preferably citric acid, and reaction products thereof, preferably polyesters thereof,
wherein preferably the total amount of said one, two or more polymer or monomer compounds, preferably the total amount of said one, two or more biobased polymer or biobased monomer compounds, for crosslinking said polymers is above 5 wt.%, more preferably above 10 wt.%, even more preferably is above 20 wt.% and most preferably above 30 wt.%, based on the solid content all binder components present for hardening via esterification.

In the preferred process according to the present invention as described above or below, the binder as components for hardening via esterification at least comprises one, two or more, preferably biobased (more preferably plant-based), polymers comprising multiple hydroxy groups. According to the preferred process according to the present invention, the one, two or more, preferably biobased (more preferably plant-based), polymers comprising multiple hydroxy groups are preferably selected from the group consisting of carbohydrates, polyvinylalcohol, and mixtures and copolymers thereof. Particularly preferred carbohydrates are non-hydrolyzed starch and hydrolyzed starch, more preferably the carbohydrate is maltodextrin. Two or more of said preferred or particularly preferred polymers can be used in combination with each other.

According to the preferred process of the present invention as described above or below, the polymer or monomer, preferably biobased (more preferably plant-based), compounds having two or more carboxyl groups are preferably selected from the group consisting of alpha-hydroxy carboxylic acids and reaction products thereof. Particularly preferred alpha-hydroxy carboxylic acids are citric acid, malic acid and tartaric acid, more preferably citric acid. Particularly preferred reaction products of such alpha-hydroxy carboxylic acids are polyesters. Two or more of said preferred or particularly preferred compounds can be used in combination with each other.

According to a preferred process of the present invention as described above or below, preferably the total amount of said one, two or more polymer or monomer, preferably biobased (more preferably plant-based), compounds having two or more carboxyl groups for crosslinking said polymers comprising multiple hydroxy groups is above 5 wt.%, more preferably above 10 wt.%, even more preferably above 20 wt.% and most preferably above 30 wt.%, based on the solid content of all binder components present for hardening via esterification.

According to the variant of aspect (c1) as disclosed herein is a process preferred (preferably a respective process as defined herein above as being preferred), wherein the binder as components for hardening via esterification at least comprises
(c1) one, two or more polymers comprising multiple carboxyl groups,
and
for crosslinking said polymers one, two or more polymer or monomer compounds having two or more hydroxy groups,
wherein the binder comprises as an additional component for hardening the binder via esterification
   - one or more non-polymeric, preferably non-polymeric biobased, compounds having two or more carboxyl groups, wherein the one compound or at least one of the more than one compounds is preferably selected from the group consisting of hydroxy carboxylic acids, more preferably is selected from the group consisting of alpha-hydroxy carboxylic acids, even more preferably is selected from the group consisting of citric acid, malic acid and tartaric acid, and most preferably is citric acid
      and/or
   - one or more non-polymeric, preferably non-polymeric biobased, compounds having at least one carboxyl group and at least one hydroxy group, wherein the one compound or at least one of the more than one compounds is preferably selected from the group consisting of monohydroxy-monocarboxylic acids, more preferably is selected from the group consisting of alpha-hydroxy monohydroxy-monocarboxylic acids, even more preferably is selected from the group consisting of lactic acid, glycolic acid and mandelic acid, and most preferably is lactic acid,

Preferred is a process of the present invention (preferably a process of the present invention as defined herein as being preferred), wherein the binder as components for hardening via esterification at least comprises:
(c2) one, two or more polymers comprising multiple hydroxy groups,
and
for crosslinking said polymers one, two or more polymer or monomer compounds having two or more carboxyl groups,
wherein the binder comprises as an additional component for hardening the binder via esterification one or more non-polymeric, preferably non-polymeric biobased, compounds having at least one carboxyl group and at least one hydroxy group, wherein the one compound or at least one of the more than one compounds is preferably selected from the group consisting of monohydroxy-monocarboxylic acids, more preferably is selected from the group consisting of alpha-hydroxy monohydroxy-monocarboxylic acids, even more preferably is selected from the group consisting of lactic acid, glycolic acid and mandelic acid and most preferably is lactic acid.

Preferred is moreover a process according to the present invention (preferably a process of the present invention as defined herein as being preferred), wherein the binder comprises as an additional component for hardening the binder via esterification
- one or more non-polymeric, preferably non-polymeric biobased, compounds having at least one carboxyl group and at least one hydroxy group, wherein the one non-polymeric compound or at least one of the more than one non-polymeric compounds is preferably selected from the group consisting of monohydroxy-monocarboxylic acids, more preferably is selected from the group consisting of alpha-hydroxy monohydroxy-monocarboxylic acids, even more preferably is selected from the group consisting of lactic acid, glycolic acid, and mandelic acid, and most preferably is lactic acid,
   and/or
- sugar alcohols, preferably selected from the group consisting of mannitol, sorbitol, xylitol, lactitol, isomalt, maltitol, erythritol and glycerol, more preferably glycerol.

Herein, and throughout the present text, the term "compounds having at least one carboxyl group and at least one hydroxy group" designates compounds having (i) in their protonated form at least one carboxyl group, and (ii) at least one hydroxy group. E.g., lactic acid in its protonated form has one carboxyl group (COOH). Sodium lactate has no carboxyl group, but falls under the present definition because in its protonated form it has one carboxyl group. Typically, in the present text reference is made to the respective acid. In such cases a reference to the corresponding (partially) neutralized/deprotonated form is incorporated. E.g, a reference to lactic acid incorporates a reference to its neutralized/deprotonated form (lactates).

According to the variant of aspect (c1) as disclosed herein, the binder preferably comprises as an additional component for hardening the binder via esterification one or more non-polymeric, preferably non-polymeric biobased (more preferably plant-based), compounds having two or more carboxyl groups and/or, preferably "and", comprises as an additional component for hardening the binder via esterification one or more non-polymeric, preferably non-polymeric biobased (more preferably plant-based) compounds having at least one carboxyl group and at least one hydroxy group. More preferred specific compounds are defined above. Citric acid and/or lactic acid are particularly preferred. Two or more of said preferred or particularly preferred additional compounds can be used in combination with each other.

In accordance with the variant of aspect (c1) as disclosed herein, the skilled person will select the respective individual and relative amounts of said polymers comprising multiple carboxyl groups, said compounds having two or more hydroxy groups (present for crosslinking said polymers), and said additional compounds having at least one carboxyl group and at least one hydroxy group, so that the properties of the resulting binder mixture and of the hardened binder are tailored according to the individual requirements. Preferred total amounts of the one, two or more polymer or monomer, preferably biobased, compounds for crosslinking said polymers are stated above.

According to the preferred process according to the invention as described above, the binder comprises as an additional component for hardening the binder via esterification one or more non-polymeric, preferably non-polymeric biobased (more preferably plant-based) compounds having at least one carboxyl group and at least one hydroxy group. More preferred specific compounds are defined above. Lactic acid is particularly preferred. Two or more of said preferred or particularly preferred compounds can be used in combination with each other.

In accordance with the process according to the invention as described above or below, the skilled person will select the respective individual and relative amounts of said polymers comprising multiple hydroxy groups, said compounds having two or more carboxyl groups (present for crosslinking said polymers), and said additional compounds having at least one carboxyl group and at least one hydroxy group, so that the properties of the resulting binder mixture and of the hardened binder are tailored according to the individual requirements. Preferred total amounts of the one, two or more polymer or monomer, preferably biobased, compounds for crosslinking said polymers are stated above.

Preferred is a process of the invention (preferably a process as defined herein above as being preferred), wherein the binder as compound(s) having two or more carboxyl groups comprises one, two or more, preferably biobased (more preferably plant-based), polyesters having two or more carboxyl groups,
wherein one, two or more of said, preferably biobased (more preferably plant-based), polyesters are preferably prepared by reacting
- one or more alpha-hydroxy carboxylic acids, preferably citric acid,
   and
- one, two or more compounds selected from the group consisting of:
   ▪ carbohydrates, preferably selected from the group consisting of monosaccharides, disaccharides, oligosaccharides, polysaccharides and starch, more preferably selected from the group consisting of dextrose, fructose, saccharose, non-hydrolyzed starch, modified starch and maltodextrin,
   ▪ sugar alcohols, preferably selected from the group consisting of mannitol, sorbitol, xylitol, lactitol, isomalt, maltitol, erythritol, hydrogenated starch hydrolysates and glycerol, more preferably glycerol
   ▪ compounds selected from the group consisting of triols, tetrols, pentols and hexols, wherein the compounds are not carbohydrates and not sugar alcohols, more preferably compounds selected from the group consisting of triethanolamine and trimethylolpropane
   wherein preferably the or at least one of the two or more compounds is glycerol.

Furthermore preferred is a process according to the present invention (preferably a process according to the invention as defined herein above as being preferred), wherein the binder comprises as components for hardening the binder via esterification at least:
- (c2) one, two or more polymers comprising multiple hydroxy groups, selected from the group consisting of:
   ▪ carbohydrates, preferably selected from the group consisting of non-hydrolyzed starch, modified starch, maltodextrin and mixtures thereof,
   ▪ polyvinylalcohol,
      and
   ▪ mixtures thereof.
   and, for crosslinking said polymers,
- one, two or more polymer or monomer compounds having two or more carboxyl groups, selected from the group consisting of:
   ▪ one, two or more polymers selected from the group consisting of polymers of one or more unsaturated carboxylic acid, preferably acrylic acid, and mixtures thereof, preferably co-polymers of acrylic acid and more preferably copolymers of acrylic acid and maleic anhydride;
      and/or
   ▪ one, two or more polymer or monomer compounds, preferably one, two or more biobased polymer or biobased monomer compounds, having two or more carboxyl groups, selected from the group consisting of alpha-hydroxy carboxylic acids, preferably selected from the group consisting of citric acid, malic acid and tartaric acid, more preferably citric acid,
      and/or
   ▪ one, two or more, preferably biobased (more preferably plant-based), polyesters having two or more carboxyl groups, as defined here above or below.

According to this preferred aspect of the present invention, the binder as compound(s) having two or more carboxyl groups comprises one, two or more, preferably biobased (more preferably plant-based), polyester having two or more carboxyl groups. Herein, preferably one, two or more of said, preferably biobased (more preferably plant-based), polyesters are prepared by reacting one or more alpha-hydroxy carboxylic acids (preferably citric acid) and one, two or more compounds comprising reactive hydroxy groups (preferably glycerol) as defined above. The preparation of said polyesters is a specific part of a preferred process of the present invention which is conducted before step a).

Preferred is also a process according to the invention (preferably a process according to the invention as defined herein above as being preferred), wherein the binder comprises as an additional component for hardening the binder via esterification
- one or more non-polymeric, preferably non-polymeric biobased, compounds having at least one carboxyl group and at least one hydroxy group, wherein the one non-polymeric compound or at least one of the more than one non-polymeric compounds is preferably selected from the group consisting of monohydroxy-monocarboxylic acids, more preferably is selected from the group consisting of alpha-hydroxy monohydroxy-monocarboxylic acids, even more preferably is selected from the group consisting of lactic acid, glycolic acid, and mandelic acid, and most preferably is lactic acid,
   and/or
- sugar alcohols, preferably one or more sugar alcohols, more preferably selected from the group consisting of mannitol, sorbitol, xylitol, lactitol, isomalt, maltitol, erythritol and glycerol, even more preferably glycerol.

In preferred variants of the process according to the present invention wherein the binder comprises as a polymer comprising multiple hydroxy groups starch, preferably non-hydrolzed starch, it is preferred that such binder comprises as an additional component for hardening the binder via esterification one or more sugar alcohols, preferably selected from the group consisting of mannitol, sorbitol, xylitol, lactitol, isomalt, maltitol, erythritol and glycerol, more preferably glycerol.

In a process of preparing a binder for use in the process according to the present invention wherein the binder comprises as a polymer comprising multiple hydroxy groups starch, preferably non-hydrolzed starch, it is preferred that the starch, preferably the non-hydrolyzed starch, is treated at a temperature above room temperature (r.t., i.e. 25 °C), preferably at a temperature in the range of from ≥ 70 °C to ≤ 100 °C and preferably in the presence of water, with one or more sugar alcohols, preferably selected from the group consisting of mannitol, sorbitol, xylitol, lactitol, isomalt, maltitol, erythritol and glycerol, more preferably glycerol, before the other binder components (as desired) are added to the so treated starch.

In accordance with the process according to the variant of aspect (c1) as disclosed herein is a process preferred (preferably a respective process as defined herein above as being preferred), wherein the binder as components for hardening via esterification at least comprises
(c1-A) one, two or more polymers comprising multiple carboxyl groups, selected from the group consisting of polymers of one or more unsaturated carboxylic acid, preferably acrylic acid, and mixtures thereof, preferably copolymers of acrylic acid and more preferably copolymers of acrylic acid and maleic anhydride
   and
(c1-B) for crosslinking said polymers one, two or more polymer or monomer compounds having two or more hydroxy groups, wherein at least glycerol is present,
wherein the ratio of the total mass of said polymers of component (c1-A) to the mass of glycerol is in the range of from 80:20 to 50:50,
   and wherein preferably the binder comprises as an additional component for hardening the binder via esterification
      - one or more non-polymeric, preferably non-polymeric biobased, compounds having two or more carboxyl groups, wherein the one compound or at least one of the more than one compounds is preferably selected from the group consisting of hydroxy carboxylic acids, more preferably is selected from the group consisting of alpha-hydroxy carboxylic acids, even more preferably is selected from the group consisting of citric acid, malic acid and tartaric acid, and most preferably is citric acid
         and/or (preferably "and")
      - one or more non-polymeric, preferably non-polymeric biobased, compounds having at least one carboxyl group and at least one hydroxy group, wherein the one compound or at least one of the more than one compounds is preferably selected from the group consisting of monohydroxy-monocarboxylic acids, more preferably is selected from the group consisting of alpha-hydroxy mono-hydroxy-monocarboxylic acids, even more preferably is selected from the group consisting of lactic acid, glycolic acid, and mandelic acid, and most preferably is lactic acid,
   wherein the total amount of said additional component preferably is 30 wt.-% or lower, more preferably is in the range of from 5 wt.-% to 30 wt.-%, based on the solid content of all binder components present for hardening via esterification.

In a preferred process according to the variant of aspect (c1) as disclosed herein, the binder as components for hardening via esterification at least comprises polymers of component (c1-A) and glycerol (as preferred example of component (c1-B)), wherein the ratio of the total mass of said polymers of component (c1-A) to the mass of glycerol is in the range of from 80:20 to 50:50. Glycerol has proven as a particularly suitable (crosslinking) monomer compound having two or more hydroxy groups, as it is advantageous in terms of environmental aspects (as it can be obtained from renewable resources) and its crosslinking properties, which lead to an effective hardening of the binder via esterification by applying a high-frequency electrical field. The presence of an additional non-polymeric, preferably non-polymeric biobased, component for hardening the binder via esterification in a range of from 5 wt.-% to 30 wt.-%, based on the solid content of all binder components present for hardening via esterification, has also proven particularly advantageous.

According to the variant of aspect (c1) as disclosed herein it is thus preferred to provide or prepare a binder comprising at least i) one, two or more polymers comprising multiple carboxyl groups, ii) glycerol and iii) one or more non-polymeric, preferably non-polymeric biobased, compounds having two or more carboxyl groups and/or one or more non-polymeric, preferably non-polymeric biobased, compounds having at least one carboxyl group and at least one hydroxy group. More preferably said binder comprises at least i) polymers of acrylic acid and/or copolymers of acrylic acid, preferably copolymers of acrylic acid and maleic anhydride, ii) glycerol and iii) citric acid and/or lactic acid. Even more preferably the ratio of the total mass of said components i) and ii), and the total amount of said additional component iii) are selected as indicated above. Some examples of said preferred binders are as follows:
- a) copolymer consisting of 75 wt.-% of acrylic acid units and 25 wt.-% of maleic acid units + b) glycerin; ratio of the total mass: 60:40 (a:b)
- a) copolymer consisting of 75 wt.-% of acrylic acid units and 25 wt.-% of maleic acid units + b) copolymer consisting of 50 wt.-% of acrylic acid units and 50 wt.-% of maleic acid units + c) glycerol; ratio of the total mass: 20:50:30 (a:b:c)
- a) copolymer consisting of 75 wt.-% of acrylic acid units and 25 wt.-% of maleic acid units + b) glycerin + c) citric acid; ratio of the total mass: 50:30:20 (a:b:c)

Preferred is a process of the present invention (preferably a process as defined herein above as being preferred), wherein the binder (as part of the mixture provided or prepared in step a) of the process) additionally comprises one, two or more compounds independently selected from the group consisting of:
- alkali salts and alkaline earth salts, preferably sodium nitrate
- hydrophobizing agents, preferably paraffin and mixtures comprising paraffin, more preferably paraffin emulsions
- dyes, pigments
- antifungal agents and antibacterial agents
- rheology modifiers, fillers
- release agents
- surfactants and tensides.

These additional binder compounds are not components for hardening the binder via esterification.

Advantageously, in a process of the present invention (preferably a process according to the present invention as defined herein as being preferred) the addition of alkali salts and alkaline earth salts, preferably sodium nitrate, to the binder leads to improved properties of the resulting lignocellulosic composite. In particular, the addition of alkali salts and alkaline earth salts, preferably sodium nitrate, to the binder improves the internal bond strength and/or the thickness swelling after 24 hours in water at 20 °C of a resulting lignocellulosic composite or a layer of a lignocellulosic composite. Furthermore, the presence of alkali salts and alkaline earth salts, preferably sodium nitrate, in the binder reduces the time needed for applying a high-frequency electrical field to the mixture during and/or after compacting to reach the target temperature, so that the binder hardens via esterification and binds the lignocellulosic particles. Thus, the addition of alkali salts and alkaline earth salts, preferably sodium nitrate, improves the product properties and/or the process parameters, i.e. less time is needed and energy consumption is reduced.

In a preferred process of the present invention the total amount of alkali and alkaline earth ions, preferably sodium ions (Na⁺), in the binder is in a range of from 25-250 mmol/g, preferably in a range of from 50-250 mmol/g, more preferably in a range of from 75-250 mmol/g, based on the total amount of the solid content of all binder components present for hardening via esterification plus the total amount of all alkali salts and alkaline earth salts.

Another preferred additive in a process of the present invention are hydrophobizing agents, preferably paraffin and mixtures comprising paraffin, more preferably paraffin emulsions. In particular, the addition of hydrophobizing agents, preferably paraffin and mixtures comprising paraffin, more preferably paraffin emulsions, to the binder improves the internal bond strength and/or the thickness swelling after 24 hours in water at 20 °C of a resulting lignocellulosic composite or a layer of a lignocellulosic composite. It is preferred that in step a) of the process of the present invention the mass ratio of the weight (mass) of paraffin to the weight (mass) of the lignocellulosic particles in an oven-dry state (paraffin amount) is in the range of from 0.2 % to 1.5 %. It is also preferred that the mass ratio of the weight (mass) of paraffin to the weight (mass) of all binder components present for hardening via esterification (paraffin/binder ratio) is in the range of from 5 % to 30 %, more preferably in the range of from 10 % to 25 %, even more preferably in the range of from 15 % to 25 %.

Further preferred additives in a process of the present invention are described above. The skilled person will select the respective amounts of said additional compounds so that the properties of the resulting binder mixture and/or of the hardened binder and/or the resulting lignocellulosic composite are tailored according to the individual requirements. In particular, the addition of such compounds leads to improved properties of the binder so that the desired viscosity, reactivity, stability and the like can be set. Furthermore, additives are selected in order to improve the properties of the resulting hardened binder and/or the resulting lignocellulosic composite. These properties preferably are, but are not limited to, the colour, durability, density and the like.

Two or more of the preferred or particularly preferred additional compounds (additives) can be used in combination with each other.

For the reasons discussed above, a process according to the present invention is preferred, wherein the binder (as part of the mixture provided or prepared in step a) of the process) additionally comprises one, two or more compounds selected from the group consisting of:
- alkali salts and alkaline earth salts, preferably sodium nitrate,
   and
- hydrophobizing agents, preferably paraffin and mixtures comprising paraffin, more preferably paraffin emulsions.

Preferably, one or more hydrophobizing agents (preferably comprising paraffin) are present in combination with one or more of said alkali salts and alkaline earth salts (preferably sodium nitrate).

Preferred is a process of the present invention (preferably a process of the present invention as defined herein as being preferred), wherein the binder comprises (as part of the mixture provided or prepared in step a) of the process)
- one, two or more biobased, preferably plant-based, compounds having two or more hydroxy groups, preferably one, two or more biobased, preferably plant-based, polymers comprising multiple hydroxy groups (as specified in more detail above),
   and/or
- one, two or more biobased, preferably plant-based, compounds having two or more carboxyl groups, preferably one, two or more biobased, preferably plant-based, polymer or monomer compounds having two or more carboxyl groups,
wherein the total amount of such biobased, preferably plant-based, compounds is above 5 wt.-%, more preferably above 10 wt.-%, even more preferably above 20 wt.-% and most preferably above 30 wt.-%, based on the total amount of the solid content of all binder components present for hardening via esterification.

According to this preferred aspect of the present invention, binder components are used, which are not obtained from petrochemical resources, but are biobased (preferably plant-based), and which emit a reduced amount of toxic VOCs and/or formaldehyde, for a process of producing a multilayer or single-layer lignocellulosic composite. In particular, the amount of biobased, preferably plant-based, compounds in the preferred binder leads to lignocellulosic composites which are preferable in terms of sustainability and toxicity of emissions, in comparison with other state of the art lignocellulosic composites.

Preferred is a process of the present invention (preferably as defined herein above as being preferred), wherein in the mixture provided or prepared in step a) the ratio of the weight of the solid content of all binder components present for hardening via esterification to the weight of the lignocellulosic particles in an oven-dry state is below 10 %, preferably below 8 %, more preferably below 6 %, and is preferably higher than 1 %, more preferably higher than 1.5 %, most preferably higher than 2.0 %.

According to this preferred aspect of the present invention the mixture provided or prepared in step a) comprises a relatively low amount of binder components present for hardening via esterification in relation to the amount of the lignocellulosic particles. More particularly, the ratio of the weight of the solid content of all binder components present for hardening via esterification to the weight of the lignocellulosic particles in an oven-dry state is below 10 %, preferably below 8 %, more preferably below 6 %, even more preferably below 5 %, most preferably below 4.5 %. The relatively low preferred amounts of the solid content of all binder components present for hardening via esterification is advantageous as it leads to sustainable processes and/or sustainable products, i.e. multilayer lignocellulosic composite comprising one or more, preferably two or more, lignocellulosic composite layers or a single-layer lignocellulosic composite.

Surprisingly, in the process of the present invention a relatively low amount of binder suffices to bind a large amount of lignocellulosic particles, as in step c) of the process a high-frequency electrical field is applied which allows for a perfect hardening of the mixture also in the center of the compacted mixture, in contrast to other hardening treatments (e.g. the use of a hot press). In other words, the binder is used more efficiently in the process of the present invention.

Preferred is a process of the present invention (preferably as defined herein above as being preferred), wherein the process of producing a lignocellulosic composite comprises steps that are carried out batchwise and/or steps that are carried out continuously. Thus, the process of the present invention is suitable for a large variety of different production facilities and offers numerous options for the production of the desired lignocellulosic composite, i.e. multilayer lignocellulosic composite comprising one or more, preferably two or more, lignocellulosic composite layers or a single-layer lignocellulosic composite. As a preferred process of the present invention a batchwise production is chosen to produce individual lignocellulosic composites, e.g. having different shapes, thicknesses and the like, while a completely continuous process is preferably chosen for the production of more uniform lignocellulosic composites, e.g. having similar shapes, thicknesses and the like.

The preferred process of the present invention can also, and preferably, comprise one or more steps that are carried out batchwise, and one or more steps that are carried out continuously. One preferred example of such a combined process is the production of a single-layer lignocellulosic composite in continuously conducted process steps, and the subsequent batchwise (and preferably individual) production of a multilayer lignocellulosic composite using said continuously produced single-layer lignocellulosic composite as a starting material, e.g. as a core layer of said multilayer lignocellulosic composite.

Preferred is a process of the present invention (preferably as defined herein above as being preferred), wherein the lignocellulosic composite is a
lignocellulosic board selected from the group consisting of
   - high-density fiberboard (HDF)
   - medium-density fiberboard (MDF)
   - low-density fiberboard (LDF)
   - wood fiber insulation board
   - oriented strand board (OSB)
   - chipboard, and
   - natural fiber board, preferably with fibers from the group consisting of sisal, jute, flax, coconut, kenaf, hemp, banana, and mixtures thereof
wherein the lignocellulosic board is a
   - single-layer lignocellulosic board or
   - multilayer lignocellulosic board,
      preferably a multilayer lignocellulosic board having a core layer and having an upper surface layer and a lower surface layer
      and/or
   - wherein the lignocellulosic composite is a board having a core, wherein in a cross section oriented perpendicularly to the plane of the board the difference between density maximum of the board and density minimum in the core of the board is at most 100 kg/m³.

According to this preferred aspect of the present invention, the lignocellulosic composite produced in a process of the present invention - i.e. the lignocellulosic composite obtained after step a) of providing or preparing a mixture at least comprising lignocellulosic particles and a binder, step b) of compacting the mixture, and step c) of applying a high-frequency electrical field to the mixture during and/or after compacting, so that the binder hardens via esterification of said compounds and binds the lignocellulosic particles - is a board as listed above. Thus, any type of lignocellulosic particles such as fibers, chips, strands, flakes, sawmill shavings and saw dust or mixtures thereof as well as any type of lignocellulosic biomass such as birch, beech, alder, pine, spruce, larch, eucalyptus, linden, poplar, ash, fir, tropical wood, sisal, jute, flax, coconut, kenaf, hemp, banana, straw, cotton stalks, bamboo and the like or mixtures thereof can be used as a source for the production of said boards listed above.

According to this preferred aspect the production process results in a lignocellulosic composite, that is preferably a single-layer lignocellulosic board or a multilayer lignocellulosic board, more preferably is a multilayer lignocellulosic board. The multilayer lignocellulosic board is more preferably a board having at least a core layer as well as an upper surface layer and a lower surface layer. The total number of layers is then three or more. If the number of layers is four or more, there are one or more intermediate layers. Preferred is a three-layer board having one core layer, an upper surface layer and a lower surface layer.

Consequently, a preferred aspect of the present invention relates to a process for the production of a high-density fiberboard (HDF), a medium-density fiberboard (MDF), a low-density fiberboard (LDF), a wood fiber insulation board, an oriented strand board (OSB), a chipboard or a natural fiber board, wherein the board preferably is either a single-layer lignocellulosic board or a multilayer lignocellulosic board, more preferably a multi-layer lignocellulosic board, most preferably a three-layer lignocellulosic board.

According to a particularly preferred aspect of the present invention, the production process results in a lignocellulosic composite that is a board having a core (core layer of multilayer lignocellulosic composite or core of single-layer lignocellulosic composite), wherein in a cross section oriented perpendicularly to the plane of the board the difference between density maximum of the board and density minimum in the core of the board is at most 100 kg/m³, preferably is at most 80 kg/m³, and more preferably is at most 60 kg/m³. Thus, from the perspective of the skilled person the density distribution within the board is almost homogeneous, which is considered to be an advantage over boards having a (heterogeneous) large difference of more than 100 kg/m³ between the density maximum of the board and the density minimum in the core of the board. A density difference below 100 kg/m³, preferably below 80 kg/m³, and more preferably below 60 kg/m³, in above described preferred boards has several advantages, such as consistent and reliable mechanical properties in every cross section of the board.

In the process of the present invention, step c) of applying a high-frequency electrical field to the mixture during and/or after compacting, so that the binder hardens via esterification of said compounds and binds the lignocellulosic particles, so that a lignocellulosic composite or a layer of a lignocellulosic composite results, is relevant for achieving the homogeneous density distribution characterized by a difference of at most 100 kg/m³ between the density maximum of the board and the density minimum in the core of the board. The advantageous property is attributed to a fast and even heating between the surfaces (and including the core) when using a high-frequency electrical field. In contrast to that, a conventional hot press process results in a slow heat transfer from surface to core and consequently leads to boards having large density differences between the core layer or section and the outer layers or sections.

Preferred is a process of the present invention (preferably as defined herein above as being preferred), wherein the process of producing a lignocellulosic composite comprises one, two, three, more than three or all of the following steps
- in step a) for preparing said mixture blending said lignocellulosic particles with one or more or all ingredients of the binder or spraying one or more or all ingredients of the binder onto said lignocellulosic particles, wherein before blending or spraying said ingredients of the binder are pre-mixed or not pre-mixed,
- preparing, preferably preparing by scattering, a layer of the mixture provided or prepared in step a), and in step b) compacting this layer,
- for preparing a multilayer lignocellulosic composite providing or preparing at least a first and a second individual mixture, and using said first and second individual mixtures for making a first and a second layer of the multilayer lignocellulosic composite, wherein the first and the second layer preferably are in contact with each other, and/or wherein the first and the second individual mixture have the same or a different composition,
- for preparing a multilayer lignocellulosic composite preparing two or more layers, preferably preparing two or more layers by scattering individual layers on top of each other, each layer comprising lignocellulosic particles and a binder, wherein in the two or more layers the lignocellulosic particles and/or the binders are the same or different,
- in step b) compacting the mixture in two stages, wherein in the first stage the mixture is pre-compacted to give a pre-compacted mat, and wherein in the second stage this pre-compacted mat is further compacted
- during or after compacting in step b), hot pressing the mixture,
- during or after applying a high-frequency electrical field in step c), hot pressing the mixture
   and
- in step c) of applying a high-frequency electrical field monitoring and/or controlling the temperature at the center of said mixture.

According to these preferred aspects, the process of producing a lignocellulosic composite comprises one, two, three or more preferred steps, which are either specific embodiments of steps a), b), or c), respectively, or are additional steps. Each of these preferred steps is optional and can be conducted individually or in combination with one or more of the other preferred steps.

One of the preferred steps relates to step a) of preparing said mixture consisting of said lignocellulosic particles and said binder. According to this preferred aspect, the lignocellulosic particles are blended with one or more or all ingredients of the binder or one or more or all ingredients of the binder are sprayed onto said lignocellulosic particles. Specifically, ingredients of the binder are blended with or sprayed onto the lignocellulosic particles simultaneously (e.g. in a mixture with each other) or successively, preferably successively. A sequential addition of ingredients of the binder is conducted in any order and in any combination of the respective binder ingredients. Specific ingredients of the binder are pre-mixed or not pre-mixed, preferably two or more of the ingredients of the binder are pre-mixed, before blending with or spraying onto said lignocellulosic particles in said step a). More preferably, all binder components for hardening the binder via esterification are pre-mixed and even more preferably all binder components for hardening the binder via esterification and, if applicable, all alkali salts and/or alkaline earth salts are premixed. According to this preferred aspect the skilled person selects (i) a desired sequence for the addition of binder ingredients (simultaneously or successively), preferably successively, (ii) a desired method for mixing ingredients of the binder, such as blending or spraying, preferably spraying, and the skilled person (iii) provides or prepares one, two or more pre-mixtures with any kind of combination of specific binder ingredients.

Another preferred step of the present invention is the step of preparing, preferably preparing by scattering, a layer of the mixture provided or prepared in step a), and in step b) compacting this layer. The preparation of a layer by scattering is a preferred additional step for the production of a lignocellulosic composite.

According to a preferred aspect of the present invention, for preparing a multilayer lignocellulosic composite, at least a first and a second individual mixture are provided or prepared. Said first and second individual mixtures are then used for making a first and a second layer of the multilayer lignocellulosic composite. Preferably, the first and the second layer are in contact with each other. According to this preferred aspect, the first and the second individual mixture have the same or a different composition, even more preferably the first and the second individual mixture have a different composition. Thus, the different individual mixtures and/or layers of the prepared multilayer lignocellulosic composite preferably differ in specific properties such as density, color, and the like and/or they differ in terms of their composition, wherein differing compositions are obtained by using different binders, lignocellulosic particles and/or other (additional) components such as plastics, fabrics, paint coat or the like, for example derived from foreign matter in waste wood. Individual layers preferably (i) comprise different binders and different lignocellulosic particles or (ii) comprise identical binders, but different lignocellulosic particles or (iii) comprise identical binders and identical lignocellulosic particles, but in different ratios.

According to a technically related preferred process of the present invention the preparation of a multilayer lignocellulosic composite comprises the preparation of two, three or more layers, each layer comprising lignocellulosic particles and a binder. Preferably the lignocellulosic particles and/or the binders in said two, three or more layers are the same or different, even more preferably the lignocellulosic particles are different and the binders are different.

Preferably, in step b) of compacting the mixture provided or prepared in step a), the compacting of the mixture is conducted in two stages. This means, that in a first stage the mixture is pre-compacted to give a pre-compacted mat, and in a second stage this pre-compacted mat is further compacted. Preferably, the first stage of pre-compacting the mixture to give a pre-compacted mat is carried out before step c) of applying a high-frequency electrical field. The second stage of further compacting the pre-compacted mat is preferably carried out during step c) of applying a high-frequency electrical field. This two-stage compacting allows for a flexible process for the production of a lignocellulosic composite or a layer of a lignocellulosic composite.

In a preferred process of the present invention the preparation of a single-layer lignocellulosic composite or a multilayer lignocellulosic composite comprises the following steps:
- providing or preparing one, two or more than two mixtures at least comprising lignocellulosic particles and a binder according to the invention,
- scattering this mixture/these mixtures to give one, two or more than two layers, wherein the layer(s) form a mat,
- in a first compacting step pre-compacting this single-layer or multilayer mat to give a pre-compacted mat, and thereafter
- in a second compacting step compacting the pre-compacted mat while applying a high-frequency electrical field.

Preferably, the pre-compacted (single-layer or multilayer) mat obtained in the first compacting step is pre-heated (i) with vapor, preferably with water vapor, and/or (ii) by applying microwave radiation and/or (iii) by applying a high-frequency electrical field before the second compacting step.

In the second compacting step the binder present in the mat is hardened, partially or completely.

Hot pressing the mixture during or after compacting in step b), and/or during or after, more preferably during, applying a high-frequency electrical field in step c), is another process step that in specific cases is preferred in the process of the present invention.

According to the present invention hot pressing is a process step, in which an optionally pre-compacted mat is in contact with heated press surfaces which have temperatures in the range of from 80 to 300 °C. When hot pressing is conducted after applying a high-frequency electrical field in step c) the heated press surfaces preferably have temperatures from 80 to 300 °C, more preferably from 120 to 280 °C, most preferably from 150 to 250 °C. When hot pressing is conducted during applying a high-frequency electrical field in step c) the heated press surfaces preferably have temperatures in the range of from 80 to 200°C, more preferably from 90 to 180 °C, most preferably from 100 to 150 °C.

Preferably, in a preferred process of the present invention the temperature at the center of said mixture is monitored and/or controlled, preferably controlled, in step c) of applying a high-frequency electrical field. It is particularly preferred to control the temperature at the center of said mixture, so that the binder hardens via esterification of said compounds and binds the lignocellulosic particles in a controlled manner. The temperature, which is preferably monitored and/or controlled, more preferably controlled, is preferably adjusted to allow the binder to harden via esterification in a controlled manner. The monitored and/or controlled, preferably controlled, temperature at the center of said mixture is preferably adjusted to be in a range of from 110 °C to 220 °C, more preferably in a range of from 130 °C to 200°C, even more preferably in a range of from 140 °C to 180 °C and most preferably in a range of from 150 °C to 170 °C.

The term "center of (said) mixture" as used in this text designates the location which is approximately in the middle between the surfaces of the three-dimensional object defined by said mixture in step c) of the process of the present invention.

Preferred is a process of the present invention (preferably as defined herein above as being preferred), wherein in said step c) of applying a high-frequency electrical field the temperature at the center of said mixture
(i) is increased to a maximum temperature in the range of from 130 °C to 200 °C, preferably in the range of from 140 °C to 180 °C, wherein preferably the maximum temperature is reached in less than 40 s ·(d/mm) after the start of applying a high-frequency electrical field, where d is the thickness of the compacted mixture in mm at the end of step c)
   and/or
(ii) is controlled so that said binder hardens via esterification and binds the lignocellulosic particles.

More preferably said temperature at the center of said mixture (i) is increased to a maximum temperature as specified and (ii) is controlled, preferably automatically controlled, so that said binder hardens via esterification and binds the lignocellulosic particles.

When according to aspect (i) the temperature at the center of said mixture is increased to a maximum temperature in the range of from 130 °C to 200 °C, preferably in the range of from 140 °C to 180 °C, the maximum temperature is preferably reached in less than 40 s .(d/mm), more preferably in less than 30 s ·(d/mm), even more preferably in less than 20 s .(d/mm), most preferably in less than 15 s .(d/mm) after the start of applying a high-frequency electrical field, where d is the thickness of the compacted mixture in mm at the end of step c). E.g., if the thickness d of the compacted mixture in mm at the end of step c) is 10 mm, the maximum temperature is preferably reached in less than 400 s, more preferably in less than 300 s, even more preferably in less than 200 s, most preferably in less than 150 s after the start of applying a high-frequency electrical field.

Preferably, the temperature at the center of said mixture in accordance with aspect (i) is increased to a maximum temperature in the range of from 130 °C to 200 °C, more preferably in the range of from 140 °C to 180 °C and most preferably in the range of from 150 °C to 170 °C, wherein the temperature increase is controlled, preferably automatically controlled, and preferably (ii) is also controlled so that said binder hardens via esterification and binds the lignocellulosic particles.

The above described preferred processes of the present invention which relate to the temperature at the center of said mixture allow for a fast and/or effective production of a multi-layer lignocellulosic composite comprising one or more, preferably two or more, lignocellulosic composite layers or a single-layer lignocellulosic composite.

The present invention also relates to a lignocellulosic composite, preparable according to a process of the present invention (preferably a process of the invention as defined above or in the attached claims as being preferred), and to a construction product (for a definition see below) comprising such lignocellulosic composite.

The lignocellulosic composite of the present invention preferably is a lignocellulosic board selected from the group consisting of
- high-density fiberboard (HDF)
- medium-density fiberboard (MDF) (this embodiment is particularly preferred)
- low-density fiberboard (LDF)
- wood fiber insulation board
- oriented strand board (OSB)
- chipboard (this embodiment is particularly preferred), and
- natural fiber board, preferably with fibers from the group consisting of sisal, jute, flax, coconut, kenaf, hemp, banana, and mixtures thereof
wherein the lignocellulosic board is a
- single-layer lignocellulosic board or
- multilayer lignocellulosic board,
   preferably a multilayer lignocellulosic board having a core and having an upper surface layer and a lower surface layer (see above),
   and/or (preferably "and")
- the lignocellulosic composite of the present invention is a board having a core, wherein in a cross section oriented perpendicularly to the plane of the board the difference between density maximum of the board and density minimum in the core of the board is at most 100 kg/m³.

Generally, all aspects of the present invention discussed herein in the context of the process of producing a lignocellulosic composite according to the present invention apply *mutatis mutandis* to the lignocellulosic composite of the present invention, as defined here above and below. And *vice versa,* all aspects of the present invention discussed herein in the context of the lignocellulosic composite of the present invention apply *mutatis mutandis* to the process of producing a lignocellulosic composite according to the present invention.

The lignocellulosic composite, specifically board, of the present invention, in particular if it is an element of a construction product of the present invention, preferably comprises lignocellulosic particles selected from the group consisting of fibres, chips, strands, flakes, sawmill shavings and saw dust or mixtures thereof. These lignocellulosic particles are preferably derived from any type of lignocellulosic biomass such as birch, beech, alder, pine, spruce, larch, eucalyptus, linden, poplar, ash, fir, tropical wood, sisal, jute, flax, coconut, kenaf, hemp, banana, straw, cotton stalks, bamboo and the like or mixtures thereof.

A lignocellulosic composite, preferably board, of the present invention, preparable according to a process of the present invention, preferably is a single-layer lignocellulosic board or a multilayer lignocellulosic board, more preferably is a single-layer lignocellulosic board. A multilayer lignocellulosic board of the present invention is a board comprising at least two distinguishable (individual) layers. The multilayer lignocellulosic board is preferably a board having at least a core layer as well as an upper surface layer and a lower surface layer. The total number of layers is then three or more. If the number of layers is four or more, there are one or more intermediate layers. Preferred is a three-layer board having one core layer, an upper surface layer and a lower surface layer. This is specifically relevant if the lignocellulosic composite, preferably board, of the present invention is an element of a construction product of the present invention.

Particularly preferred are a single-layer lignocellulosic board of the present invention that is a medium-density fiberboard (MDF) or a chipboard, even more preferably is a medium-density fiberboard (MDF), and a corresponding construction product comprising such single-layer lignocellulosic board.

In another preferred aspect of the present invention, the lignocellulosic composite, or construction product comprising such lignocellulosic composite is a board having a core, wherein in a cross section oriented perpendicularly to the plane of the board the difference between the density maximum of the board and the density minimum in the core of the board is at most 100 kg/m³, preferably is at most 80 kg/m³, and more preferably is at most 60 kg/m³.

Preferred are a lignocellulosic composite of the present invention, preparable according to a process of the present invention (preferably as defined herein above as being preferred), and a construction product comprising such lignocellulosic composite, wherein the lignocellulosic composite has
- a surface screw holding, measured according to IKEA specification no. IOS-TM-0057, Date: 2018-07-13, Version no: AA-2120821-1, of at least 250 N, preferably of least 300 N, more preferably of least 450 N,
   and/or (preferably "and")
- an edge screw holding, measured according to IKEA specification no. IOS-TM-0057, Date: 2018-07-13, Version no: AA-2120821-1, of at least 600 N, preferably of at least 800 N.

This is specifically relevant if the lignocellulosic composite, preferably board, of the present invention is a building element in a construction product and even more relevant if the lignocellulosic composite, preferably board, of the present invention is a building element in furniture or parts of furniture.

Preferred are a lignocellulosic composite of the present invention, preparable according to a process of the present invention (preferably as defined herein above as being preferred), and a construction product comprising such lignocellulosic composite, wherein the lignocellulosic composite is a lignocellulosic board, and wherein said lignocellulosic board
- is selected from the group consisting of chipboard, high-density fiberboard (HDF), medium-density fiberboard (MDF) and oriented strand board (OSB),
   and/or
- has a thickness in the range of from 3 to 30 mm, preferably in the range of from 5 to 20 mm,
   and/or
- has an internal bond strength, determined according to DIN EN 319:1993-08, of at least 0.1 N/mm², preferably of at least 0.2 N/mm², more preferably of at least 0.3 N/mm²,
   and/or
- has a thickness swelling after 24 hours in water at 20 °C, determined according to DIN EN 317:1993-08, of less than 60 %, preferably less than 50 %, more preferably less than 40 %,

Preferably said lignocellulosic board is characterized by at least two, three, four or five of these features.

Particularly preferred is a lignocellulosic board of the present invention which has a thickness in the range of from 3 to 30 mm, preferably in the range of from 5 to 20 mm. The preferred lignocellulosic board of the present invention preferably is a component (building element) in a construction product, more preferably is a building element in furniture or parts of furniture, and most preferably is a building element in a hollow construction in furniture or parts of furniture.

A preferred board of the present invention (i.e., a preferred lignocellulosic composite of the present invention) has an internal bond strength, determined according to DIN EN 319:1993-08, of at least 0.1 N/mm², preferably of at least 0.2 N/mm², more preferably of at least 0.3 N/mm², and even more preferably of at least 0.4 N/mm².

A preferred board of the present invention has a thickness swelling after 24 hours in water at 20 °C, determined according to DIN EN 317:1993-08, of less than 60 %, preferably less than 50 %, more preferably less than 40 %, and most preferably less than 35 %.

The present invention also pertains to a binder, comprising as components, preferably for hardening the binder via esterification, at least
- (c2) one, two or more polymers comprising multiple hydroxy groups, selected from the group consisting of:
   ▪ carbohydrates, preferably selected from the group consisting of non-hydrolyzed starch, modified starch, maltodextrin and mixtures thereof,
   ▪ polyvinylalcohol,
      and
   ▪ mixtures thereof.
   and, preferably for crosslinking said polymers,
- one, two or more polymer or monomer compounds having two or more carboxyl groups, selected from the group consisting of:
   ▪ one, two or more polymers selected from the group consisting of polymers of one or more unsaturated carboxylic acid, preferably acrylic acid, and mixtures thereof, preferably co-polymers of acrylic acid and more preferably copolymers of acrylic acid and maleic anhydride;
      and/or
   ▪ one, two or more polymer or monomer compounds, preferably one, two or more biobased polymer or biobased monomer compounds, having two or more carboxyl groups, selected from the group consisting of alpha-hydroxy carboxylic acids, preferably selected from the group consisting of citric acid, malic acid and tartaric acid, more preferably citric acid,
      and/or
   ▪ one, two or more, preferably biobased, polyesters having two or more carboxyl groups, wherein preferably one, two or more (preferably all) of said, preferably biobased, polyesters are prepared by reacting
      - one or more alpha-hydroxy carboxylic acids, preferably citric acid,
         and
      - one, two or more compounds selected from the group consisting of:
         - carbohydrates, preferably selected from the group consisting of monosaccharides, disaccharides, oligosaccharides, polysaccharides and starch, more preferably selected from the group consisting of dextrose, fructose, saccharose, non-hydrolyzed starch and maltodextrin,
         - sugar alcohols, preferably selected from the group consisting of mannitol, sorbitol, xylitol, lactitol, isomalt, maltitol, erythritol, hydrogenated starch hydrolysates and glycerol, more preferably glycerol,
         - compounds selected from the group consisting of triols, tetrols, pentols and hexols, wherein the compounds are not carbohydrates and not sugar alcohols, more preferably compounds selected from the group consisting of triethanolamine and trimethylolpropane,
            wherein preferably the or at least one of the two or more compounds is glycerol,
and/or (preferably "or") to a binder composition comprising said binder and preferably further comprising a carrier liquid, preferably water.

Preferred is a binder according to the present invention and/or a binder composition according to the present invention, wherein the binder and/or the binder composition has a pH in the range of from 1.0 to 3.2, preferably in the range of from 2.0 to 2.9.

Generally, all aspects of the present invention discussed herein in the context of the process of producing a lignocellulosic composite according to the present invention and/or in the context of the lignocellulosic composite of the present invention apply *mutatis mutandis* to the binder and/or the binder composition of the present invention, as defined here above and below. And *vice versa,* all aspects of the present invention discussed herein in the context of the binder and/or binder composition of the present invention apply *mutatis mutandis* to the process of producing a lignocellulosic composite according to the present invention and/or to the lignocellulosic composite of the present invention.

The binder or binder composition of the present invention may further comprise one or more additional components, compounds, agents and/or salts, preferably as disclosed herein for the binder used (applied and/or defined) in the context of the process according to the present invention and/or as defined in the appended claims.

The present invention also relates to the use of a lignocellulosic composite of the present invention (as defined above or preparable according to a process of the present invention, preferably as defined herein above as being preferred) as a building element in a construction product, preferably as a building element in furniture or parts of furniture, more preferably as a building element in a hollow construction in furniture or parts of furniture.

Generally, all aspects of the present invention discussed herein in the context of the process of producing a lignocellulosic composite according to the present invention and/or in the context of the lignocellulosic composite of the present invention and/or in the context of the binder and/or binder composition of the present invention apply *mutatis mutandis* to the use of a lignocellulosic composite of the present invention, as defined here above and below. And *vice versa,* all aspects of the present invention discussed herein in the context of the use of a lignocellulosic composite of the present invention apply *mutatis mutandis* to the process of producing a lignocellulosic composite according to the present invention and/or to the lignocellulosic composite of the present invention and/or to the binder and/or binder composition of the present invention.

The term "construction product" as used in this text designates products used for constructions such as decking, doors, windows, floors, panels, furniture or parts of furniture. The construction product of the present invention is preferably selected from the group consisting of furniture and parts of furniture.

The term "furniture" as used in this text designates all kinds of furniture. In the context of the present invention, furniture is preferably selected from the group consisting of chairs, tables, desks, closets, beds and shelves.

The term "building element" as used in this text designates lignocellulosic composite products (e.g., boards, see above) which constitute a part (element) of a construction product (e.g., a part of furniture). Such building elements preferably are parts of furniture, and more preferably such parts of furniture are selected from the group consisting of shelves, table plates, side boards or shelves or doors of cabinets, and side walls of beds.

The term "hollow construction" as used in this text designates construction products, preferably furniture, and building elements, preferably parts of furniture, comprising an amount of enclosed empty space that is not filled with construction material. Such hollow constructions allow for the making of construction products, preferably furniture, and building elements, preferably parts of furniture, which are exceptionally light and strong, although a low amount (by weight) of construction material is used. Board-on-frame (BoF) products are typical examples for such hollow constructions. In a BoF product a frame made from lignocellulosic composite products (e.g. chipboards) is covered with lignocellulosic boards (e.g. thin high-density fiberboard). A further hollow construction is a board-on-stile (BoS) product, in which stripes of lignocellulosic composite products are used instead of a complete frame.

The following examples according to the present invention are meant to further explain and illustrate the present invention without limiting its scope which is defined by the appended claims.

### 1. Measuring methods:

### 1.1 Determination of the weight average molecular weight M_{w} of polymers comprising multiple carboxyl groups, selected from the group consisting of polymers of one (homopolymer) or more (copolymer) unsaturated carboxylic acids:

The Mw of acrylic acid homopolymers and copolymers (polymers comprising multiple carboxyl groups, selected from the group consisting of polymers of one (homopolymer) or more (copolymer) unsaturated carboxylic acids) was determined by gel permeation chromatography under the following conditions:
- Apparatus: Modular GPC system with a combination of columns and refractive index detector (Agilent)
- Eluent: 0.01 mol/I Phosphate buffered saline, pH 7.4 + 0.01 mol/I sodium azide in demineralized water
- Sample preparation: The polymer was dissolved in the eluent on a shaking device at room temperature for 6 h to give a concentration of approximately 4 g/L. Samples are filtrated through Sartorius RC 0.2 µm filters prior to injection.
- Injection volume: 100 µl
- Columns: 2 x TSKgel GMPWXL, 300 x 7.8 mm, 7 µm (TOSOH Bioscience GmbH)
- Column temperature: 35 °C
- Flow: 0.5 ml/min
- RID temperature: 35 °C
- Detection: refractive index (8 µl)
- Calibration: Narrow distributed poly(acrylic acid) sodium salt calibration standards in the range of 1250 g/mol to 143000 g/mol (PSS, Mainz, Germany), as well as 1770 g/mol and 900 g/mol (American Polymer Standards Corp.). The oligomer peaks of the standard with 900 g/mol were used as additional calibration points (225, 297, and 585 g/mol).

### 1.2 Determination of the weight average molecular weight M_{w} of polyesters having two or more carboxyl groups:

The Mw of polyesters of citric acid (polyesters having two or more carboxyl groups) was determined by gel permeation chromatography under the following conditions:
- Apparatus: Modular GPC system with a combination of columns and refractive index detector (Agilent 1260 Infinity)
- Eluent: THF for chromatography
- Sample preparation: The polyester was dissolved in the eluent on a shaking device at room temperature for 30 min to give a concentration of approximately 4 g/L. Samples are filtrated through Sartorius RC 0.2 µm filters prior to injection
- Injection volume: 50 µl
- Columns: PLGel Mixed E Guard 50 x 7.5 mm, 3 µm (Agilent), PLGel Mixed E 300 x 7.5 mm, 3 µm (Agilent), PLGel Resipore 300 x 7.5 mm, 3 µm (Agilent)
- Column temperature: 25 °C
- Flow: 1.0 ml/min
- RID temperature: 35 °C
- Detection: refractive index (62 µl)
- Calibration: Polymethylmethacrylate calibration standards in the range of 202 g/mol to 71,800 g/mol (ReadyCal-Kit Poly(methylmethacrylate) low, PSS, Mainz, Germany)

### 1.3 Residual particle moisture content ("drying oven method"):

The moisture content of the lignocellulosic particles before providing or preparing a mixture comprising lignocellulosic particles and a binder was measured according to DIN EN 322:1993-08 by placing the lignocellulosic particles in a drying oven at a temperature of 103 ± 2 °C until constant mass has been reached, i.e. an oven-dry state of the lignocellulosic particles. This method is also be used to check the water content of the resulting mixtures comprising lignocellulosic particles and a binder.

### 1.4 The solid content of amino resins:

The solid content of amino resins (UF or MUF) was determined by weighing out 1 g of the amino resin in a weighing dish, drying it in a drying cabinet at 120° C for 2 hours and weighing the residue in a desiccator after it has been equilibrated to room temperature as described in Zeppenfeld, Grunwald, Klebstoffe in der Holz-und Möbelindustrie [Adhesives in the Wood and Furniture Industry], DRW Verlag, 2nd edition, 2005, page 286.

### 1.5 Thickness and density of the lignocellulosic composites (boards):

The thickness and the density of the lignocellulosic composites (boards) were measured according to DIN EN 323:1993-08 and is reported as the arithmetic average of ten 50 x 50 mm samples of the same board.

### 1.6 Transverse tensile strength of the boards ("internal bond strength"):

The transverse tensile strength of the lignocellulosic composites (boards) ("internal bond strength") was determined according to DIN EN 319:1993-08 and is reported as the arithmetic average of ten 50 x 50 mm samples of the same lignocellulosic composite (board).

### 1.7 Swelling in thickness ("24 h swelling"):

The swelling in thickness after 24 h ("24 h swelling") of the lignocellulosic composites (boards) was determined according to DIN EN 317:1993-08 and is reported as the arithmetic average often 50 x 50 mm samples of the same lignocellulosic composite (board).

### 1.8 Lightness:

The lightness of the lignocellulosic composites (boards) was determined with Minolta Spectrophotometer CM-3610A according to the CIELAB color system of DIN EN ISO 11664-4 under the following parameters (reported values are average values of 5 measurements at different points of each board):
- observation angle: 10°
- measuring geometry: d/8°
- light type: D 65
- illumination surface: 30.0 mm
- measuring surface: 25.4 mm

### 1.9 Surface and edge screw holding:

The surface screw holding and the edge screw holding of the lignocellulosic composites (boards) were determined according to IKEA's Test Method: specification no. IOS-TM-0057, Date: 2018-07-13, Version no: AA-2120821-1.

### 1.10 Ratio of the weight of the solid content of all binder components present for hardening via esterification to the weight of the lignocellulosic particles in an oven-dry state (binder amount):

The ratio of the weight of the solid content of all binder components present for hardening via esterification to the weight of the lignocellulosic particles in an oven-dry state (binder amounts) in the examples according to the present invention are reported as the total weight of the sum of the respective binder components present for hardening the binder via esterification. Such components are polymer or monomer compounds having two or more hydroxy groups, polymer or monomer compounds having two or more carboxyl groups and compounds having at least one carboxyl group and at least one hydroxy group. Other additional compounds such as alkali salts and alkaline earth salts, hydrophobizing agents, dyes, pigments, antifungal agents, antibacterial agents, rheology modifiers, fillers, release agents, surfactants and tensides are not included. The ratios of the weight of the solid content of all binder components present for hardening via esterification to the weight of the lignocellulosic particles in an oven-dry state (binder amounts) are given in wt.-% based on the weight of the lignocellulosic particles in an oven-dry state.

The ratios of the weight of the solid content of the binder components to the weight of the lignocellulosic particles in an oven-dry state (binder amounts) in the comparative examples with UF/MUF resins (Kaurit^{®} glues) are reported as the weight of the UF/MUF resin solids in wt.-% based on the weight of the lignocellulosic particles in an oven-dry state.

### 1.11 Measuring of pH values

The pH values of the binders 28, 9 and 10 (as specified under item 5 below) with and without NaOH and/or NaNO₃ were measured at 23 ± 2 °C using an ISFET electrode (CPS441D) from Endres + Hauser.

### 2. Chemicals:

### 2.1 Components for hardening the binder via esterification:

### 2.1.1 Polymer or monomer compounds having two or more hydroxy groups:

Dextrose monohydrate ("Dex", > 99%), Sigma Aldrich, Spain
Fructose ("Fruc", > 99%), Sigma Aldrich, US
Saccharose ("Sacch", > 99%) Sigma Aldrich, Germany
Glycerol ("Glycerine", "Gly", > 99%), Cremer OLEA, Germany
Maltodextrin ("MD", dextrose equivalent 13.0 - 17.0), Sigma Aldrich, USA
Triethanolamine ("TEtA", 98%), Sigma Aldrich
Emsol K85, hydroxypropyl starch ("mod. starch", solid content 83%), Emsland, Germany (a modified starch)
Potato starch ("Pot. starch", 100 %), Sigma Aldrich, Germany (a non-hydrolzed starch)

### 2.1.2 Polymer or monomer compounds having two or more carboxyl groups:

Citric acid monohydrate (> 99%), Bernd Kraft, Austria (monomer compound)
DL-Malic acid ("MalA", > 99%), Acros, Deutschland (monomer compound)

### 2.1.3 Compounds having at least one carboxyl group and at least one hydroxy group:

Lactic acid ("LA", 88%), Fisher Scientific, Spain

### 2.1.4 Polymers comprising multiple carboxyl groups:

Copolymer A: 44.5 wt.-% aqueous solution of a copolymer consisting of 75 wt.-% of acrylic acid units and 25 wt.-% of maleic acid units with a weight average molecular weight of 58,600 g/mol.
Copolymer B: 50 wt.-% aqueous solution of a copolymer consisting of 50 wt.-% of acrylic acid units ("AA") and 50 wt.-% of maleic acid units ("MA") with a weight average molecular weight of 3,130 g/mol.
Copolymer C: 50 wt.-% aqueous solution of a copolymer consisting of 70 wt.-% of acrylic acid units ("AA") and 30 wt.-% of maleic acid units ("MA"), partially neutralized (pH 4.0), with a weight average molecular weight of 91,600 g/mol.
Homopolymer D: 50 wt.-% aqueous solution of a homopolymer of acrylic acid with a weight average molecular weight of 28,200 g/mol.
Homopolymer E: 35 wt.-% aqueous solution of a homopolymer of acrylic acid with a weight average molecular weight of 175,000 g/mol.

### 2.1.5 Polymers comprising multiple hydroxy groups:

Mowiol 8-88 Poly(vinyl alcohol), Mw ca. 67,000 g/mol, Sigma Aldrich

### 2.2 Additional binder compounds:

HydroWax 138 (60% paraffin in water), Sasol Wax GmbH
Ammonium nitrate (> 98%), Sigma Aldrich

### 2.3 Urea formaldehyde resins (comparative binders):

Kaurit Glue 347 ("KL 347", 66% solid content), urea formaldehyde resin, BASF SE

### 3. Lignocellulosic particles (wood chips and fibers):

### 3.1 Spruce wood chips (lignocellulosic particles):

The spruce wood chips were produced in a disc chipper. Spruce trunk sections (length 250 mm) from Germany were pressed with the long side against a rotating steel disc, into which radially and evenly distributed knife boxes are inserted, each of which consists of a radially arranged cutting knife and several scoring knives positioned at right angles to it. The cutting knife separates the chip from the round wood and the scoring knives simultaneously limit the chip length. Afterwards the produced chips were collected in a bunker and from there they were transported to a cross beater mill (with sieve insert) for reshredding with regard to chip width. Afterwards the reshredded chips were conveyed to a flash drier and dried at approx. 120 °C. The spruce wood chips were then screened into two useful fractions (B: ≤ 2.0 mm x 2.0 mm and > 0.32 mm x 0.5 mm; C: ≤ 4.0 mm x 4.0 mm and > 2.0 mm x 2.0 mm), a coarse fraction (D: > 4.0 mm x 4.0 mm), which is reshredded, and a fine fraction (A: ≤ 0.32 mm x 0.5 mm).

Fraction B of the spruce wood chips (hereafter referred to as "spruce surface layer chips") is used in the surface layer of three-layered chipboards. A mixture of 60 wt.-% of fraction B and 40 wt.-% of fraction C of the spruce wood chips (hereafter referred to as "spruce core layer chips") is either used in the core layer of three-layered chipboards or in single-layered chipboards.

### 3.2 Industrial wood chips (lignocellulosic particles):

The industrial wood chips ("industrial surface layer chips" and "industrial core layer chips") were produced in a Slovakian industrial chipboard production plant. The industrial wood chips were dried at approx. 120 °C before use in a convection oven.

### 3.3 Spruce wood fibers (lignocellulosic particles):

The spruce pulp was produced in a laboratory refining plant. An integrated steep conveyor transported the chips made from German spruce into the plant's preheater. Directly from the preheater, a continuously operating plug screw with integrated dewatering (MSD-Multi Screw Device) conveyed the material to be defibered into the pressure area of the plant. The material to be defibered was then plasticized in the digester at a digestion pressure of 9 bar under constant movement (3 - 4 min dwell time) and continuously conveyed to the refiner via a discharge screw and defibered. From the refiner, the spruce wood fibers came via the tangential outlet and the blow-line to the flash tube dryer and were dried.

### 4. Preparation of polyesters having two or more carboxyl groups - CA/Gly polyester ("CA/Gly PE"):

A mixture of 1750 g of citric acid monohydrate and 450 g of glycerol was stirred under nitrogen atmosphere and heated (oil bath temperature = 142 °C). Water was distilled off for one hour. Vacuum was applied (600 mbar) and distillation of water was continued for another hour. The residue was analyzed (acid number = 364 mg KOH/g and Mw = 770 g/mol). Water was added to get a 50 wt.-% solution of CA/Gly polyester in water.

### 5. Preparation of binders:

### 5.1 Preparation of comparative binders:

*Binder 1 (comparative):* A solution of 4.02 g ammonium nitrate dissolved in 93.8 g of water was added under stirring at room temperature to 200 g of Kaurit Glue 347. The resulting concentration of binder solids is 45.0 wt.-% (ammonium nitrate is not counted as binder solid).

### 5.2 Preparation of binders comprising as components for hardening the binder via esterification at least one, two or more compounds having two or more hydroxy groups and additionally one, two or more compounds having two or more carboxyl groups.

### 5.2.1 Binders (c1) comprising as components for hardening via esterification one, two or more polymers comprising multiple carboxyl groups, and for crosslinking said polymers one, two or more polymer or monomer compounds having two or more hydroxy groups:

*Binder 2:* Binder 2 is the mixture of 200 g of Copolymer A (44.5 wt.-% in water), 22.3 g of triethanolamine ("TEtA") and 25.0 g of water. The resulting solid content of all binder components present for hardening via esterification is 45.0 wt.-%. The ratio by weight between Copolymer A and TEtA is 80:20.

*Binder 3:* Binder 3 is the mixture of 200 g of Copolymer A (44.5 wt.-% in water), 22.3 g of glycerol ("Gly") and 25.0 g of water. The resulting solid content of all binder components present for hardening via esterification is 45.0 wt.-%. The ratio by weight between Copolymer A and Gly is 80:20.

*Binder 4:* Binder 4 is the mixture of 200 g of Copolymer A (44.5 wt.-% in water), 38.1 g of glycerol ("Gly") and 44.4 g of water. The resulting solid content of all binder components present for hardening via esterification is 45.0 wt.-%. The ratio by weight between Copolymer A and Gly is 70:30.

*Binder 5:* Binder 5 is the mixture of 200 g of Copolymer A (44.5 wt.-% in water), 59.3 g of glycerol ("Gly") and 70.3 g of water. The resulting solid content of all binder components present for hardening via esterification is 45.0 wt.-%. The ratio by weight between Copolymer A and Gly is 60:40.

*Binder 6:* Binder 6 is the mixture of 200 g of Copolymer A (44.5 wt.-% in water), 89.0 g of glycerol ("Gly") and 107.5 g of water. The resulting solid content of all binder components present for hardening via esterification is 45.0 wt.-%. The ratio by weight between Copolymer A and Gly is 50:50.

*Binder* 7: Binder 7 is the mixture of 200 g of Copolymer A (44.5 wt.-% in water), 41.9 g of dextrose monohydrate (corresponding to 38.1 g of dextrose "Dex") and 40.6 g of water. The resulting solid content of all binder components present for hardening via esterification is 45.0 wt.-%. The ratio by weight between Copolymer A and Dex is 70:30.

*Binder 8:* Binder 8 is the mixture of 57.1 g of Copolymer A (44.5 wt.-% in water), 127 g of Copolymer B (50 wt.-% in water), 38.1 g of glycerol ("Gly") and 60.0 g of water. The resulting solid content of all binder components present for hardening via esterification is 45.0 wt.-%. The ratio by weight between Copolymer A, Copolymer B and Gly is 20:50:30.

### 5.2.2 Binders (c1) comprising as components for hardening via esterification one, two or more polymers comprising multiple carboxyl groups, and for crosslinking said polymers one, two or more polymer or monomer compounds having two or more hydroxy groups, wherein the binder comprises as an additional component for hardening the binder via esterification one or more non-polymeric compounds having two or more carboxyl groups and/or one or more non-polymeric compounds having at least one carboxyl group and at least one hydroxy group:

*Binder 11:* Binder 11 is the mixture of 500 g of Copolymer A (44.5 wt.-% in water), 47.3 g of citric acid monohydrate (corresponding to 43.3 g citric acid "CA"), 73.3 g of dextrose monohydrate (corresponding to 66.6 g of dextrose "Dex") and 118 g of water. The resulting solid content of all binder components present for hardening via esterification is 45.0 wt.-%. The ratio by weight between Copolymer A, CA and Dex is 67:13:20.

*Binder 12:* Binder 12 is the mixture of 500 g of Copolymer A (44.5 wt.-% in water), 47.3 g of citric acid monohydrate (corresponding to 43.3 g citric acid "CA"), 66.6 g of glycerol ("Gly") and 125 g of water. The resulting solid content of all binder components present for hardening via esterification is 45.0 wt.-%. The ratio by weight between Copolymer A, CA and Gly is 67:13:20.

*Binder 13:* Binder 13 is the mixture of 500 g of Copolymer A (44.5 wt.-% in water), 97.6 g of citric acid monohydrate (corresponding to 89.2 g citric acid "CA"), 134 g of glycerol ("Gly") and 258 g of water. The resulting solid content of all binder components present for hardening via esterification is 45.0 wt.-%. The ratio by weight between Copolymer A, CA and Gly is 50:20:30.

*Binder 14:* Binder 14 is the mixture of 250 g of Copolymer A (44.5 wt.-% in water) and 223 g of Copolymer B (50 wt.-% in water), 97.6 g of citric acid monohydrate (corresponding to 89.2 g citric acid "CA"), 134 g of glycerol ("Gly") and 285 g of water. The resulting solid content of all binder components present for hardening via esterification is 45.0 wt.-%. The ratio by weight between Copolymer A, Copolymer B, CA and Gly is 25:25:20:30.

*Binder 15:* Binder 15 is the mixture of 500 g of Copolymer A (44.5 wt.-% in water), 97.6 g of citric acid monohydrate (corresponding to 89.2 g citric acid "CA"), 147 g of dextrose monohydrate (corresponding to 134 g of dextrose "Dex") and 245 g of water. The resulting solid content of all binder components present for hardening via esterification is 45.0 wt.-%. The ratio by weight between Copolymer A, CA and Dex is 50:20:30.

*Binder 16:* Binder 16 is the mixture of 500 g of Copolymer A (44.5 wt.-% in water), 97.6 g of citric acid monohydrate (corresponding to 89.2 g citric acid "CA"), 134 g of saccharose ("Sacch") and 258 g of water. The resulting solid content of all binder components present for hardening via esterification is 45.0 wt.-%. The ratio by weight between Copolymer A, CA and Sacch is 50:20:30.

*Binder 17*: Binder 17 is the mixture of 500 g of Copolymer A (44.5 wt.-% in water), 97.6 g of citric acid monohydrate (corresponding to 89.2 g citric acid "CA"), 134 g of fructose ("Fruc") and 258 g of water. The resulting solid content of all binder components present for hardening via esterification is 45.0 wt.-%. The ratio by weight between Copolymer A, CA and Fruc is 50:20:30.

*Binder 18:* Binder 18 is the mixture of 500 g of Copolymer A (44.5 wt.-% in water), 97.6 g of citric acid monohydrate (corresponding to 89.2 g citric acid "CA"), 134 g of maltodextrin ("MD") and 258 g of water. The resulting solid content of all binder components present for hardening via esterification is 45.0 wt.-%. The ratio by weight between Copolymer A, CA and MD is 50:20:30.

*Binder 19:* Binder 19 is the mixture of 500 g of Copolymer A (44.5 wt.-% in water), 89.2 g of malic acid ("MalA"), 134 g of glycerol ("Gly") and 266 g of water. The resulting solid content of all binder components present for hardening via esterification is 45.0 wt.-%. The ratio by weight between Copolymer A, MalA and Gly is 50:20:30.

*Binder 20:* Binder 20 is the mixture of 500 g of Copolymer A (44.5 wt.-% in water), 48.8 g of citric acid monohydrate (corresponding to 44.6 g citric acid "CA"), 44.6 g of malic acid, 134 g of glycerol ("Gly") and 262 g of water. The resulting solid content of all binder components present for hardening via esterification is 45.0 wt.-%. The ratio by weight between Copolymer A, CA, MalA and Gly is 50:10:10:30.

*Binder 21:* Binder 21 is the mixture of 500 g of Copolymer A (44.5 wt.-% in water), 48.8 g of citric acid monohydrate (corresponding to 44.6 g citric acid "CA"), 44.6 g of lactic acid ("LA"), 134 g of glycerol ("Gly") and 262 g of water. The resulting solid content of all binder components present for hardening via esterification is 45.0 wt.-%. The ratio by weight between Copolymer A, CA, LA and Gly is 50:10:10:30.

*Binder 22:* Binder 22 is the mixture of 500 g of Copolymer C (44.5 wt.-% in water, pH 4), 97.6 g of citric acid monohydrate (corresponding to 89.2 g citric acid "CA"), 134 g of glycerol ("Gly") and 258 g of water. The resulting solid content of all binder components present for hardening via esterification is 45.0 wt.-%. The ratio by weight between Copolymer C, CA and Gly is 50:20:30.

*Binder 23:* Binder 23 is the mixture of 445 g of Homopolymer D (50 wt.-% in water), 47.3 g of citric acid monohydrate (corresponding to 43.3 g citric acid "CA"), 66.6 g of glycerol ("Gly") and 180 g of water. The resulting solid content of all binder components present for hardening via esterification is 45.0 wt.-%. The ratio by weight between Homopolymer D, CA and Gly is 67:13:20.

*Binder 24:* Binder 24 is the mixture of 636 g of Homopolymer E (35 wt.-% in water), 97.6 g of citric acid monohydrate (corresponding to 89.2 g citric acid "CA"), 134 g of glycerol ("Gly") and 122 g of water. The resulting solid content of all binder components present for hardening via esterification is 45.0 wt.-%. The ratio by weight between Homopolymer E, CA and Gly is 50:20:30.

### 5.2.3 Binders comprising as components for hardening the binder via esterification at least one, two or more compounds having two or more hydroxy groups and additionally one, two or more compounds having two or more carboxyl groups and one, two or more polyesters having two or more carboxyl groups:

*Binder 25:* Binder 25 is the mixture of 500 g of Copolymer A (44.5 wt.-% in water), 178 g of CA/Gly PE (50 wt.-% in water), 134 g of glycerol ("Gly") and 177 g of water. The resulting solid content of all binder components present for hardening via esterification is 45.0 wt.-%. The ratio by weight between Copolymer A, CA/Gly PE and Gly is 50:20:30.

### 5.2.4 Binders (c2) comprising as components for hardening via esterification one, two or more polymers comprising multiple hydroxy groups, and for crosslinking said polymers one, two or more polymer or monomer compounds having two or more carboxyl groups:

*Binder 9*: 1334 g of copolymer B (50 wt.-% in water) and 110 g of water were heated to 87 °C. 429 g of Emsol K85 (corresponding to 356 g solids of hydroxypropyl starch) was added at 87 °C under stirring in small portions. Stirring at 87 °C was continued for 15 min. The resulting clear solution was cooled to room temperature and water was added for adjusting to a solid content of all binder components present for hardening via esterification of 45.0 wt.-%. The ratio by weight between Copolymer B and hydroxypropyl starch is 65:35.

*Binder 10:* 1334 g of Copolymer B (50 wt.-% in water), 266 g of citric acid monohydrate (corresponding to 243 g citric acid "CA") and 110 g of water were heated to 87 °C. 429 g of Emsol K85 (corresponding to 356 g solids of hydroxypropyl starch) is added at 87 °C under stirring in small portions. Stirring at 87 °C was continued for 15 min. The resulting clear solution was cooled to room temperature and water was added for adjusting to a solid content of all binder components present for hardening via esterification of 45 wt.-%. The ratio by weight between Copolymer B, CA and hydroxypropyl starch is 53:19:28.

*Binder 26:* 35.8 g of water was heated to 80 °C and 11.2 g of Mowiol 8-88 was added in portions under intense stirring. After 2 h at 80 °C the solution was cooled to room temperature and 200 g of CA/Gly PE (50 wt.-% in water) was added. The resulting solid content of all binder components present for hardening via esterification is 45.0 wt.-%. The ratio by weight between Mowiol 8-88 and CA/Gly PE is 10:90.

*Binder 27:* 129 g of water was heated to 80 °C and 11.2 g of Mowiol 8-88 was added in portions under intense stirring. After 2 h at 80 °C the solution was cooled to room temperature and 85.3 g of citric acid monohydrate (corresponding to 78.0 g citric acid "CA") and 22.0 g of glycerol ("Gly") were added. The resulting solid content of all binder components present for hardening via esterification is 45.0 wt.-%. The ratio by weight between Mowiol 8-88, CA and Gly is 10:70:20.

*Binder 40:* 30 g of Maltodextrin was added under stirring to 193 g water at room temperature. After stirring at 80 °C for 30 min, the mixture was cooled to room temperature and 32.8 g of citric acid monohydrate (corresponding to 30.0 g citric acid "CA"), 60.0 g of glycerol ("Gly") and 270 g of of Copolymer A (44.5 wt.-% in water) were added under stirring. The resulting solid content of all binder components present for hardening via esterification is 41.0 wt.-%. The ratio by weight between Copolymer A, CA, Maltodextrin and Gly is 50:12.5:12.5:25.

For the binders 41 to 43 a 30 wt.-%, an aqueous solution of Emsol K85 was used, which was prepared by adding Emsol K85 under stirring to water at room temperature and heating the mixture to 90 °C for 60 min.

*Binder 41:* 100 g of a solution of Emsol K85 ("mod. Starch", 30 wt-% in water) was mixed with 123 g of water, 32.8 g of citric acid monohydrate (corresponding to 30.0 g citric acid "CA"), 60.0 g of glycerol ("Gly") and 270 g of of Copolymer A (44.5 wt.-% in water). The resulting solid content of all binder components present for hardening via esterification is 41.0 wt.-%. The ratio by weight between Copolymer A, CA, mod. Starch and Gly is 50:12.5:12.5:25.

*Binder 42:* 100 g of a solution of Emsol K85 ("mod. Starch", 30 wt-% in water) was mixed with 62.5 g of water, 32.8 g of citric acid monohydrate (corresponding to 30.0 g citric acid "CA"), 30.0 g of glycerol ("Gly") and 67,5 g of of Copolymer A (44.5 wt.-% in water). The resulting solid content of all binder components present for hardening via esterification is 41.0 wt.-%. The ratio by weight between Copolymer A, CA, mod. Starch and Gly is 25:25:25:25.

*Binder 43:* 200 g of a solution of Emsol K85 ("mod. Starch", 30 wt-% in water) was mixed with 36.0 g of water, 32.8 g of citric acid monohydrate (corresponding to 30.0 g citric acid "CA"), 30.0 g of glycerol ("Gly") and 67.5 g of of Copolymer A (44.5 wt.-% in water). The resulting solid content of all binder components present for hardening via esterification is 41.0 wt.-%. The ratio by weight between Copolymer A, CA, mod. Starch and Gly is 40:20:20:20.

*Binder 44:* 15.0 g of potato starch ("Pot. Starch"), 16.4 g of citric acid monohydrate (corresponding to 15.0 g citric acid "CA"), 30.0 g of glycerol ("Gly") and 98.6 g of water was mixed and heated to 87 °C. After becoming clear, the solution is cooled to room temperature and is mixed with 160 g of Copolymer A (44.5 wt.-% in water). The resulting solid content of all binder components present for hardening via esterification is 41.0 wt.-%. The ratio by weight between Copolymer A, CA, Pot. Starch and Gly is 54:11:11:23.

*Binder 45:* 15.0 g of potato starch ("Pot. Starch"), 16.4 g of citric acid monohydrate (corresponding to 15.0 g citric acid "CA"), 30.0 g of glycerol ("Gly") and 120 g of water was mixed and heated to 87 °C. After becoming clear, the solution is cooled to room temperature and is mixed with 160 g of Copolymer B (50 wt.-% in water). The resulting solid content of all binder components present for hardening via esterification is 41.0 wt.-%. The ratio by weight between Copolymer B, CA, Pot. Starch and Gly is 57:11:11:21.

*Binder 46:* 15.0 g of potato starch ("Pot. Starch"), 30.0 g of of CA/Gly polyester ("CA/Gly PE", 50 wt.-% in water), 30.0 g of glycerol ("Gly") and 106 g of water was mixed and heated to 87 °C. After becoming clear, the solution is cooled to room temperature and is mixed with 160 g of Copolymer B (50 wt.-% in water). The resulting solid content of all binder components present for hardening via esterification is 41.0 wt.-%. The ratio by weight between Copolymer B, CA/Gly PE, Pot. Starch and Gly is 57:11:11:21.

### 5.2.5 Binders (c1) comprising as components for hardening via esterification one, two or more polymers comprising multiple carboxyl groups, and for crosslinking said polymers one, two or more polymer or monomer compounds having two or more hydroxy groups, wherein binders 28, 30 and 31 comprise as an additional component for hardening the binder via esterification one or more non-polymeric compounds having two or more carboxyl groups:

*Binder 28:* Binder 28 is the mixture of 300 g of Copolymer A (44.5 wt.-% in water), 73.3 g of citric acid monohydrate (corresponding to 67.0 g citric acid "CA"), 67.0 g of glycerol ("Gly") and 154 g of water. The resulting solid content of all binder components present for hardening via esterification is 45.0 wt.-%. The ratio by weight between Copolymer A, CA and Gly is 50:25:25.

*Binder 29:* Binder 29 is the mixture of 200 g of Copolymer A (44.5 wt.-% in water), 32.9 g of glycerol ("Gly") and 38.0 g of water. The resulting solid content of all binder components present for hardening via esterification is 45.0 wt.-%. The ratio by weight between Copolymer A and Gly is 73:27.

*Binder 30:* Binder 30 is the mixture of 500 g of Copolymer A (44.5 wt.-% in water), 122 g of citric acid monohydrate (corresponding to 112 g citric acid "CA"), 112 g of glycerol ("Gly") and 257 g of water. The resulting solid content of all binder components present for hardening via esterification is 45.0 wt.-%. The ratio by weight between Copolymer A, CA and Gly is 50:25:25.

*Binder 31:* Binder 31 is the mixture or 223 g of Copolymer A (44.5 wt.-% in water), 250 g of citric acid monohydrate (corresponding to 229 g citric acid "CA", 35.0 g of glycerol ("Gly") and 298 g of water. The resulting solid content of all binder components present for hardening via esterification is 45.0 wt.-%. The ratio by weight between Copolymer A, CA and Gly is 27:63:10.

### 6. Preparation of single-layer or multilayer lignocellulosic composites (chip-boards and fiberboards):

### 6.1 10 mm single-layer chipboards (Boards No. 1 to 30):

### 6.1.a Providing or preparing a mixture at least comprising lignocellulosic particles and a binder:

10 mm single-layer chipboards (Boards No. 1 to 30) were prepared with 0.5 wt.-% paraffin amount (mass ratio of the weight of paraffin to the weight of the lignocellulosic particles in an oven-dry state).

A mixture of 6.70 g of Hydrowax 138 (60 wt.-% paraffin in water) and 12.7 g of water was sprayed within 1 min to 816 g (800 g dry weight) of spruce core layer chips (moisture content 2.0 %) while mixing in a paddle mixer. Subsequently, for a binder amount of 6.0 wt.-% (ratio of the weight of the solid content of all binder components present for hardening via esterification to the weight of the lignocellulosic particles in an oven-dry state) 107 g of the respective binder (binder 1 to binder 26 with a solid content of all binder components present for hardening via esterification of 45 wt.-%) or 117 g of the respective binder (binder 40 to binder 46 with a solid content of all binder components present for hardening via esterification of 41 wt.-%) was sprayed to this mixture within 1 min while mixing. Alternatively, for a binder amount of 4.0 wt.-% (ratio of the weight of the solid content of all binder components present for hardening via esterification to the weight of the lignocellulosic particles in an oven-dry state) a mixture of 71.1 g of binder (with a solid content of all binder components present for hardening via esterification of 45 wt.-%) and 17.9 g of water was sprayed to this mixture within 1 min while mixing. After completion of the spraying, mixing in the mixer was continued for 15 sec and the respective mixtures comprising lignocellulosic particles and a binder were obtained.

### 6.1.b Compacting the mixture:

After 30 min, 834 g of the resulting mixtures comprising lignocellulosic particles and a binder were scattered into a 320 mm x 380 mm mold and pre-pressed (compacted) under ambient conditions and a pressure of 1.2 N/mm² resulting in a pre-pressed chip mat (compacted mixture).

### 6.1. c Applying a high-frequency electrical field to the mixture during and/or after compacting, so that the binder hardens via esterification of said compounds and binds the lignocellulosic particles, so that a single-layer lignocellulosic composite results:

Subsequently, the pre-pressed chip mat (compacted mixture) thus obtained was removed from the mold. For monitoring the temperature in the center of said (compacted) mixture, i.e. in the approximate middle of the mat, a temperature sensor was introduced into the center of said pre-pressed chip mat. Nonwoven separators were then provided to the upper and lower side of the pre-pressed chip mat. The pre-pre-pressed chip mat was inserted in a HLOP 170 press from Hoefer Presstechnik GmbH, whereby a birch plywood (thickness 6 mm) was placed between the nonwoven separator and the press plate on each side of the mat.

The pre-pressed chip mat was then compacted to 10 mm thickness in a in the press within a period of 2 s, and then heated by applying a high-frequency electrical field (27.12 MHz) while the press was remaining closed. When 170 °C ("HF temperature") was reached in the center, the press was opened.

*6.1.d* After 3 d at ambient conditions the resulting single-layer chipboards (single-layer lignocellulosic composites) were sanded. 0.25 mm were sanded off on both the top and bottom side of the single-layer chipboard. After conditioning (at 65% humidity and 20° C) to constant mass, the thickness and density, the internal bond and the 24 h swelling of the resulting single-layer chipboards were determined (according to the measuring methods described above).

Table 1 shows the respective binder composition and binder amount (ratio of the weight of the solid content of all binder components present for hardening via esterification to the weight of the lignocellulosic particles in an oven-dry state) used, the press time (time until 170 °C ("HF temperature") was reached in the center of the mixture), the thickness, the density, the internal bond and the 24 h swelling of the resulting 10 mm single-layer chipboards No. 1-30, wherein boards No. 1 and 2 are comparative examples.

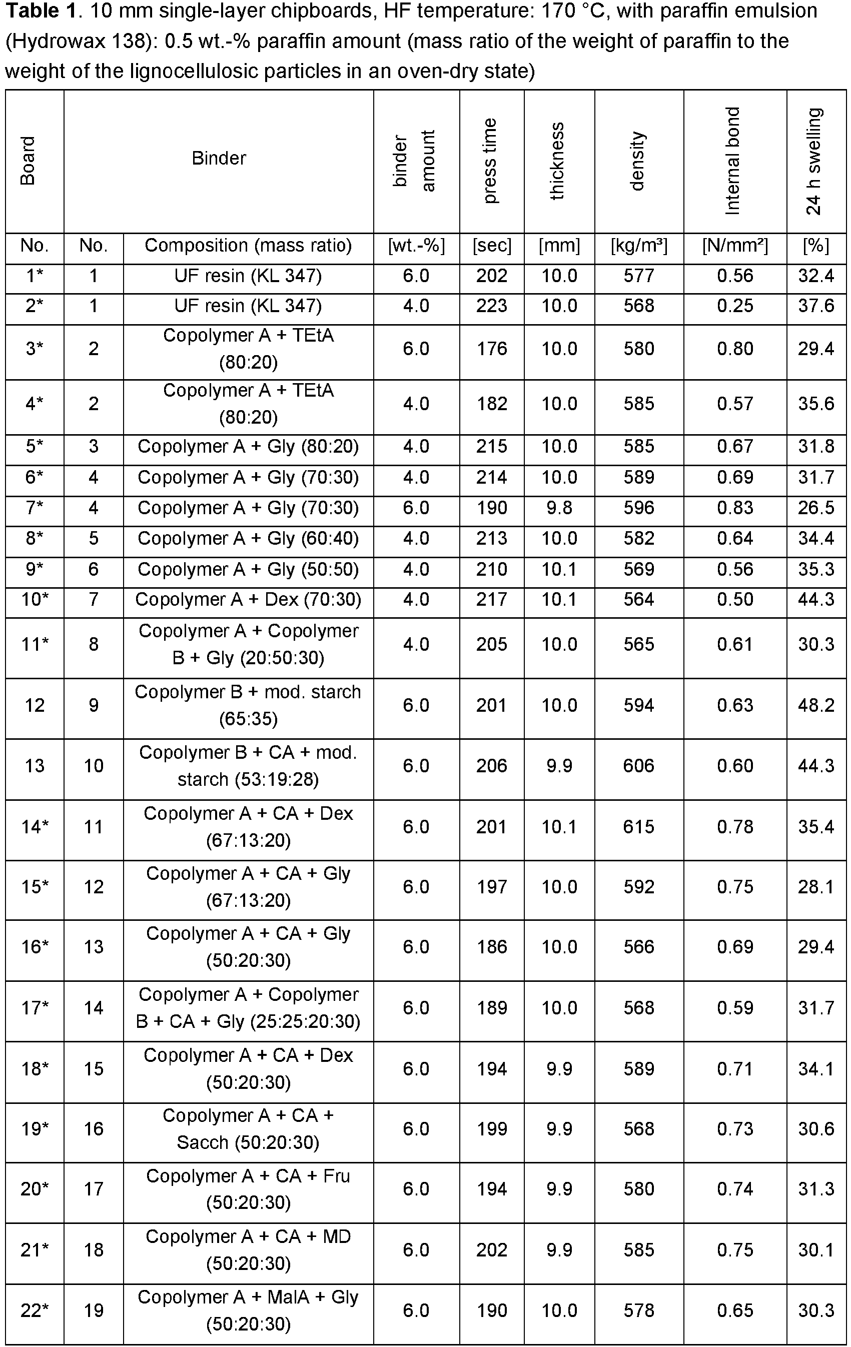

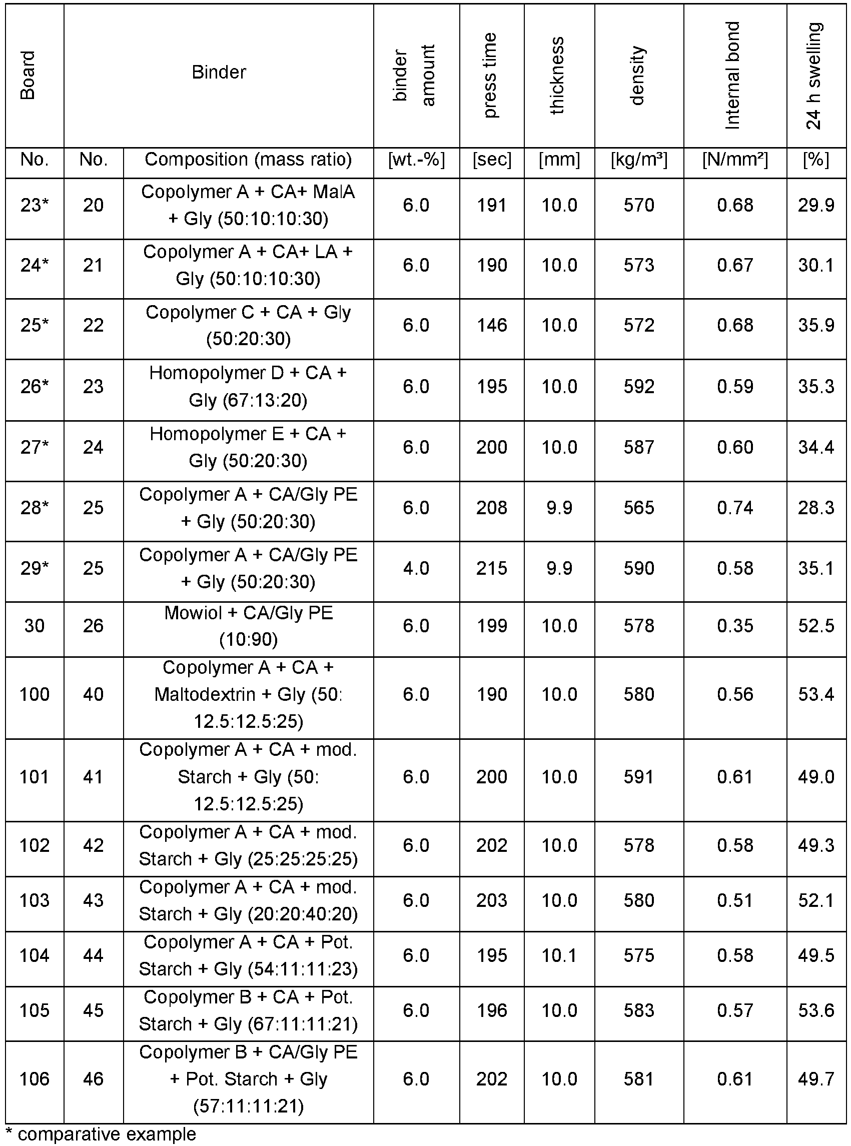

The results show that a lignocellulosic composite was prepared according to a process of the present invention, wherein the lignocellulosic composite is a 10 mm single-layer chipboard (Boards No. 3-30). This single-layer lignocellulosic composite i) has a thickness in the range of from 5 to 20 mm and ii) has an internal bond strength, determined according to DIN EN 319:1993-08, of at least 0.3 N/mm² and iii) has a thickness swelling after 24 hours in water at 20 °C, determined according to DIN EN 317:1993-08, of less than 60 %.

Comparative examples (Boards No. 1 and 2), which have been prepared with a urea formaldehyde resin as a binder and thus comprise binder components solely obtained from petrochemical resources and wherein the binder contains hazardous substances (in particular formaldehyde as toxic VOCs) require about the same or longer press times (up to 223 s for Board No. 2) and also feature similar or lower internal bond strengths, determined according to DIN EN 319:1993-08 (only 0.25 N/mm² for Board No. 2).

### 6.2 10 mm single-layer chipboards (Boards No. 33 to 36):

### 6.2.a Providing or preparing a mixture at least comprising lignocellulosic particles and a binder:

Further 10 mm single-layer chipboards (Boards No. 31 to 36) were prepared without paraffin (Boards No. 31, 33 and 35) and with a paraffin amount of 1.0 wt.-% (Boards No. 32, 34 and 36) (mass ratio of the weight of paraffin to the weight of the lignocellulosic particles in an oven-dry state).

Therefore, for the examples with a paraffin amount of 1.0 wt.-% a mixture of 13.3 g of Hydrowax 138 (60 wt.-% paraffin in water) and 16.2 g of water was sprayed within 1 min to 816 g (800 g dry weight) of spruce core layer chips (moisture content 2.0 %) while mixing in a paddle mixer. Alternatively, for the examples without paraffin 19.5 g of water was sprayed within 1 min to 816 g (800 g dry weight) of spruce core layer chips (moisture content 2.0 %) while mixing in a paddle mixer.

Subsequently, a mixture of 71.1 g of the respective binder (with a solid content of all binder components present for hardening via esterification of 45 wt.-%) and 12.7 g of water was sprayed to this mixture within 1 min while mixing. After completion of the spraying, mixing in the mixer was continued for 15 sec and the respective mixtures comprising lignocellulosic particles and a binder were obtained.

### 6.2.b/c Compacting the mixture and applying a high-frequency electrical field to the mixture during and/or after compacting, so that the binder hardens via esterification of said compounds and binds the lignocellulosic particles, so that a single-layer lignocellulosic composite results:

After 30 min, 834 g of this the resulting mixtures comprising lignocellulosic particles and a binder were pre-pressed and subsequently pressed to single-layer chipboards as described above (cf. procedure for Boards No. 1-30 described under 6.1.b and 6.1.c).

### 6.3 Comparison of lignocellulosic composites with varying paraffin amounts (0.0 wt.-%, 0.5 wt.-% and 1.0 wt.-% respectively):

Table 2 shows the respective binder composition and binder amount (ratio of the weight of the solid content of all binder components present for hardening via esterification to the weight of the lignocellulosic particles in an oven-dry state) used, the press time (time until 170 °C ("HF temperature") was reached in the center of the mixture), the thickness, the density, the internal bond and the 24 h swelling (determined according to the measuring methods described above) of the resulting 10 mm single-layer chipboards No. 2, 6, 11 and 31-36, wherein i.a. boards No. 2, 31 and 32 are comparative examples.

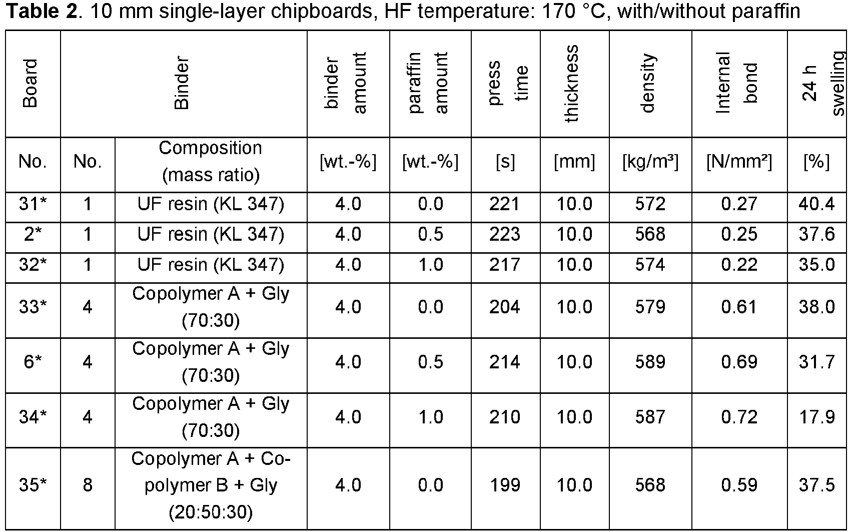

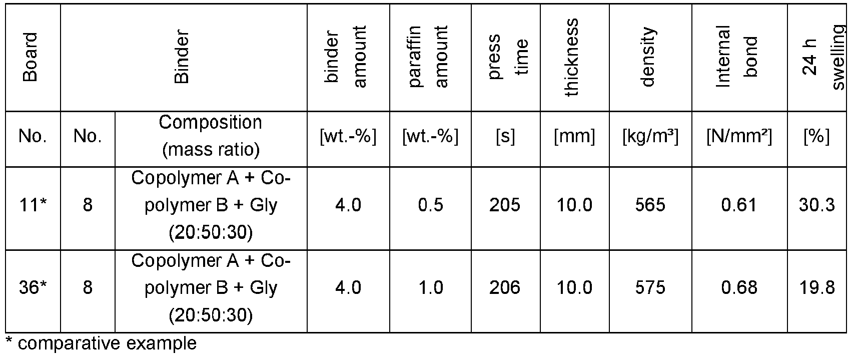

The results show that a lignocellulosic composite was prepared, wherein the lignocellulosic composite is a 10 mm single-layer chipboard (Boards No. 6, 11 and 33-36). This single-layer lignocellulosic composite i) has a thickness in the range of from 5 to 20 mm and ii) has an internal bond strength, determined according to DIN EN 319:1993-08, of at least 0.5 N/mm² and iii) has a thickness swelling after 24 hours in water at 20 °C, determined according to DIN EN 317:1993-08, of less than 40 %.

The results of Boards No. 6, 11 and 33-36 further show that the ratio of the weight of the solid content of all binder components present for hardening via esterification to the weight of the lignocellulosic particles in an oven-dry state can be as low as 4.0 %, still resulting in a lignocellulosic composite prepared according to a process of the present invention, i.e. by applying a high-frequency electrical field, with excellent properties.

The results also show that a mass ratio of the weight of paraffin to the weight of the lignocellulosic particles in an oven-dry state (paraffin amount) of 0.5 wt.-% and 1.0 wt.-% respectively, surprisingly leads to excellent properties of the resulting lignocellulosic composite, i.e. higher internal bond strength and lower thickness swelling.

Comparative examples (Boards No. 2, 31 and 32), which have been prepared with urea formaldehyde resin as a binder (in the same amount as the examples according to the present invention) and thus comprise binder components solely obtained from petrochemical resources and wherein the binder contains hazardous substances (in particular formaldehyde as toxic VOCs) require longer press times (217-223 s), feature lower internal bond strengths, determined according to DIN EN 319:1993-08 of only 0.22-0.27 N/mm² and higher thickness swelling values of up to 40.4 %.

### 6.4 10 mm single-layer chipboards (Boards No. 37 to 44):

### 6.4.a Providing or preparing a mixture at least comprising lignocellulosic particles and a binder:

Further 10 mm single-layer chipboards (Boards No. 37-44) were prepared with 0.5 wt.-% paraffin amount (mass ratio of the weight of paraffin to the weight of the lignocellulosic particles in an oven-dry state) and sodium hydroxide and/or sodium nitrate as additive (additional binder compound).

For board No. 37 6.70 g of Hydrowax 138 (60 wt.-% paraffin in water) and 12.7 g of water was sprayed within 1 min to 816 g (800 g dry weight) of spruce core layer chips (moisture content 2.0 %) while mixing in a paddle mixer. Subsequently, 107 g of binder 28 (with a solid content of all binder components present for hardening via esterification of 45 wt.-%) was sprayed to this mixture within 1 min while mixing.

For board No. 38 6.70 g of Hydrowax 138 (60 wt.-% paraffin in water) and 11.8 g of water was sprayed within 1 min to 816 g (800 g dry weight) of spruce core layer chips (moisture content 2.0 %) while mixing in a paddle mixer. Subsequently, a mixture of 107 g of binder 28 (with a solid content of all binder components present for hardening via esterification of 45 wt.-%) and 2.06 g of a sodium hydroxide (NaOH) solution (50 wt.-% NaOH in water) was sprayed to this mixture within 1 min while mixing.

For board No. 39 6.70 g of Hydrowax 138 (60 wt.-% paraffin in water) and 10.8 g of water was sprayed within 1 min to 816 g (800 g dry weight) of spruce core layer chips (moisture content 2.0 %) while mixing in a paddle mixer. Subsequently, a mixture of 107 g of binder 28 (with a solid content of all binder components present for hardening via esterification of 45 wt.-%) and 4.12 g of a sodium hydroxide (NaOH) solution (50 wt.-% NaOH in water) was sprayed to this mixture within 1 min while mixing.

For board No. 40 6.70 g of Hydrowax 138 (60 wt.-% paraffin in water) and 9.91 g of water was sprayed within 1 min to 816 g (800 g dry weight) of spruce core layer chips (moisture content 2.0 %) while mixing in a paddle mixer. Subsequently, a mixture of 107 g of binder 28 (with a solid content of all binder components present for hardening via esterification of 45 wt.-%) and 6.18 g of a sodium hydroxide (NaOH) solution (50 wt.-% NaOH in water) was sprayed to this mixture within 1 min while mixing.

For board No. 41 6.70 g of Hydrowax 138 (60 wt.-% paraffin in water) and 8.51 g of water was sprayed within 1 min to 816 g (800 g dry weight) of spruce core layer chips (moisture content 2.0 %) while mixing in a paddle mixer. Subsequently, a mixture of 107 g of binder 28 (with a solid content of all binder components present for hardening via esterification of 45 wt.-%) and 9.30 g of a sodium hydroxide (NaOH) solution (50 wt.-% NaOH in water) was sprayed to this mixture within 1 min while mixing.

For board No. 42 6.70 g of Hydrowax 138 (60 wt.-% paraffin in water) and 6.02 g of water was sprayed within 1 min to 816 g (800 g dry weight) of spruce core layer chips (moisture content 2.0 %) while mixing in a paddle mixer. Subsequently, a mixture of 107 g of binder 28 (with a solid content of all binder components present for hardening via esterification of 45 wt.-%), 6.18 g of a sodium hydroxide (NaOH) solution (50 wt.-% NaOH in water) and 8.70 g of a sodium nitrate (NaNOs) solution (50 wt.-% NaNOs in water) was sprayed to this mixture within 1 min while mixing.

For board No. 43 6.70 g of Hydrowax 138 (60 wt.-% paraffin in water) and 8.79 g of water was sprayed within 1 min to 816 g (800 g dry weight) of spruce core layer chips (moisture content 2.0 %) while mixing in a paddle mixer. Subsequently, a mixture of 107 g of binder 28 (with a solid content of all binder components present for hardening via esterification of 45 wt.-%) and 8.70 g of a sodium nitrate (NaNOs) solution (50 wt.-% NaNOs in water) was sprayed to this mixture within 1 min while mixing.

For board No. 44 6.70 g of Hydrowax 138 (60 wt.-% paraffin in water) and 4.91 g of water was sprayed within 1 min to 816 g (800 g dry weight) of spruce core layer chips (moisture content 2.0 %) while mixing in a paddle mixer. Subsequently, a mixture of 107 g of binder 28 (with a solid content of all binder components present for hardening via esterification of 45 wt.-%) and 17.4 g of a sodium nitrate (NaNOs) solution (50 wt.-% NaNOs in water) was sprayed to this mixture within 1 min while mixing.

### 6.4.b/c Compacting the mixture and applying a high-frequency electrical field to the mixture during and/or after compacting, so that the binder hardens via esterification of said compounds and binds the lignocellulosic particles, so that a single-layer lignocellulosic composite results:

30 min after completion of mixing, 834 g of the resulting mixtures comprising lignocellulosic particles and a binder were pressed to a chipboard as described above (cf. procedure for Boards No. 1-30 described under 6.1.b and 6.1.c).

Table 3 shows the respective binder composition and binder amount (ratio of the weight of the solid content of all binder components present for hardening via esterification to the weight of the lignocellulosic particles in an oven-dry state) used, the respective additive and additive amount used, the pH of the binder/additive mixture the press time (time until 170 °C ("HF temperature") was reached in the center of the mixture), the thickness, the density, the internal bond and the 24 h swelling (determined according to the measuring methods described above) of the resulting 10 mm one-layered chipboards No. 37-44 .

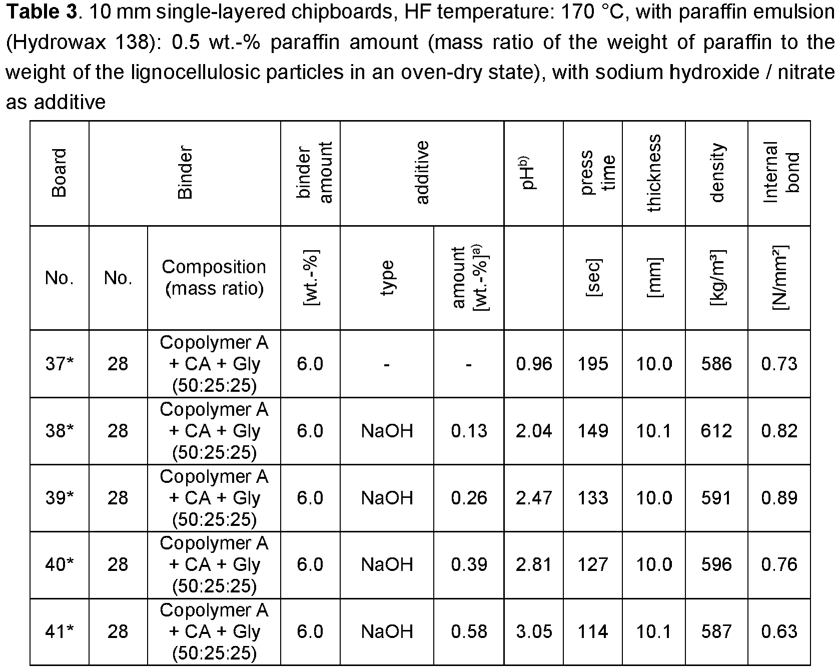

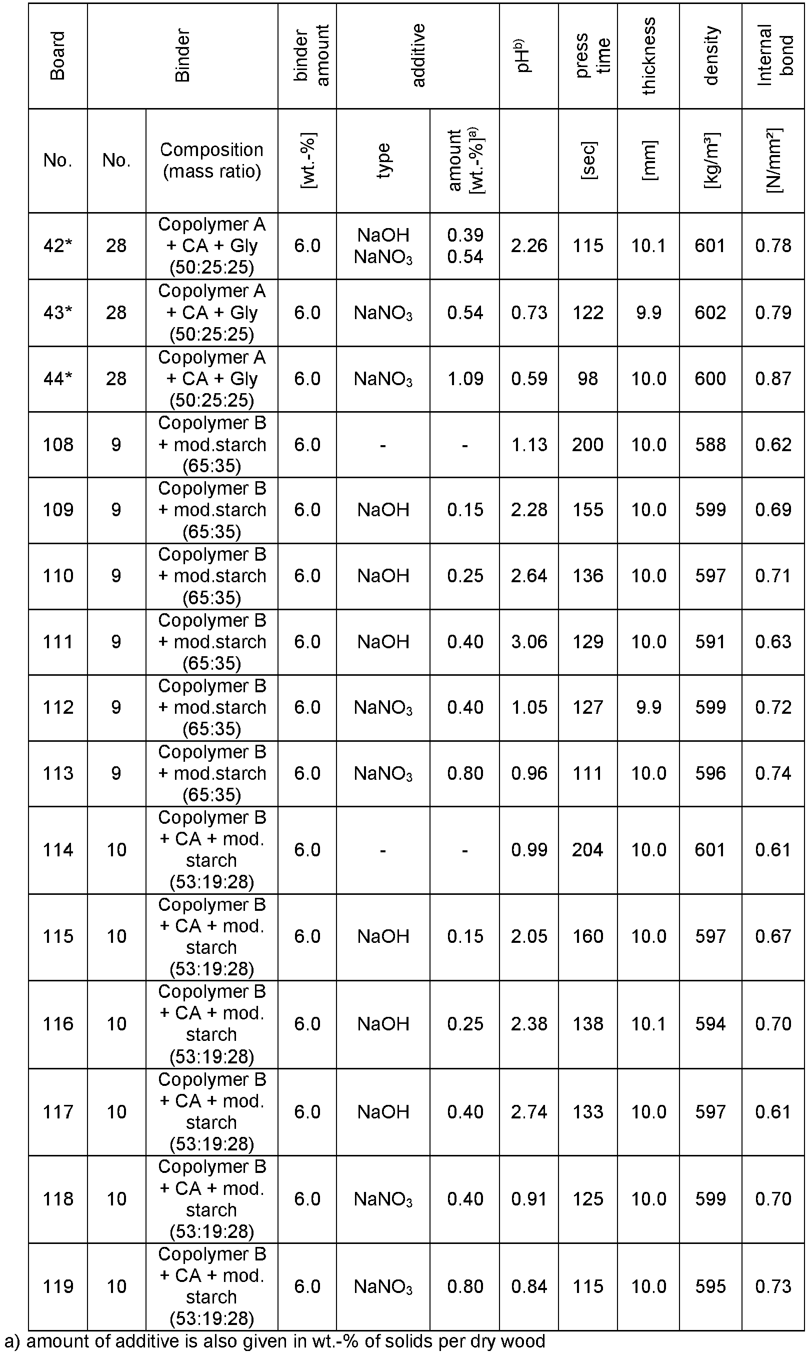

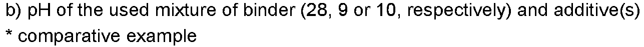

The results show that a lignocellulosic composite was prepared according to a process of the present invention, wherein the lignocellulosic composite is a 10 mm single-layer chipboard (Boards No. 37-44 and 108-119). This single-layer lignocellulosic composite i) has a thickness in the range of from 5 to 20 mm and ii) has an internal bond strength, determined according to DIN EN 319:1993-08, of at least 0.5 N/mm².

The results of Boards No. 37-44 further show that the binder mixture preferably has a pH in a range of from 0.5 to 3.5, and that the addition of sodium nitrate and/or sodium hydroxide to the binder leads to improved properties of the resulting lignocellulosic composite, especially in terms of a reduced press time of only 98-149 s.

### 6.5 18 mm single-layer chipboards (HF pressing versus hot pressing; Boards No. 45-50):

### 6.5.a Providing or preparing a mixture at least comprising lignocellulosic particles and a binder:

A mixture of 22.6 g of Hydrowax 138 (60 wt.-% paraffin in water) and 41.2 g of water was sprayed within 1 min to 2754 g (2700 g dry weight) of spruce core layer chips (moisture content 2.0 %) while mixing in a paddle mixer. Subsequently, a mixture of an amount x of binder 29 and an amount y of water were sprayed to this mixture within 1 min while mixing, the respective amounts x and y as well as the resulting binder amount (ratio of the weight of the solid content of all binder components present for hardening via esterification to the weight of the lignocellulosic particles in an oven-dry state) are shown in the following Table 4. After completion of the spraying, mixing in the mixer was continued for 15 sec and the respective mixtures comprising lignocellulosic particles and a binder were obtained.

**Table 4.**

| Board No. | x (amount of binder 29) [g] | y (amount of water) [g] | binder amount [wt.-%] |
|---|---|---|---|
| 45* | 132 | 115 | 2.2 |
| 46* and 48* | 210 | 76.0 | 3.5 |
| 47* and 49* | 270 | 47.0 | 4.5 |
| 50* | 360 | 0 | 6.0 |

### 6.5. b Compacting the mixture:

After 30 min, 1370 g of the resulting mixtures comprising lignocellulosic particles and a binder were scattered into a 320 mm x 380 mm mold and pre-pressed (compacted) under ambient conditions and a pressure of 1.2 N/mm² resulting in a pre-pressed chip mat (compacted mixture).

### 6.5.c HF pressing vs. hot pressing:

Subsequently, the pre-pressed chip mat (compacted mixture) thus obtained was removed from the mold and pressed to a board either by a) applying a high-frequency electrical field (HF pressing) or b) hot pressing the (compacted) mixture, wherein b) is a comparative process.
a) HF pressing: Applying a high-frequency electrical field to the mixture after compacting, so that the binder hardens via esterification of said compounds and binds the lignocellulosic particles, so that a single-layer lignocellulosic composite results (Boards No. 45-47): For monitoring the temperature in the center of said (compacted) mixture, i.e. in the approximate middle of the mat a temperature sensor was introduced into the center of said mat. Nonwoven separators were then provided to the upper and lower side of the pre-pressed chip mat. The pre-pressed chip mat was inserted in a HLOP 170 press from Hoefer Presstechnik GmbH, whereby birch plywood boards (thickness 6 mm) were placed between the nonwoven separator and the press plate on each side of the mat. The pre-pressed chip mat was then compacted to 18.5 mm thickness in the press within a period of 2 s, and then heated by applying a high-frequency electrical field (27.12 MHz) while the press was remaining closed. When 170 °C ("HF temperature") was reached in the center, the press was opened.
b) hot pressing (Boards No. 48-50; comparative examples): Nonwoven separators were provided to the upper and lower side of the pre-pressed chip mat. The pre-pressed chip mat was further compacted to 18.5 mm thickness in a lab hot press from Hoefer Presstechnik GmbH at a temperature of 220 °C (press plate temperature). The press was opened after 333 sec.

*6.5.d* After 3 d at ambient conditions the resulting single-layer chipboards (single-layer lignocellulosic composites) were sanded. 0.15 mm were sanded off on both the top and bottom side of the single-layer chipboard. After conditioning (at 65% humidity and 20° C) to constant mass, the thickness and density, the internal bond and the 24 h swelling of the resulting single-layer chipboards were determined.

Table 5 shows the respective binder composition and binder amount (ratio of the weight of the solid content of all binder components present for hardening via esterification to the weight of the lignocellulosic particles in an oven-dry state) used, the pressing method used, the thickness, the density, the internal bond and the 24 h swelling (determined according to measuring methods described above) of the resulting 18 mm single-layer chipboards No. 45-47 (HF pressing) and comparative examples 48-50 (hot pressing).

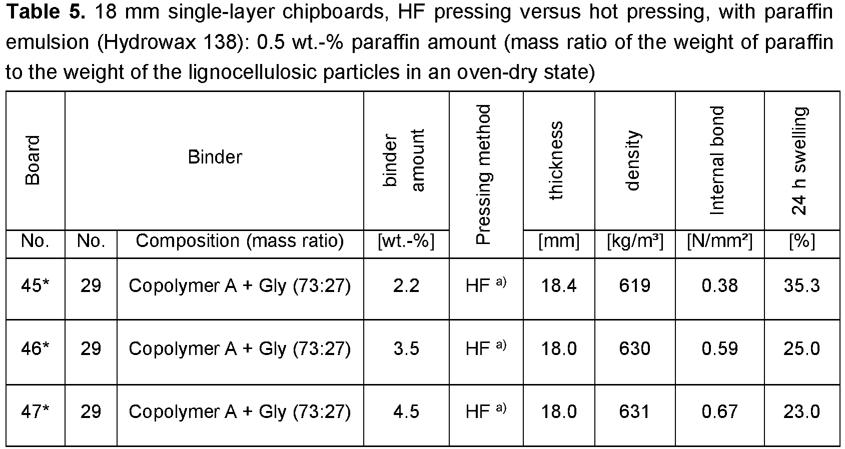

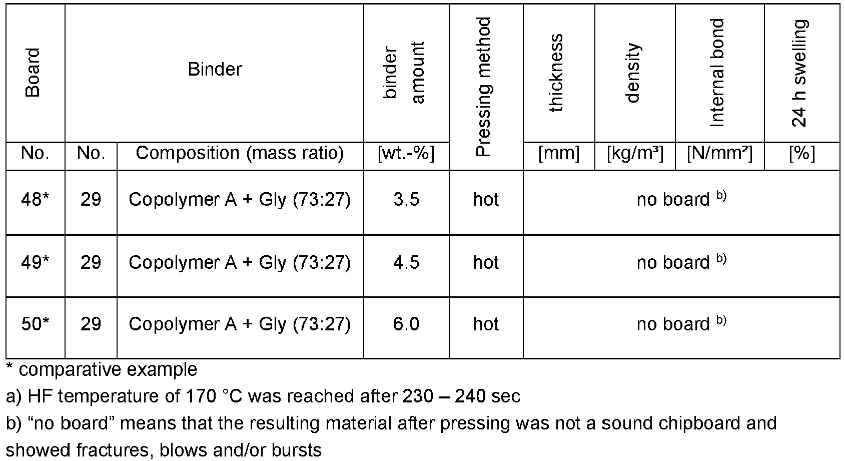

The results show that a lignocellulosic composite was prepared according to a process of the present invention, wherein the lignocellulosic composite is a 18 mm single-layer chipboard (Boards No. 45-47). This single-layer lignocellulosic composite i) has a thickness in the range of from 5 to 20 mm and ii) has an internal bond strength, determined according to DIN EN 319:1993-08, of at least 0.3 N/mm² and iii) has a thickness swelling after 24 hours in water at 20 °C, determined according to DIN EN 317:1993-08, of less than 40 %.

Comparative Examples No. 48-50 (hot pressing instead of applying a high-frequency electrical field) resulted in fractured, blowed and/or bursted materials

Comparison of the lignocellulosic composites prepared according to a process of the present invention (Boards No. 45-47), and the comparative examples (Boards No. 48-50) shows that the process of the present invention is advantageous.

### 6.6 6 mm single-layer chipboards (HF pressing versus hot pressing; Boards No. 51-54):

### 6.6.a Providing or preparing a mixture at least comprising lignocellulosic particles and a binder:

A mixture of 6.70 g of Hydrowax 138 (60 wt.-% paraffin in water) and 12.2 g of water was sprayed within 1 min to 816 g (800 g dry weight) of spruce core layer chips (moisture content 2.0 %) while mixing in a paddle mixer. Subsequently, 107 g of binder 30 (with a solid content of all binder components present for hardening via esterification of 45 wt.-%) was sprayed to this mixture within 1 min while mixing. After completion of the spraying, mixing in the mixer was continued for 15 sec and the respective mixtures comprising lignocellulosic particles and a binder were obtained.

### 6.6.b Compacting the mixture:

After 30 min, 456 g of the resulting mixtures comprising lignocellulosic particles and a binder were scattered into a 320 mm x 380 mm mold and pre-pressed (compacted) under ambient conditions and a pressure of 1.2 N/mm² resulting in a pre-pressed chip mat (compacted mixture).

### 6.6.c HF pressing vs. hot pressing:

Subsequently, the pre-pressed chip mat (compacted mixture) thus obtained was removed from the mold and pressed to a board either by a) applying a high-frequency electrical field (HF pressing) or b) hot pressing the (compacted) mixture, wherein b) is a comparative process.
a) HF pressing: Applying a high-frequency electrical field to the mixture after compacting, so that the binder hardens via esterification of said compounds and binds the lignocellulosic particles, so that a single-layer lignocellulosic composite results (Boards No. 51 and 53): For monitoring the temperature in the center of said (compacted) mixture, i.e. in the approximate middle of the mat, a temperature sensor was introduced into the center of said mat. Nonwoven separators were then provided to the upper and lower side of the pre-pressed chip mat. The pre-pressed chip mat was inserted in a HLOP 170 press from Hoefer Presstechnik GmbH, whereby birch plywood boards (thickness 6 mm) were placed between the nonwoven separator and the press plate on each side of the mat. The pre-pressed chip mat was then compacted to 6 mm thickness in the press within a period of 2 s, and then heated by applying a high-frequency electrical field (27.12 MHz) while the press was remaining closed. When 170 °C ("HF temperature") was reached in the center, the press was opened.
b) hot pressing (Boards No. 52 and 54; comparative examples):
   For monitoring the temperature in the center of said (compacted) mixture, i.e. in the approximate middle of the mat, a temperature sensor was introduced into the center of said mat. Nonwoven separators were then provided to the upper and lower side of the pre-pressed chip mat. The pre-pressed chip mat was further compacted to 6 mm thickness in a lab hot press HLOP 350 from Hoefer Presstechnik GmbH at a temperature of 178 °C (press plate temperature). When a temperature of 170 °C was reached in the center, the press was opened.

*6.6.d* After 3 d at ambient conditions the lightness of the resulting single-layer chipboards (single-layer lignocellulosic composite) were measured. Then the single-layer chipboards were sanded. 0.25 mm were sanded off on both the top and bottom side of the single-layer chipboard. After conditioning (at 65% humidity and 20° C) to constant mass, the thickness and density, the internal bond and the 24 h swelling of the resulting single-layer chipboards were determined (according to the measuring methods described above).

Table 6 shows the respective binder composition used, the pressing method used, the press time (time until 170 °C ("HF temperature") or 178 °C ("hot press temperature") was reached in the center of the mixture), the thickness, the density, the internal bond, the 24 h swelling and the lightness of the resulting 6 mm single-layer chipboards No. 51 and 53 (HF pressing) and comparative examples 52 and 54 (hot pressing).

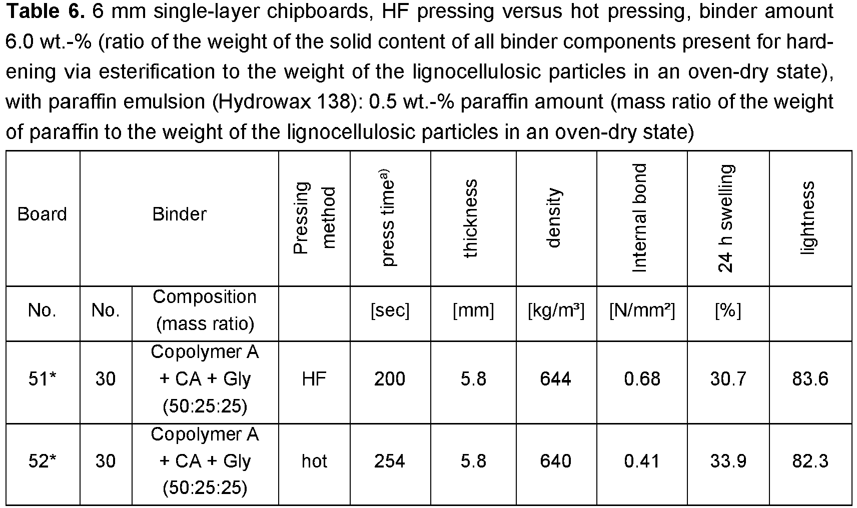

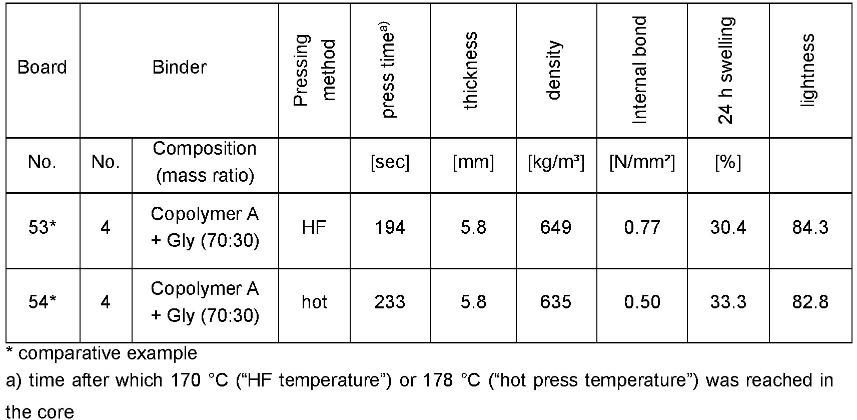

The results show that a lignocellulosic composite was prepared, wherein the lignocellulosic composite is a 6 mm single-layer chipboard (Boards No. 51 and 53). This single-layer lignocellulosic composite i) has a thickness in the range of from 5 to 20 mm and ii) has an internal bond strength, determined according to DIN EN 319:1993-08, of at least 0.6 N/mm² and iii) has a thickness swelling after 24 hours in water at 20 °C, determined according to DIN EN 317:1993-08, of less than 40 %.

Comparative Examples No. 52 and 54 (hot pressing instead of applying a high-frequency electrical field) needed a longer press time of up to 254 s and resulted in single-layer lignocellulosic composites with inferior properties, i.e. a significantly lower internal bond strength, a higher thickness swelling after 24 h as well as lower lightness.

Comparison of the lignocellulosic composites (Boards No. 51 and 53), and the comparative examples (Boards No. 52 and 54) shows that applying a high-frequency electrical field instead of hot pressing is advantageous.

### 6.7 6 mm single-layer MDF (Boards No. 55 and 56):

### 6.7.a Providing or preparing a mixture at least comprising lignocellulosic particles and a binder:

A mixture of 6.70 g of Hydrowax 138 (60 wt.-% paraffin in water) and 11.2 g of water was sprayed within 1 min to 864 g (800 g dry weight) of spruce fibers (moisture content 8.0 %) while mixing in a paddle mixer. Subsequently, 107 g of binder with a solid content of all binder components present for hardening via esterification of 45 wt.-%) was sprayed to this mixture within 1 min while mixing. After completion of the spraying, mixing in the mixer was continued for 15 sec and the respective mixtures comprising lignocellulosic particles (spruce fibers) and a binder were obtained.

### 6.7.b Compacting the mixture:

After 30 min, 742 g of this the resulting mixtures comprising lignocellulosic particles and a binder were scattered into a 320 mm x 380 mm mold and pre-pressed under ambient conditions and a pressure of 1.2 N/mm² resulting in a pre-pressed fiber mat (compacted mixture).

### 6.7.c Applying a high-frequency electrical field to the mixture during and/or after compacting, so that the binder hardens via esterification of said compounds and binds the lignocellulosic particles, so that a single-layer lignocellulosic composite results:

Subsequently, the pre-pressed fiber mat (compacted mixture) thus obtained was removed from the mold. For monitoring the temperature in the center of said (compacted) mixture, i.e. in the approximate middle of the mat, a temperature sensor was introduced into the center of said mat. Nonwoven separators were then provided to the upper and lower side of the pre-pressed fiber mat. The pre-pressed fiber mat was inserted in a HLOP 170 press from Hoefer Presstechnik GmbH, whereby birch plywood boards (thickness 6 mm) were placed between the nonwoven separator and the press plate on each side of the mat. The pre-pressed fiber mat was then compacted to 6 mm thickness in the press within a period of 2 s, and then heated by applying a high-frequency electrical field (27.12 MHz) while the press was remaining closed. When 170 °C ("HF temperature") was reached in the center, the press was opened.

*6.7.d* After 3 d at ambient conditions the resulting medium-density fiberboards (MDF) were sanded. 0.25 mm were sanded off on both the top and bottom side of the MDF. After conditioning (at 65% humidity and 20° C) to constant mass, the thickness and density, the internal bond and the 24 h swelling of the resulting MDF (single-layer lignocellulosic composites) were determined (according to the measuring methods described above).

Table 7 shows the respective binder composition used, the press time (time until 170 °C ("HF temperature") was reached in the center of the mixture), the thickness, the density, the internal bond and the 24 h swelling of the resulting 6 mm single-layer MDF Boards No. 55 and 56.

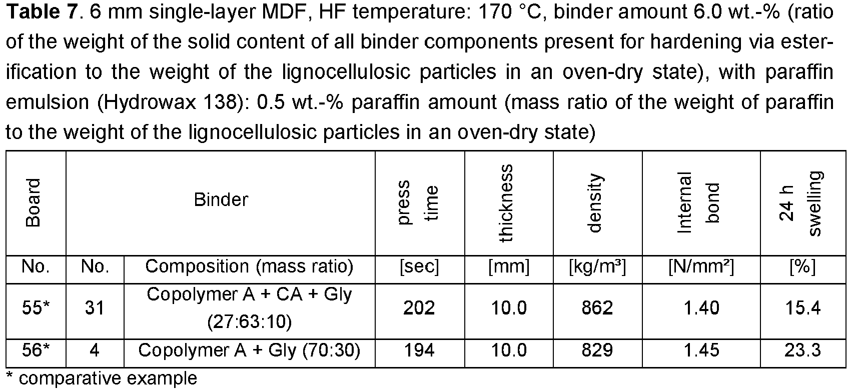

The results show that a lignocellulosic composite was prepared, wherein the lignocellulosic composite is a 6 mm single-layer MDF (Boards No. 55 and 56). This single-layer lignocellulosic composite i) has a thickness in the range of from 5 to 20 mm and ii) has an internal bond strength, determined according to DIN EN 319:1993-08, of at least 1.4 N/mm² and iii) has a thickness swelling after 24 hours in water at 20 °C, determined according to DIN EN 317:1993-08, of less than 30 %.

### 6.8 18 mm three-layered chipboards (HF pressing versus hot pressing; Boards No. 57 and 58):

### 6.8. a Providing or preparing a first and a second individual mixture, each of these mixtures at least comprising lignocellulosic particles and a binder:

### Surface layers (first individual mixture):

28.3 g of Hydrowax 138 (60 wt.-% paraffin in water) and 33.0 g of water was sprayed within 1 min to 3454 g (3400 g dry weight) of a first type of lignocellulosic particles, i.e. industrial surface layer chips (moisture content 1.6 %), while mixing in a paddle mixer. Subsequently, a mixture of 453 g of binder 28 (with a solid content of all binder components present for hardening via esterification of 45 wt.-%) and 73.7 g of a 50 wt.-% aqueous solution of sodium nitrate was sprayed to this mixture within 1 min while mixing so that a first individual mixture comprising lignocellulosic particles and a binder is obtained.

### Core layer (second individual mixture):

29.2 g of Hydrowax 138 (60 wt.-% paraffin in water) and 4.50 g of water was sprayed within 1 min to 3584 g (3500 g dry weight) of a second type of lignocellulosic particles, i.e. industrial core layer chips (moisture content 2.4 %) while mixing in a paddle mixer. Subsequently, a mixture of 467 g of binder 28 (with a solid content of all binder components present for hardening via esterification of 45 wt.-%) and 76.0 g of a 50 wt.-% aqueous solution of sodium nitrate was sprayed to this mixture within 1 min while mixing so that a second individual mixture comprising lignocellulosic particles and a binder is obtained.

### 6.8.b Preparing two or more layers by scattering individual layers on top of each other, each layer comprising lignocellulosic particles and a binder:

274 g of the first individual mixture for the surface layers, followed by 976 g of the second individual mixture for the core layer, followed by 274 g of the first individual mixture for the surface layers, were scattered into a 320 mm x 380 mm mold to give a three-layered pre-composite.

### 6.8.c Compacting the layers in a first stage so that the mixtures are pre-compacted to give a pre-compacted mat:

The three-layered pre-composite obtained after 6.8.b is pre-pressed under ambient conditions and a pressure of 1.2 N/mm² to give a three-layered pre-pressed chip mat (compacted mixture).

### 6.8.d HF pressing vs. hot pressing:

Subsequently, the three-layered pre-pressed chip mat thus obtained was removed from the mold and pressed to a multilayer board either by a) applying a high-frequency electrical field (HF pressing) or b) hot pressing, wherein b) is a comparative process.
a) HF pressing: Applying a high-frequency electrical field to the mixture after compacting, so that the binder hardens via esterification of said compounds and binds the lignocellulosic particles, so that a multilayer lignocellulosic composite results (Board No. 57): For monitoring of the temperature in the center of said (compacted) mixture, i.e. in the approximate middle of the mat, a temperature sensor was introduced into the center of said mat, respectively into a horizontal hole in the center of the core. Nonwoven separators were then provided to the upper and lower side of the three-layered pre-pressed chip mat. The three-layered pre-pressed chip mat was inserted in a HLOP 170 press from Hoefer Presstechnik GmbH, whereby birch plywood boards (thickness 6 mm) were placed between the nonwoven separator and the press plate on each side of the mat. The three-layered pre-pressed chip mat was then compacted to 18.5 mm thickness in the press within a period of 2 s, and then heated by applying a high-frequency electrical field (27.12 MHz) while the press was remaining closed. When 170 °C was reached in the center, the press was opened.
b) hot pressing (Board No. 58; comparative example): Nonwoven separators were provided to the upper and lower side of the three-layered pre-pressed chip mat. The three-layered pre-pressed chip mat was further compacted to 18.5 mm thickness in a lab hot press HLOP 350 from Hoefer Presstechnik GmbH at a temperature of 230 °C (press plate temperature). After a press time of 185 s the press was opened.

*6.8.e* After 3 d at ambient conditions the resulting three-layered chipboards (multilayer lignocellulosic composites) were sanded. 0.20 mm were sanded off on both the top and bottom side of the three-layered chipboards. After conditioning (at 65% humidity and 20° C) to constant mass, the thickness and density, the internal bond, screw holding and 24 h swelling of the resultant three-layered chipboards were determined according to measuring methods described above.

Table 8 shows the respective binder composition and binder amount (ratio of the weight of the solid content of all binder components present for hardening via esterification to the weight of the lignocellulosic particles in an oven-dry state) used for the core layer (CL) and the surface layers (SL), the pressing method, the thickness, the density, the internal bond, the 24 h swelling, the surface screw holding and the edge screw holding of the resulting 18 mm three-layered chipboards No. 57 and 58.

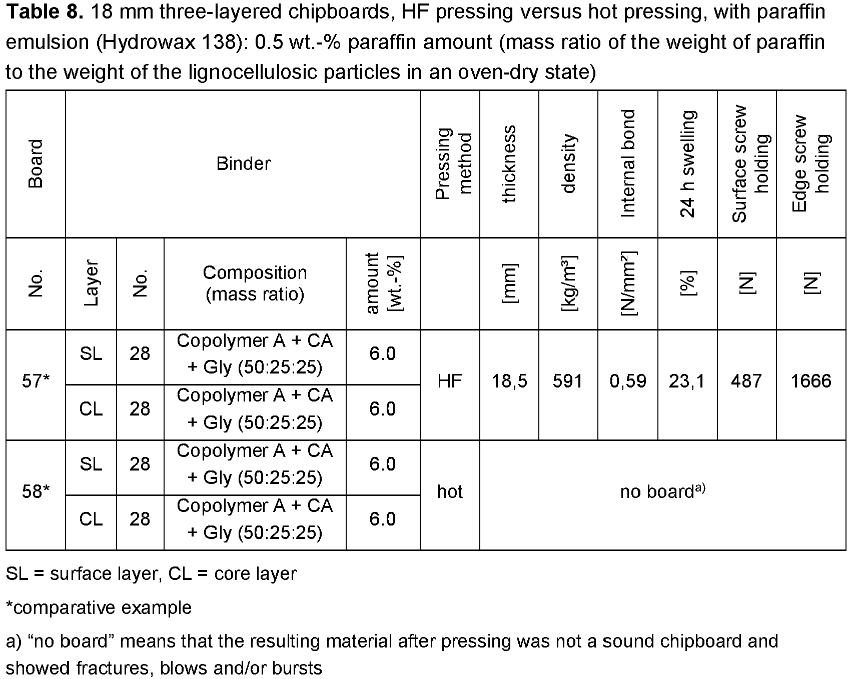

The results show that a lignocellulosic composite was prepared, wherein the lignocellulosic composite is a multilayer lignocellulosic composite, i.e. a 18 mm three-layered chipboard (Board No. 57). This multilayer lignocellulosic composite i) has a thickness in the range of from 5 to 20 mm and ii) has an internal bond strength, determined according to DIN EN 319:1993-08, of at least 0.5 N/mm² and iii) has a thickness swelling after 24 hours in water at 20 °C, determined according to DIN EN 317:1993-08, of less than 30 %.

The multilayer lignocellulosic composite prepared furthermore has a surface screw holding, measured according to IKEA specification no. IOS-TM-0057, Date: 2018-07-13, Version no: AA-2120821-1, of at least 450 N (487 N) and an edge screw holding, measured according to IKEA specification no. IOS-TM-0057, Date: 2018-07-13, Version no: AA-2120821-1, of at least 800 N (1666 N).

Comparative example No. 58 (resulting material was not a sound chipboard and showed fractures, blows and/or bursts) shows that the step of applying a high-frequency electrical field to the mixture during and/or after compacting, so that the binder hardens via esterification of said compounds and binds the lignocellulosic particles, is advantageous compared to a conventional hot pressing.

## Claims

1. Process of producing a multilayer lignocellulosic composite comprising one or more lignocellulosic composite layers or a single-layer lignocellulosic composite, comprising at least the following steps:
a) providing or preparing a mixture at least comprising
- lignocellulosic particles
and
- a binder comprising as components for hardening the binder via esterification at least
▪ (c2) one, two or more polymers comprising multiple hydroxy groups
and, for crosslinking said polymers,
▪ one, two or more polymer or monomer compounds having two or more carboxyl groups;
b) compacting the mixture; and
c) applying a high-frequency electrical field to the mixture during and/or after compacting, so that the binder hardens via esterification of said components and binds the lignocellulosic particles, so that a single-layer lignocellulosic composite or a layer of a multilayer lignocellulosic composite results.

2. Process according to claim 1, wherein the one, two or more polymers comprising multiple hydroxy groups (c2) of the binder are selected from the group consisting of
- carbohydrates, preferably starch, more preferably starch selected from the group consisting of non-hydrolyzed starch, modified starch, maltodextrin and mixtures thereof
- polyvinylalcohol,
and
- mixtures thereof.

3. Process according to any of the preceding claims, wherein the one, two or more polymer or monomer compounds having two or more carboxyl groups of the binder:
- comprise one, two or more, preferably biobased, polyesters having two or more carboxyl groups,
wherein one, two or more of said, preferably biobased, polyesters are preferably prepared by reacting
- one or more alpha-hydroxy carboxylic acids, preferably citric acid,
and
- one, two or more compounds selected from the group consisting of:
▪ carbohydrates, preferably selected from the group consisting of monosaccharides, disaccharides, oligosaccharides, polysaccharides and starch, more preferably selected from the group consisting of dextrose, fructose, saccharose, non-hydrolyzed starch, modified starch and maltodextrin,
▪ sugar alcohols, preferably selected from the group consisting of mannitol, sorbitol, xylitol, lactitol, isomalt, maltitol, erythritol, hydrogenated starch hydrolysates and glycerol, more preferably glycerol,
▪ compounds selected from the group consisting of triols, tetrols, pentols and hexols, wherein the compounds are not carbohydrates and not sugar alcohols, more preferably compounds selected from the group consisting of triethanolamine and trimethylolpropane,
wherein preferably the or at least one of the two or more compounds is glycerol;
and/or
- comprise or further comprise
- one, two or more polymers selected from the group consisting of polymers of one or more unsaturated carboxylic acid, preferably acrylic acid, and mixtures thereof, preferably co-polymers of acrylic acid and more preferably co-polymers of acrylic acid and maleic anhydride;
and/or
- one, two or more polymer or monomer compounds, preferably one, two or more biobased polymer or biobased monomer compounds, having two or more carboxyl groups, selected from the group consisting of alpha-hydroxy carboxylic acids, preferably selected from the group consisting of citric acid, malic acid and tartaric acid, more preferably citric acid, and preferably reaction products thereof, more preferably polyesters thereof,
wherein preferably the total amount of said one, two or more polymer or monomer compounds, preferably the total amount of said one, two or more biobased polymer or biobased monomer compounds, for crosslinking said polymers is above 5 wt.-%, more preferably above 10 wt.-%, even more preferably above 20 wt.-% and most preferably above 30 wt.-%, based on the solid content of all binder components present for hardening via esterification.

4. Process according to any of the preceding claims, wherein the binder comprises:
- as an additional component for hardening the binder via esterification
- one or more non-polymeric, preferably non-polymeric biobased, compounds having at least one carboxyl group and at least one hydroxy group, wherein the one non-polymeric compound or at least one of the more than one non-polymeric compounds is preferably selected from the group consisting of monohydroxy-monocarboxylic acids, more preferably is selected from the group consisting of alpha-hydroxy monohydroxy-monocarboxylic acids, even more preferably is selected from the group consisting of lactic acid, glycolic acid, and mandelic acid, and most preferably is lactic acid,
and/or
- sugar alcohols, preferably selected from the group consisting of mannitol, sorbitol, xylitol, lactitol, isomalt, maltitol, erythritol and glycerol, more preferably glycerol.

5. Process according to any of the preceding claims, wherein the binder:
- comprises as components for hardening the binder via esterification at least
- (c2) one, two or more polymers comprising multiple hydroxy groups, selected from the group consisting of:
▪ carbohydrates, preferably selected from the group consisting of non-hydrolyzed starch, modified starch, maltodextrin and mixtures thereof,
▪ polyvinylalcohol,
and
▪ mixtures thereof.
and, for crosslinking said polymers,
- one, two or more polymer or monomer compounds having two or more carboxyl groups, selected from the group consisting of:
▪ one, two or more polymers selected from the group consisting of polymers of one or more unsaturated carboxylic acid, preferably acrylic acid, and mixtures thereof, preferably co-polymers of acrylic acid and more preferably copolymers of acrylic acid and maleic anhydride;
and/or
▪ one, two or more polymer or monomer compounds, preferably one, two or more biobased polymer or biobased monomer compounds, having two or more carboxyl groups, selected from the group consisting of alpha-hydroxy carboxylic acids, preferably selected from the group consisting of citric acid, malic acid and tartaric acid, more preferably citric acid,
and/or
▪ one, two or more, preferably biobased, polyesters having two or more carboxyl groups, as defined in claim 3; and the binder alternatively
- comprises as an additional component for hardening the binder via esterification:
- one or more non-polymeric, preferably non-polymeric biobased, compounds having at least one carboxyl group and at least one hydroxy group, wherein the one non-polymeric compound or at least one of the more than one non-polymeric compounds is preferably selected from the group consisting of monohydroxy-monocarboxylic acids, more preferably is selected from the group consisting of alpha-hydroxy monohydroxy-monocarboxylic acids, even more preferably is selected from the group consisting of lactic acid, glycolic acid, and mandelic acid, and most preferably is lactic acid,
and/or
- sugar alcohols, preferably one or more sugar alcohols, more preferably selected from the group consisting of mannitol, sorbitol, xylitol, lactitol, isomalt, maltitol, erythritol and glycerol, even more preferably glycerol.

6. Process according to any of the preceding claims, wherein the binder:
- additionally comprises one, two or more compounds independently selected from the group consisting of:
- alkali salts and alkaline earth salts, preferably sodium nitrate,
- hydrophobizing agents, preferably paraffin and mixtures comprising paraffin, more preferably paraffin emulsions,
- dyes, pigments
- antifungal agents and antibacterial agents
- rheology modifiers, fillers,
- release agents and
- surfactants and tensides; and/or
- as part of the mixture provided or prepared in step a) of the process comprises as additional component one or more hydrophobizing agents selected from the group consisting of paraffin and mixtures comprising paraffin, preferably paraffin emulsions,
wherein preferably
- the mass ratio of the weight of paraffin to the weight of the lignocellulosic particles in an oven-dry state is in the range of from 0.2 % to 1.5 %, and/or
- the mass ratio of the weight of paraffin to the weight of all binder components present for hardening via esterification is in the range of from 5 % to 30 %, preferably in the range of from 10 % to 25 %, more preferably in the range of from 15 % to 25 %;
and/or
- one or more salts selected from the group consisting of alkali metal salts and alkaline earth metal salts, wherein preferably the or at least one of the salts is sodium nitrate,
preferably in a total amount of alkali metal ions and alkaline earth metal ions, preferably of sodium ions, is in a range of from 25-250 mmol/g, preferably in a range of from 50-250 mmol/g, more preferably in a range of from 75-250 mmol/g, based on the total amount of the solid content of all binder components present for hardening via esterification, plus the total amount of all alkali metal salts and alkaline earth metal salts present in the binder.

7. Process according to any of the preceding claims, wherein the binder prepared or provided in step (a) of the process has a pH in the range of from 1.0 to 3.2, preferably in the range of from 2.0 to 2.9.

8. Process according to any of the preceding claims, wherein the lignocellulosic composite is a lignocellulosic board selected from the group consisting of
- high-density fiberboard (HDF)
- medium-density fiberboard (MDF)
- low-density fiberboard (LDF)
- wood fiber insulation board
- oriented strand board (OSB)
- chipboard, and
- natural fiber board, preferably with fibers from the group consisting of sisal, jute, flax, coconut, kenaf, hemp, banana, and mixtures thereof,
wherein the lignocellulosic board is a
- single-layer lignocellulosic board or
- multilayer lignocellulosic board,
preferably a multilayer lignocellulosic board having a core layer and having an upper surface layer and a lower surface layer;
and/or
- wherein the lignocellulosic composite is a board having a core, wherein in a cross section oriented perpendicularly to the plane of the board the difference between density maximum of the board and density minimum in the core of the board is at most 100 kg/m³.

9. Process according to any of the preceding claims, wherein
- the process of producing a lignocellulosic composite comprises one, two, three, more than three, or all of the following steps
- in step a) for preparing said mixture blending said lignocellulosic particles with one or more or all ingredients of the binder or spraying one or more or all ingredients of the binder onto said lignocellulosic particles, wherein before blending or spraying said ingredients of the binder are pre-mixed or not pre-mixed,
- preparing, preferably preparing by scattering, a layer of the mixture provided or prepared in step a), and in step b) compacting this layer,
- for preparing a multilayer lignocellulosic composite providing or preparing at least a first and a second individual mixture, and using said first and second individual mixtures for making a first and a second layer of the multilayer lignocellulosic composite, wherein the first and the second layer preferably are in contact with each other, and/or wherein the first and the second individual mixture have the same or a different composition,
- for preparing a multilayer lignocellulosic composite preparing two or more layers, preferably preparing two or more layers by scattering individual layers on top of each other, each layer comprising lignocellulosic particles and a binder, wherein in the two or more layers the lignocellulosic particles and/or the binders are the same or different,
- in step b) compacting the mixture in two stages, wherein in the first stage the mixture is pre-compacted to give a pre-compacted mat, and wherein in the second stage this pre-compacted mat is further compacted,
- during or after compacting in step b) hot pressing the mixture,
- during or after applying a high-frequency electrical field in step c), hot pressing the mixture and
- in step c) of applying a high-frequency electrical field monitoring and/or controlling the temperature at the center of said mixture;
and/or
- wherein in said step c) of applying a high-frequency electrical field the temperature at the center of said mixture:
(i) is increased to a maximum temperature in the range of from 130 °C to 200 °C, preferably in the range of from 140 °C to 180 °C, wherein preferably the maximum temperature is reached in less than 40 s ·(d/mm) after the start of applying a high-frequency electrical field, where d is the thickness of the compacted mixture in mm at the end of step c);
and/or
(ii) is controlled so that said binder hardens via esterification and binds the lignocellulosic particles.

10. Lignocellulosic composite, preparable according to a process as defined in any of claims 1 to 9, or construction product comprising such lignocellulosic composite,
wherein the lignocellulosic composite preferably is a lignocellulosic board selected from the group consisting of
- high-density fiberboard (HDF)
- medium-density fiberboard (MDF)
- low-density fiberboard (LDF)
- wood fiber insulation board
- oriented strand board (OSB)
- chipboard, and
- natural fiber board, preferably with fibers from the group consisting of sisal, jute, flax, coconut, kenaf, hemp, banana, and mixtures thereof,
wherein the lignocellulosic board is a
- single-layer lignocellulosic board or
- multilayer lignocellulosic board,
preferably a multilayer lignocellulosic board having a core and having an upper surface layer and a lower surface layer,
and/or
wherein the lignocellulosic composite is a board having a core, wherein in a cross section oriented perpendicularly to the plane of the board the difference between density maximum of the board and density minimum in the core of the board is at most 100 kg/m³.

11. Lignocellulosic composite according to claim 10, or construction product comprising such lignocellulosic composite, wherein the lignocellulosic composite has
- a surface screw holding, measured according to IKEA specification no. IOS-TM-0057, Date: 2018-07-13, Version no: AA-2120821-1, of at least 250 N, preferably of least 300 N, more preferably of least 450 N,
and/or
- an edge screw holding, measured according to IKEA specification no. IOS-TM-0057, Date: 2018-07-13, Version no: AA-2120821-1, of at least 600 N, preferably of at least 800 N.

12. Lignocellulosic composite according to any of claims 10 or 11, or construction product comprising such lignocellulosic composite, wherein the lignocellulosic composite is a lignocellulosic board, and wherein said lignocellulosic board
- is selected from the group consisting of chipboard, high-density fiberboard (HDF), medium-density fiberboard (MDF) and oriented strand board (OSB), and/or
- has a thickness in the range of from 3 to 30 mm, preferably in the range of from 5 to 20 mm,
and/or
- has an internal bond strength, determined according to DIN EN 319:1993-08, of at least 0.1 N/mm2, preferably of at least 0.2 N/mm2, more preferably of at least 0.3 N/mm²,
and/or
- has a thickness swelling after 24 hours in water at 20 °C, determined according to DIN EN 317:1993-08, of less than 60 %, preferably less than 50 %, more preferably less than 40 %.

13. Binder as defined in claim 5 or binder composition comprising a binder as defined in claim 5 and preferably further comprising a carrier liquid, preferably water.

14. Binder or binder composition according to claim 13,
- further comprising one, two or more compounds independently selected from the group consisting of:
- alkali salts and alkaline earth salts, preferably sodium nitrate,
- hydrophobizing agents, preferably paraffin and mixtures comprising paraffin, more preferably paraffin emulsions,
- dyes, pigments
- antifungal agents and antibacterial agents
- rheology modifiers, fillers,
- release agents and
- surfactants and tensides;
and/or
- further comprising one or more hydrophobizing agents selected from the group consisting of paraffin and mixtures comprising paraffin, preferably paraffin emulsions, as defined in claim 6;
and/or
- further comprising one or more salts selected from the group consisting of alkali metal salts and alkaline earth metal salts, as defined in claim 6;
and/or
- wherein the binder and/or the binder composition has a pH in the range of from 1.0 to 3.2, preferably in the range of from 2.0 to 2.9.

15. Use of a lignocellulosic composite as defined in any of claims 10 to 12, as a building element in a construction product, preferably as a building element in furniture or parts of furniture, more preferably as a building element in a hollow construction in furniture or parts of furniture.

## Patentansprüche

1. Verfahren zur Herstellung eines mehrschichtigen lignocellulosehaltigen Verbundstoffs, der eine oder mehrere lignocellulosehaltige Verbundstoffschichten umfasst, oder eines einschichtigen lignocellulosehaltigen Verbundstoffs, umfassend wenigstens die folgenden Schritte:
a) Bereitstellen oder Herstellen eines Gemischs, das wenigstens umfasst
- lignocellulosehaltige Partikel
und
- ein Bindemittel, umfassend als Komponenten zum Härten des Bindemittels durch Veresterung wenigstens
▪ (c2) ein, zwei oder mehr Polymere, die mehrere Hydroxygruppen umfassen
und zum Vernetzen der Polymere
▪ eine, zwei oder mehr Polymer- oder Monomerverbindungen, die zwei oder mehr Carboxylgruppen aufweisen;
b) Verdichten des Gemischs; und
c) Anlegen eines hochfrequenten elektrischen Felds an das Gemisch während und/oder nach Verdichten, so dass das Bindemittel durch Veresterung der Komponenten härtet und die lignocellulosehaltigen Partikel bindet, so dass ein einschichtiger lignocellulosehaltiger Verbundstoff oder eine Schicht eines mehrschichtigen lignocellulosehaltigen Verbundstoffs entsteht.

2. Verfahren nach Anspruch 1, wobei das eine, die zwei oder mehr Polymere, die mehrere Hydroxygruppen umfassen (c2), des Bindemittels ausgewählt sind aus der Gruppe bestehend aus
- Kohlenhydraten, vorzugsweise Stärke, bevorzugter Stärke ausgewählt aus der Gruppe bestehend aus nichthydrolysierter Stärke, modifizierter Stärke, Maltodextrin und Gemischen davon
- Polyvinylalkohol,
und
- Gemischen davon.

3. Verfahren nach einem der vorstehenden Ansprüche, wobei die eine, zwei oder mehr Polymer- oder Monomerverbindungen, die zwei oder mehr Carboxylgruppen aufweisen, des Bindemittels:
- einen, zwei oder mehr vorzugsweise biobasierte Polyester, die zwei oder mehr Carboxylgruppen aufweisen, umfassen,
wobei einer, zwei oder mehr der vorzugsweise biobasierten Polyester vorzugsweise hergestellt werden durch Umsetzung
- einer oder mehrerer alpha-Hydroxycarbonsäuren, vorzugsweise Citronensäure,
und
- einer, zwei oder mehr Verbindungen ausgewählt aus der Gruppe bestehend aus:
▪ Kohlenhydraten, vorzugsweise ausgewählt aus der Gruppe bestehend aus Monosacchariden, Disacchariden, Oligosacchariden, Polysacchariden und Stärke, bevorzugter ausgewählt aus der Gruppe bestehend aus Dextrose, Fructose, Saccharose, nichthydrolysierter Stärke, modifizierter Stärke und Maltodextrin,
▪ Zuckeralkoholen, vorzugsweise ausgewählt aus der Gruppe bestehend aus Mannit, Sorbit, Xylit, Lactit, Isomalt, Maltit, Erythrit, hydrierten Stärkehydrolysaten und Glycerol, bevorzugter Glycerol,
▪ Verbindungen ausgewählt aus der Gruppe bestehend aus Triolen, Tetrolen, Pentolen und Hexolen, wobei die Verbindungen keine Kohlenhydrate und keine Zuckeralkohole sind, bevorzugter Verbindungen ausgewählt aus der Gruppe bestehend aus Triethanolamin und Trimethylolpropan,
wobei die oder wenigstens eine der zwei oder mehr Verbindungen vorzugsweise Glycerol ist;
und/oder
- umfassen oder ferner umfassen
- ein, zwei oder mehr Polymere ausgewählt aus der Gruppe bestehend aus Polymeren einer oder mehrerer ungesättigter Carbonsäuren, vorzugsweise Acrylsäure, und Gemischen davon, vorzugsweise Copolymere von Acrylsäure und bevorzugter Copolymere von Acrylsäure und Maleinsäureanhydrid;
und/oder
- eine, zwei oder mehr Polymer- oder Monomerverbindungen, vorzugsweise eine, zwei oder mehr biobasierte Polymer- oder biobasierte Monomerverbindungen, die zwei oder mehr Carboxylgruppen aufweisen, ausgewählt aus der Gruppe bestehend aus alpha-Hydroxycarbonsäuren, vorzugsweise ausgewählt aus der Gruppe bestehend aus Citronensäure, Apfelsäure und Weinsäure, bevorzugter Citronensäure, und vorzugsweise Reaktionsprodukten davon, bevorzugter Polyestern davon, wobei vorzugsweise die Gesamtmenge der einen, zwei oder mehr Polymer- oder Monomerverbindungen, vorzugsweise die Gesamtmenge der einen, zwei oder mehr biobasierten Polymer- oder biobasierten Monomerverbindungen, zur Vernetzung der Polymere über 5 Gew.-%, bevorzugter über 10 Gew.-%, noch bevorzugter über 20 Gew.-% und höchst bevorzugt über 30 Gew.-%, bezogen auf den Feststoffgehalt aller zum Härten durch Veresterung vorhandenen Bindemittelkomponenten, liegt.

4. Verfahren nach einem der vorstehenden Ansprüche, wobei das Bindemittel umfasst:
- als zusätzliche Komponente zum Härten des Bindemittels durch Veresterung
- eine oder mehrere nichtpolymere, vorzugsweise nichtpolymere biobasierte, Verbindungen, die wenigstens eine Carboxylgruppe und wenigstens eine Hydroxygruppe aufweisen, wobei die eine nichtpolymere Verbindung oder wenigstens eine der mehr als einen nichtpolymeren Verbindungen vorzugsweise ausgewählt ist aus der Gruppe bestehend aus Monohydroxymonocarbonsäuren, bevorzugter ausgewählt ist aus der Gruppe bestehend aus alpha-Hydroxymonohydroxymonocarbonsäuren, noch bevorzugter ausgewählt ist aus der Gruppe bestehend aus Milchsäure, Glycolsäure und Mandelsäure und höchst bevorzugt Milchsäure ist,
und/oder
- Zuckeralkohole, vorzugsweise ausgewählt aus der Gruppe bestehend aus Mannit, Sorbit, Xylit, Lactit, Isomalt, Maltit, Erythrit und Glycerol, bevorzugter Glycerol.

5. Verfahren nach einem der vorstehenden Ansprüche, wobei das Bindemittel:
- als Komponenten zum Härten des Bindemittels durch Veresterung wenigstens umfasst
- (c2) ein, zwei oder mehr Polymere, die mehrere Hydroxygruppen umfassen, ausgewählt aus der Gruppe bestehend aus:
▪ Kohlenhydraten, vorzugsweise ausgewählt aus der Gruppe bestehend aus nichthydrolysierter Stärke, modifizierter Stärke, Maltodextrin und Gemischen davon,
▪ Polyvinylalkohol,
und
▪ Gemischen davon,
und zum Vernetzen der Polymere
- eine, zwei oder mehr Polymer- oder Monomerverbindungen, die zwei oder mehr Carboxylgruppen aufweisen, ausgewählt aus der Gruppe bestehend aus:
▪ einem, zwei oder mehr Polymeren ausgewählt aus der Gruppe bestehend aus Polymeren einer oder mehrerer ungesättigter Carbonsäuren, vorzugsweise Acrylsäure, und Gemischen davon, vorzugsweise Copolymeren von Acrylsäure und bevorzugter Copolymeren von Acrylsäure und Maleinsäureanhydrid;
und/oder
▪ einer, zwei oder mehr Polymer- oder Monomerverbindungen, vorzugsweise einer, zwei oder mehr biobasierten Polymer- oder biobasierten Monomerverbindungen, die zwei oder mehr Carboxylgruppen aufweisen, ausgewählt aus der Gruppe bestehend aus alpha-Hydroxycarbonsäuren, bevorzugt ausgewählt aus der Gruppe bestehend aus Citronensäure, Apfelsäure und Weinsäure, bevorzugter Citronensäure,
und/oder
▪ einem, zwei oder mehr vorzugsweise biobasierten Polyestern, die zwei oder mehr Carboxylgruppen aufweisen, wie in Anspruch 3 definiert;
und das Bindemittel alternativ
- als zusätzliche Komponente zum Härten des Bindemittels durch Veresterung umfasst:
- eine oder mehrere nichtpolymere, vorzugsweise nichtpolymere biobasierte, Verbindungen, die wenigstens eine Carboxylgruppe und wenigstens eine Hydroxygruppe aufweisen, wobei die eine nichtpolymere Verbindung oder wenigstens eine der mehr als einen nichtpolymeren Verbindungen vorzugsweise ausgewählt ist aus der Gruppe bestehend aus Monohydroxymonocarbonsäuren, bevorzugter ausgewählt ist aus der Gruppe bestehend aus alpha-Hydroxymonohydroxymonocarbonsäuren, noch bevorzugter ausgewählt ist aus der Gruppe bestehend aus Milchsäure, Glycolsäure und Mandelsäure und höchst bevorzugt Milchsäure ist,
und/oder
- Zuckeralkohole, vorzugsweise einen oder mehrere Zuckeralkohole, bevorzugter ausgewählt aus der Gruppe bestehend aus Mannit, Sorbit, Xylit, Lactit, Isomalt, Maltit, Erythrit und Glycerol, bevorzugter Glycerol.

6. Verfahren nach einem der vorstehenden Ansprüche, wobei das Bindemittel:
- zusätzlich eine, zwei oder mehr Verbindungen umfasst, die unabhängig ausgewählt sind aus der Gruppe bestehend aus:
- Alkalisalzen und Erdalkalisalzen, vorzugsweise Natriumnitrat,
- Hydrophobiermitteln, vorzugsweise Paraffin und Gemische, die Paraffin umfassen, bevorzugter Paraffinemulsionen,
- Farbstoffen, Pigmenten,
- antifungiellen Mitteln und antibakteriellen Mitteln,
- Rheologiemodifikatoren, Füllstoffen,
- Trennmitteln und
- grenzflächenaktiven Mitteln und Tensiden;
und/oder
- als Teil des bei Schritt a) des Verfahrens bereitgestellten oder hergestellten Gemischs als zusätzliche Komponente ein oder mehrere Hydrophobiermittel ausgewählt aus der Gruppe bestehend aus Paraffin und Gemischen, die Paraffin enthalten, vorzugsweise Paraffinemulsionen, umfasst,
wobei vorzugsweise
- das Masseverhältnis des Gewichts von Paraffin zu dem Gewicht der lignocellulosehaltigen Partikel in einem ofentrockenen Zustand in dem Bereich von 0,2 % bis 1,5 % liegt,
und/oder
- das Masseverhältnis des Gewichts von Paraffin zu dem Gewicht aller zum Härten durch Veresterung vorhandenen Bindemittelkomponenten in dem Bereich von 5 % bis 30 %, vorzugsweise in dem Bereich von 10 % bis 25 %, bevorzugter in dem Bereich von 15 % bis 25 %, liegt;
und/oder
- ein oder mehrere Salze ausgewählt aus der Gruppe bestehend aus Alkalimetallsalzen und Erdalkalimetallsalzen, wobei das oder wenigstens eines der Salze vorzugsweise Natriumnitrat ist,
vorzugsweise in einer Gesamtmenge von Alkalimetallionen und Erdalkaliionen, vorzugsweise von Natriumionen, in einem Bereich von 25-250 mmol/g, vorzugsweise in einem Bereich von 50-250 mmol/g, bevorzugter in einem Bereich von 75-250 mmol/g, bezogen auf die Gesamtmenge des Feststoffgehalts aller zum Härten durch Veresterung vorhandenen Bindemittelkomponenten zuzüglich der Gesamtmenge aller im Bindemittel vorhandenen Alkalimetallsalze und Erdalkalimetallsalze.

7. Verfahren nach einem der vorstehenden Ansprüche, wobei das bei Schritt (a) des Verfahrens hergestellte oder bereitgestellte Bindemittel einen pH-Wert in dem Bereich von 1,0 bis 3,2, vorzugsweise in dem Bereich von 2,0 bis 2,9, aufweist.

8. Verfahren nach einem der vorstehenden Ansprüche, wobei der lignocellulosehaltige Verbundstoff eine lignocellulosehaltige Platte ist, ausgewählt aus der Gruppe bestehend aus
- Faserplatte mit hoher Dichte (HDF)
- Faserplatte mit mittlerer Dichte (MDF)
- Faserplatte mit niedriger Dichte (LDF)
- Holzfaserdämmplatte
- Grobspanplatte (OSB)
- Spanplatte, und
- Naturfaserplatte, vorzugsweise mit Fasern aus der Gruppe bestehend aus Sisal, Jute, Flachs, Kokos, Kenaf, Hanf, Banane und Gemischen davon,
wobei die lignocellulosehaltige Platte ist
- eine einschichtige lignocellulosehaltige Platte oder
- eine mehrschichtige lignocellulosehaltige Platte, vorzugsweise eine mehrschichtige lignocellulosehaltige Platte mit einer Kernschicht und mit einer oberen Oberflächenschicht und einer unteren Oberflächenschicht; und/oder
- wobei der lignocellulosehaltige Verbundstoff eine Platte mit einem Kern ist, wobei in einem Querschnitt, der senkrecht zu der Ebene der Platte ausgerichtet ist, der Unterschied zwischen dem Dichtemaximum der Platte und dem Dichteminimum im Kern der Platte höchstens 100 kg/m³ beträgt.

9. Verfahren nach einem der vorstehenden Ansprüche, wobei
- das Verfahren zur Herstellung eines lignocellulosehaltigen Verbundstoffs einen, zwei, drei, mehr als drei oder alle der folgenden Schritte umfasst
- bei Schritt a) zur Herstellung des Gemischs Mischen der lignocellulosehaltigen Partikel mit einem oder mehreren oder allen Bestandteilen des Bindemittels oder Sprühen eines oder mehrerer oder aller Bestandteile des Bindemittels auf die lignocellulosehaltigen Partikel, wobei vor Mischen oder Sprühen die Bestandteile des Bindemittels vorgemischt oder nicht vorgemischt werden,
- Herstellen, vorzugsweise Herstellen durch Streuen, einer Schicht des bei Schritt a) bereitgestellten oder hergestellten Gemischs und bei Schritt b) Verdichten dieser Schicht,
- zur Herstellung eines mehrschichtigen lignocellulosehaltigen Verbundstoffs Bereitstellen oder Herstellen wenigstens eines ersten und eines zweiten einzelnen Gemischs und Verwenden des ersten und zweiten einzelnen Gemischs zur Herstellung einer ersten und einer zweiten Schicht des mehrschichtigen lignocellulosehaltigen Verbundstoffs, wobei die erste und die zweite Schicht vorzugsweise miteinander in Kontakt stehen und/oder wobei das erste und das zweite einzelne Gemisch die gleichen oder unterschiedliche Zusammensetzungen aufweisen,
- zur Herstellung eines mehrschichtigen lignocellulosehaltigen Verbundstoffs Herstellen von zwei oder mehr Schichten, vorzugsweise Herstellen von zwei oder mehr Schichten durch Aufeinanderstreuen einzelner Schichten, wobei jede Schicht lignocellulosehaltige Partikel und ein Bindemittel umfasst, wobei in den zwei oder mehr Schichten die lignocellulosehaltigen Partikel und/oder die Bindemittel gleich oder verschieden sind,
- bei Schritt b) Verdichten des Gemischs in zwei Stufen, wobei bei der ersten Stufe das Gemisch vorverdichtet wird, um eine vorverdichtete Matte zu ergeben, und wobei bei der zweiten Stufe diese vorverdichtete Matte weiter verdichtet wird,
- während oder nach Verdichten bei Schritt b) Heißpressen des Gemischs,
- während oder nach Anlegen eines hochfrequenten elektrischen Felds bei Schritt c) Heißpressen des Gemischs
und
- bei Schritt c) des Anlegens eines hochfrequenten elektrischen Felds Überwachen und/oder Steuern der Temperatur in der Mitte des Gemischs;
und/oder
- wobei bei dem Schritt c) des Anlegens eines hochfrequenten elektrischen Felds die Temperatur in der Mitte des Gemischs:
(i) auf eine Höchsttemperatur in dem Bereich von 130 °C bis 200 °C, vorzugsweise in dem Bereich von 140 °C bis 180 °C, erhöht wird, wobei vorzugsweise die Höchsttemperatur innerhalb von weniger als 40 s · (d/mm) nach dem Beginn des Anlegens eines hochfrequenten elektrischen Felds erreicht wird, wobei d die Dicke des verdichteten Gemischs in mm am Ende von Schritt c) ist; und/oder
(ii) so gesteuert wird, dass das Bindemittel durch Veresterung härtet und die lignocellulosehaltigen Partikel bindet.

10. Lignocellulosehaltiger Verbundstoff, herstellbar nach einem Verfahren nach einem der Ansprüche 1 bis 9, oder Bauprodukt umfassend den lignocellulosehaltigen Verbundstoff,
wobei der lignocellulosehaltige Verbundstoff vorzugsweise eine lignocellulosehaltige Platte ist, ausgewählt aus der Gruppe bestehend aus
- Faserplatte mit hoher Dichte (HDF)
- Faserplatte mit mittlerer Dichte (MDF)
- Faserplatte mit niedriger Dichte (LDF)
- Holzfaserdämmplatte
- Grobspanplatte (OSB)
- Spanplatte, und
- Naturfaserplatte, vorzugsweise mit Fasern aus der Gruppe bestehend aus Sisal, Jute, Flachs, Kokos, Kenaf, Hanf, Banane und Gemischen davon,
wobei die lignocellulosehaltige Platte ist
- eine einschichtige lignocellulosehaltige Platte oder
- eine mehrschichtige lignocellulosehaltige Platte, vorzugsweise eine mehrschichtige lignocellulosehaltige Platte mit einem Kern und mit einer oberen Oberflächenschicht und einer unteren Oberflächenschicht, und/oder
wobei der lignocellulosehaltige Verbundstoff eine Platte mit einem Kern ist, wobei in einem Querschnitt, der senkrecht zu der Ebene der Platte ausgerichtet ist, der Unterschied zwischen dem Dichtemaximum der Platte und dem Dichteminimum in dem Kern der Platte höchstens 100 kg/m³ beträgt.

11. Lignocellulosehaltiger Verbundstoff nach Anspruch 10 oder Bauprodukt, das den lignocellulosehaltigen Verbundstoff umfasst, wobei der lignocellulosehaltige Verbundstoff aufweist
- eine Oberflächen-Schraubenhaltefähigkeit, gemessen nach IKEA-Spezifikation Nr. IOS-TM-0057, Datum: 2018-07-13, Fassung Nr.: AA-2120821-1, von wenigstens 250 N, vorzugsweise von wenigstens 300 N, bevorzugter von wenigstens 450 N,
und/oder
- eine Kanten-Schraubenhaltefähigkeit, gemessen nach IKEA-Spezifikation Nr. IOS-TM-0057, Datum: 2018-07-13, Fassung Nr.: AA-2120821-1, von wenigstens 600 N, vorzugsweise von wenigstens 800 N

12. Lignocellulosehaltiger Verbundstoff nach einem der Ansprüche 10 oder 11 oder Bauprodukt, das den lignocellulosehaltigen Verbundstoff umfasst, wobei der lignocellulosehaltige Verbundstoff eine lignocellulosehaltige Platte ist und wobei die lignocellulosehaltige Platte
- ausgewählt ist aus der Gruppe bestehend aus Spanplatte, Faserplatte mit hoher Dichte (HDF), Faserplatte mit mittlerer Dichte (MDF) und Grobspanplatte (OSB),
und/oder
- eine Dicke in dem Bereich von 3 bis 30 mm, vorzugsweise in dem Bereich von 5 bis 20 mm, aufweist, und/oder
- eine interne Bindungsfestigkeit, bestimmt nach DIN EN 319:1993-08, von wenigstens 0,1 N/mm2, vorzugsweise von wenigstens 0,2 N/mm2, bevorzugter von wenigstens 0,3 N/mm², aufweist,
und/oder
- ein Dickequellen nach 24 Stunden in Wasser bei 20 °C, bestimmt nach DIN EN 317:1993-08, von weniger als 60 %, vorzugsweise weniger als 50 %, bevorzugter weniger als 40 %, aufweist.

13. Bindemittel nach Anspruch 5 oder Bindemittelzusammensetzung umfassend ein Bindemittel nach Anspruch 5 und vorzugsweise ferner umfassend eine Trägerflüssigkeit, vorzugsweise Wasser.

14. Bindemittel oder Bindemittelzusammensetzung nach Anspruch 13,
- ferner umfassend eine, zwei oder mehr Verbindungen unabhängig ausgewählt aus der Gruppe bestehend aus:
- Alkalisalzen und Erdalkalisalzen, vorzugsweise Natriumnitrat,
- Hydrophobiermitteln, vorzugsweise Paraffin und Gemische, die Paraffin umfassen, bevorzugter Paraffinemulsionen,
- Farbstoffen, Pigmenten,
- antifungiellen Mitteln und antibakteriellen Mitteln,
- Rheologiemodifikatoren, Füllstoffen,
- Trennmitteln und
- grenzflächenaktiven Mitteln und Tensiden;
und/oder
- ferner umfassend ein oder mehrere Hydrophobiermittel ausgewählt aus der Gruppe bestehend aus Paraffin und Gemischen, die Paraffin umfassen, vorzugsweise Paraffinemulsionen, wie in Anspruch 6 definiert;
und/oder
- ferner umfassend ein oder mehrere Salze ausgewählt aus der Gruppe bestehend aus Alkalimetallsalzen und Erdalkalimetallsalzen, wie in Anspruch 6 definiert; und/oder
- wobei das Bindemittel und/oder die Bindemittelzusammensetzung einen pH-Wert in dem Bereich von 1,0 bis 3,2, vorzugsweise in dem Bereich von 2,0 bis 2,9, aufweist.

15. Verwendung eines lignocellulosehaltigen Verbundstoffs nach einem der Ansprüche 10 bis 12 als Bauelement in einem Bauprodukt, vorzugsweise als Bauelement in Möbeln oder Teilen von Möbeln, bevorzugter als Bauelement in einer Hohlkonstruktion in Möbeln oder Teilen von Möbeln.

## Revendications

1. Procédé de production d'un composite lignocellulosique multicouche comprenant une ou plusieurs couches composites lignocellulosiques ou un composite lignocellulosique monocouche, comprenant au moins les étapes suivantes :
a) fourniture ou préparation d'un mélange comprenant au moins
- des particules lignocellulosiques
et
- un liant comprenant en tant que composants pour le durcissement du liant par estérification au moins
▪ (c2) un, deux ou plus de deux polymères comprenant plusieurs groupes hydroxy
et, pour la réticulation desdits polymères,
▪ un, deux ou plus de deux composés polymères ou monomères ayant au moins deux groupes carboxyle ;
b) compactage du mélange ; et
c) application d'un champ électrique haute fréquence au mélange pendant et/ou après le compactage, de sorte que le liant durcisse par estérification desdits composants et lie les particules lignocellulosiques, de sorte qu'il en résulte un composite lignocellulosique monocouche ou une couche d'un composite lignocellulosique multicouche.

2. Procédé selon la revendication 1, dans lequel les un, deux ou plus de deux polymères comprenant plusieurs groupes hydroxy (c2) du liant sont choisis dans le groupe constitué par
- des glucides, de préférence un amidon, plus préférablement un amidon choisi dans le groupe constitué par un amidon non hydrolysé, un amidon modifié, une maltodextrine et des mélanges de ceux-ci
- un poly(alcool vinylique),
et
- des mélanges correspondants.

3. Procédé selon l'une quelconque des revendications précédentes, dans lequel les un, deux ou plus de deux composés polymères ou monomères ayant au moins deux groupes carboxyle du liant :
- comprennent un, deux ou plus de deux polyesters, de préférence biosourcés, ayant au moins deux groupes carboxyle,
dans lequel un, deux ou plus de deux desdits polyesters, de préférence biosourcés, sont de préférence préparés par mise en réaction de
- un ou plusieurs acides alpha-hydroxycarboxyliques, de préférence l'acide citrique,
et
- un, deux ou plus de deux composés choisis dans le groupe constitué par :
▪ des glucides, de préférence choisis dans le groupe constitué par les monosaccharides, les disaccharides, les oligosaccharides, les polysaccharides et un amidon, plus préférablement choisis dans le groupe constitué par le dextrose, le fructose, le saccharose, un amidon non hydrolysé, un amidon modifié et une maltodextrine,
▪ des alcools de sucre, de préférence choisis dans le groupe constitué par le mannitol, le sorbitol, le xylitol, le lactitol, l'isomalt, le maltitol, l'érythritol, des hydrolysats d'amidon hydrogénés et le glycérol, plus préférablement le glycérol,
▪ des composés choisis dans le groupe constitué par les triols, les tétrols, les pentols et les hexols, les composés n'étant pas des glucides et pas des alcools de sucre, plus préférablement des composés choisis dans le groupe constitué par la triéthanolamine et le triméthylolpropane,
dans lequel, de préférence, le composé ou au moins l'un des au moins deux composés est le glycérol ;
et/ou
- comprennent ou comprennent en outre
- un, deux ou plus de deux polymères choisis dans le groupe constitué par les polymères d'un ou plusieurs acides carboxyliques insaturés, de préférence l'acide acrylique, et des mélanges de ceux-ci, de préférence les copolymères d'acide acrylique et plus préférablement les copolymères d'acide acrylique et d'anhydride maléique ; et/ou
- un, deux ou plus de deux composés polymères ou monomères, de préférence un, deux ou plus de deux composés polymères ou monomères biosourcés, ayant au moins deux groupes carboxyle, choisis dans le groupe constitué par les acides alpha-hydroxycarboxyliques, de préférence choisis dans le groupe constitué par l'acide citrique, l'acide malique et l'acide tartrique, plus préférablement l'acide citrique, et de préférence des produits de réaction de ceux-ci, plus préférablement des polyesters de ceux-ci,
dans lequel, de préférence, la quantité totale desdits un, deux ou plus de deux composés polymères ou monomères, de préférence la quantité totale desdits un, deux ou plus de deux composés polymères ou monomères biosourcés, pour réticuler lesdits polymères, est supérieure à 5 % en poids, de préférence supérieure à 10 % en poids, plus préférablement supérieure à 20 % en poids et le plus préférablement supérieure à 30 % en poids, sur la base de la teneur en solides de tous les composants de liant présents pour le durcissement par estérification.

4. Procédé selon l'une quelconque des revendications précédentes, dans lequel le liant comprend :
- en tant que composant supplémentaire pour le durcissement du liant par estérification
- un ou plusieurs composés non polymériques, de préférence biosourcés non polymériques, ayant au moins un groupe carboxyle et au moins un groupe hydroxy, le composé non polymérique ou au moins l'un des composés non polymériques étant de préférence choisi dans le groupe constitué par les acides monohydroxymonocarboxyliques, plus préférablement dans le groupe constitué par les acides alpha-hydroxymonohydroxymonocarboxyliques, encore plus préférablement dans le groupe constitué par l'acide lactique, l'acide glycolique et l'acide mandélique, et le plus préférablement étant l'acide lactique,
et/ou
- des alcools de sucre, choisis de préférence dans le groupe constitué par le mannitol, le sorbitol, le xylitol, le lactitol, l'isomalt, le maltitol, l'érythritol et le glycérol, plus préférablement le glycérol.

5. Procédé selon l'une quelconque des revendications précédentes, dans lequel le liant :
- comprend en tant que composants pour le durcissement du liant par estérification au moins
- (c2) un, deux ou plus de deux polymères comprenant plusieurs groupes hydroxy, choisis dans le groupe constitué par :
▪ des glucides, choisis de préférence dans le groupe constitué par un amidon non hydrolysé, un amidon modifié, une maltodextrine et des mélanges de ceux-ci,
▪ un poly(alcool vinylique),
et
▪ des mélanges de ceux-ci,
et, pour la réticulation desdits polymères,
- un, deux ou plus de deux composés polymères ou monomères ayant au moins deux groupes carboxyle, choisis dans le groupe constitué par :
▪ un, deux ou plus de deux polymères choisis dans le groupe constitué par les polymères d'un ou plusieurs acides carboxyliques insaturés, de préférence l'acide acrylique, et des mélanges de ceux-ci, de préférence les copolymères d'acide acrylique et plus préférablement les copolymères d'acide acrylique et d'anhydride maléique ; et/ou
▪ un, deux ou plus de deux composés polymères ou monomères, de préférence un, deux ou plus de deux composés polymères ou monomères biosourcés, ayant au moins deux groupes carboxyle, choisis dans le groupe constitué par les acides alpha-hydroxycarboxyliques, de préférence choisis dans le groupe constitué par l'acide citrique, l'acide malique et l'acide tartrique, plus préférablement l'acide citrique,
et/ou
▪ un, deux ou plus de deux polyesters, de préférence biosourcés, ayant au moins deux groupes carboxyle, tels que définis dans la revendication 3 ;
et le liant en variante
- comprend en tant que composant supplémentaire pour le durcissement du liant par estérification :
- un ou plusieurs composés non polymériques, de préférence biosourcés non polymériques, ayant au moins un groupe carboxyle et au moins un groupe hydroxy, le composé non polymérique ou au moins l'un des composés non polymériques étant de préférence choisi dans le groupe constitué par les acides monohydroxymonocarboxyliques, plus préférablement dans le groupe constitué par les acides alpha-hydroxymonohydroxymonocarboxyliques, encore plus préférablement dans le groupe constitué par l'acide lactique, l'acide glycolique et l'acide mandélique, et le plus préférablement étant l'acide lactique,
et/ou
- des alcools de sucre, de préférence un ou plusieurs alcools de sucre, plus préférablement choisis dans le groupe constitué par le mannitol, le sorbitol, le xylitol, le lactitol, l'isomalt, le maltitol, l'érythritol et le glycérol, encore plus préférablement le glycérol.

6. Procédé selon l'une quelconque des revendications précédentes, dans lequel le liant :
- comprend de plus un, deux ou plus de deux composés choisis indépendamment dans le groupe constitué par :
- des sels alcalins et des sels alcalino-terreux, de préférence le nitrate de sodium,
- des agents hydrophobisants, de préférence une paraffine et des mélanges comprenant une paraffine, plus préférablement des émulsions de paraffine,
- des colorants, des pigments
- des agents antifongiques et des agents antibactériens
- des modificateurs de rhéologie, des charges,
- des agents de démoulage et
- des tensioactifs et des agents actifs en surface ; et/ou
- en tant que partie du mélange fourni ou préparé à l'étape a) du procédé comprend en tant que composant supplémentaire un ou plusieurs agents hydrophobisants choisis dans le groupe constitué par une paraffine et des mélanges comprenant une paraffine, préférablement des émulsions de paraffine,
dans lequel, de préférence
- le rapport massique du poids de paraffine sur le poids des particules lignocellulosiques à l'état sec au four est dans la plage de 0,2 % à 1,5 %,
et/ou
- le rapport massique du poids de paraffine sur le poids de tous les composants de liant présents pour le durcissement par estérification est dans la plage de 5 % à 30 %, de préférence dans la plage de 10 % à 25 %, plus préférablement dans la plage de 15 % à 25 % ;
et/ou
- un ou plusieurs sels choisis dans le groupe constitué par les sels de métaux alcalins et les sels de métaux alcalino-terreux, le sel ou au moins l'un des sels étant de préférence le nitrate de sodium,
de préférence en une quantité totale d'ions de métaux alcalins et d'ions de métaux alcalino-terreux, de préférence d'ions sodium, dans une plage de 25-250 mmol/g, de préférence dans une plage de 50-250 mmol/g, plus préférablement dans une plage de 75-250 mmol/g, sur la base de la quantité totale de la teneur en solides de tous les composants du liant présents pour le durcissement par estérification, plus la quantité totale de tous les sels de métaux alcalins et de métaux alcalino-terreux présents dans le liant.

7. Procédé selon l'une quelconque des revendications précédentes, dans lequel le liant préparé ou fourni à l'étape (a) du procédé a un pH dans la plage de 1,0 à 3,2, de préférence dans la plage de 2,0 à 2,9.

8. Procédé selon l'une quelconque des revendications précédentes, dans lequel le composite lignocellulosique est un panneau lignocellulosique choisi dans le groupe constitué par
- un panneau de fibres à haute densité (HDF)
- un panneau de fibres à moyenne densité (MDF)
- un panneau de fibres à basse densité (LDF)
- un panneau isolant en fibres de bois
- un panneau à brins orientés (OSB)
- un aggloméré, et
- un panneau en fibres naturelles, de préférence avec des fibres du groupe constitué par le sisal, le jute, le lin, la noix de coco, le kénaf, le chanvre, la banane et des mélanges de ceux-ci,
dans lequel le panneau lignocellulosique est
- un panneau lignocellulosique monocouche ou
- un panneau lignocellulosique multicouche,
de préférence, un panneau lignocellulosique multicouche ayant une couche centrale et ayant une couche superficielle supérieure et une couche superficielle inférieure ;
et/ou
- dans lequel le composite lignocellulosique est une planche ayant un noyau, dans lequel, dans une section transversale orientée perpendiculairement au plan du panneau, la différence entre la densité maximale du panneau et la densité minimale dans le noyau du panneau est d'au plus 100 kg/m³.

9. Procédé selon l'une quelconque des revendications précédentes, dans lequel
- le procédé de production d'un composite lignocellulosique comprend une, deux, trois, plus de trois ou la totalité des étapes suivantes
- à l'étape a) de préparation dudit mélange, mélange desdites particules lignocellulosiques avec un ou plusieurs ou tous les ingrédients du liant ou pulvérisation d'un ou de plusieurs ou tous les ingrédients du liant sur lesdites particules lignocellulosiques, lesdits ingrédients du liant, avant le mélange ou la pulvérisation, étant préalablement mélangés ou non préalablement mélangés,
- préparation, de préférence par diffusion, d'une couche du mélange fourni ou préparé à l'étape a), et à l'étape b) compactage de cette couche,
- pour la préparation d'un composite lignocellulosique multicouche, fourniture ou préparation d'au moins un premier et un deuxième mélange individuel, et utilisation desdits premier et deuxième mélanges individuels pour la fabrication d'une première et d'une deuxième couche du composite lignocellulosique multicouche, la première et la deuxième couche étant de préférence en contact l'une avec l'autre et/ou le premier et le deuxième mélange individuel ayant la même composition ou une composition différente,
- pour la préparation d'un composite lignocellulosique multicouche, préparation d'au moins deux couches, de préférence préparation d'au moins deux couches par diffusion de couches individuelles les unes sur les autres, chaque couche comprenant des particules lignocellulosiques et un liant, les particules lignocellulosiques et/ou les liants, dans les au moins deux couches, étant identiques ou différents,
- à l'étape b) compactage du mélange en deux stades, dans le premier stade le mélange étant précompacté pour donner un mat précompacté, et dans le deuxième stade ce mat précompacté étant davantage compacté,
- pendant ou après le compactage à l'étape b), pressage à chaud du mélange,
- pendant ou après l'application d'un champ électrique haute fréquence à l'étape c), pressage à chaud du mélange et
- à l'étape c) d'application d'un champ électrique haute fréquence, surveillance et/ou régulation de la température au centre dudit mélange ;
et/ou
- dans lequel, dans ladite étape c) d'application d'un champ électrique haute fréquence, la température au centre dudit mélange :
i) est augmentée jusqu'à une température maximale dans la plage de 130 °C à 200 °C, de préférence dans la plage de 140 °C et 180 °C, la température maximale étant de préférence atteinte en moins de 40 s ·(d/mm) après le début de l'application d'un champ électrique haute fréquence, d étant l'épaisseur du mélange compacté en mm à la fin de l'étape c) ;
et/ou
(ii) est régulée de sorte que ledit liant durcisse par estérification et lie les particules lignocellulosiques.

10. Composite lignocellulosique, pouvant être préparé selon un procédé tel que défini dans l'une quelconque des revendications 1 à 9, ou produit de construction comprenant un tel composite lignocellulosique,
dans lequel le composite lignocellulosique est de préférence un panneau lignocellulosique choisi dans le groupe constitué par
- un panneau de fibres à haute densité (HDF)
- un panneau de fibres à moyenne densité (MDF)
- un panneau de fibres à basse densité (LDF)
- un panneau isolant en fibres de bois
- un panneau à brins orientés (OSB)
- un aggloméré, et
- un panneau en fibres naturelles, de préférence avec des fibres du groupe constitué par le sisal, le jute, le lin, la noix de coco, le kénaf, le chanvre, la banane et des mélanges de ceux-ci,
dans lequel le panneau lignocellulosique est
- un panneau lignocellulosique monocouche ou
- un panneau lignocellulosique multicouche,
de préférence, un panneau lignocellulosique multicouche ayant un noyau et ayant une couche superficielle supérieure et une couche superficielle inférieure, et/ou
dans lequel le composite lignocellulosique est un panneau ayant un noyau, dans lequel, dans une section transversale orientée perpendiculairement au plan du panneau, la différence entre la densité maximale du panneau et la densité minimale dans le noyau du panneau est d'au plus 100 kg/m³.

11. Composite lignocellulosique selon la revendication 10, ou produit de construction comprenant un tel composite lignocellulosique, dans lequel le composite lignocellulosique a
- un support de vis de surface, mesuré selon la spécification IKEA n° IOS-TM-0057, date : 2018-07-13, version n° : AA-2120821-1, d'au moins 250 N, de préférence d'au moins 300 N, plus préférablement d'au moins 450 N,
et/ou
- un support de vis de bord, mesuré selon la spécification IKEA n° IOS-TM-0057, date : 2018-07-13, version n° : AA-2120821-1, d'au moins 600 N, de préférence d'au moins 800 N.

12. Composite lignocellulosique selon l'une quelconque des revendications 10 ou 11, ou produit de construction comprenant un tel composite lignocellulosique, dans lequel le composite lignocellulosique est un panneau lignocellulosique, et dans lequel ledit panneau lignocellulosique
- est choisi dans le groupe constitué par un aggloméré, un panneau de fibres à haute densité (HDF), un panneau de fibres à moyenne densité (MDF) et un panneau à brins orientés (OSB),
et/ou
- a une épaisseur dans la plage de 3 à 30 mm, de préférence dans la plage de 5 à 20 mm,
et/ou
- possède une force d'adhérence interne, déterminée selon la norme DIN EN 319:1993-08, d'au moins 0,1 N/mm2, de préférence d'au moins 0,2 N/mm2, plus préférablement d'au moins 0,3 N/mm²,
et/ou
- possède un gonflement de l'épaisseur après 24 heures dans l'eau à 20 °C, déterminé selon la norme DIN EN 317:1993-08, inférieur à 60 %, de préférence inférieur à 50 %, plus préférablement inférieur à 40 %.

13. Liant tel que défini dans la revendication 5 ou composition de liant comprenant un liant tel que défini dans la revendication 5 et comprenant de préférence en outre un liquide porteur, de préférence de l'eau.

14. Liant ou composition de liant selon la revendication 13,
- comprenant en outre un, deux ou plus de deux composés choisis indépendamment dans le groupe constitué par :
- des sels alcalins et des sels alcalino-terreux, de préférence le nitrate de sodium,
- des agents hydrophobisants, de préférence une paraffine et des mélanges comprenant une paraffine, plus préférablement des émulsions de paraffine,
- des colorants, des pigments
- des agents antifongiques et des agents antibactériens
- des modificateurs de rhéologie, des charges,
- des agents de démoulage et
- des tensioactifs et des agents actifs en surface ; et/ou
- comprenant en outre un ou plusieurs agents hydrophobisants choisis dans le groupe constitué par une paraffine et des mélanges comprenant une paraffine, de préférence des émulsions de paraffine, tel que défini dans la revendication 6 ;
et/ou
- comprenant en outre un ou plusieurs sels choisis dans le groupe constitué par les sels de métaux alcalins et les sels de métaux alcalino-terreux, tels que définis dans la revendication 6 ;
et/ou
- le liant et/ou la composition de liant ayant un pH dans la plage de 1,0 à 3,2, de préférence dans la plage de 2,0 à 2,9.

15. Utilisation d'un composite lignocellulosique tel que défini dans l'une quelconque des revendications 10 à 12, en tant qu'élément de construction dans un produit de construction, de préférence en tant qu'élément de construction dans des meubles ou des parties de meubles, plus préférablement en tant qu'élément de construction dans une construction creuse dans des meubles ou des parties de meubles.
